(19) Europäisches Patentamt
European Patent Office
Office européen des brevets

(11) EP 1 053 263 B1

(12) **EUROPÄISCHE PATENTSCHRIFT**

(45) Veröffentlichungstag und Bekanntmachung des Hinweises auf die Patenterteilung:
**01.10.2003 Patentblatt 2003/40**

(21) Anmeldenummer: **99907496.6**

(22) Anmeldetag: **05.02.1999**

(51) Int Cl.[7]: **C08F 10/00**, C08F 4/649

(86) Internationale Anmeldenummer:
**PCT/EP99/00725**

(87) Internationale Veröffentlichungsnummer:
**WO 99/040129 (12.08.1999 Gazette 1999/32)**

(54) **KATALYSATORSYSTEM**

CATALYST SYSTEM

SYSTEME DE CATALYSEUR

(84) Benannte Vertragsstaaten:
**BE DE ES FI FR GB IT NL**

(30) Priorität: **07.02.1998 DE 19804970**

(43) Veröffentlichungstag der Anmeldung:
**22.11.2000 Patentblatt 2000/47**

(73) Patentinhaber: **Basell Polyolefine GmbH
50389 Wesseling (DE)**

(72) Erfinder:
- **BOHNEN, Hans
D-47441 Moers (DE)**
- **FRITZE, Cornelia
D-60529 Frankfurt (DE)**

(74) Vertreter: **Seelert, Stefan, Dr. et al
Basell Polyolefine GmbH
Intellectual Property
Carl-Bosch-Strasse 38
F 206
67056 Ludwigshafen (DE)**

(56) Entgegenhaltungen:
**EP-A- 0 601 830**
**WO-A-92/01005**
**WO-A-93/13140**
**WO-A-97/14700**
**DE-A- 19 733 017**

EP 1 053 263 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung beschreibt ein Katalysatorsystem enthaltend Metallocen. Co-Katalysator, Trägermaterial und gegebenenfalls weitere Organometallverbindungen. Das Katalysatorsystem kann vorteilhaft zur Polymerisation von Olefinen eingesetzt werden, wobei auf die Verwendung von Aluminoxanen wie Methylaluminoxan (MAO), das üblicherweise in hohem Überschuß eingesetzt werden muß, als Cokatalysator verzichtet werden kann und dennoch eine hohe Katalysatoraktivität und gute Polymermorphologie erzielt wird.

Die Rolle von kationischen Komplexen bei der Ziegler-Natta-Polymerisation mit Metallocenen ist allgemein anerkannt (H.H. Brintzinger, D. Fischer, R. Mülhaupt, R. Rieger, R. Waymouth, Angew. Chem. 1995, 107, 1255-1283). Die Darstellung kationischer Alkylkomplexe eröffnet die Möglichkeit MAO-freie Katalysatoren mit vergleichbarer Aktivität, wobei der Co-Katalysator nahezu stöchiometrisch eingesetzt werden kann, zu erhalten.

Die Synthese von "Kationen-ähnlichen" Metallocen-Polymerisationskatalysatoren, wird im J. Am. Chem. Soc. 1991, Band 113, Seite 3623 beschrieben.

Ein Verfahren zur Herstellung von Sätzen der allgemeinen Form $LMX^+ XA^-$ nach dem oben beschriebenen Prinzip wird in EP-A-0,520,732 beansprucht.

EP-A-0,558,158 beschreibt zwitterionische Katalysatorsysteme, die aus Metallocendialkyl-Verbindungen und Salzen der Form $[R_3NH]^+ [B(C_6H_5)_4]^-$ dargestellt werden. Die Umsetzung eines solchen Salzes mit z.B. $Cp_2ZrMe_2$ liefert durch Protolyse unter Methanabspaltung intermediär ein Zirkonocenmethyl-Kation. Dieses reagiert über C-H-Aktivierung zum Zwitterion $Cp_2Zr^+$-(m-$C_6H_4$)-$BPh_3^-$ ab. Das Zr-Atom ist dabei kovalent an ein Kohlenstoffatom des Phenylrings gebunden und wird über agostische Wasserstoffbindungen stabilisiert.US-A-5,384,299 beschreibt zwitterionische Katalysatorsysteme, die aus Metallocendialkyl-Verbindungen und Salzen der Form $[R_3NH]^+ [B(C_6F_5)_4]^-$ durch Protolyse dargestellt werden. Die C-H-Aktivierung als Folgereaktion unterbleibt dabei.

EP-A-0,426,637 nutzt ein Verfahren in dem das Lewis-saure $CPh_3^+$ Kation zur Abstraktion der Methylgruppe vom Metallzentrum eingesetzt wird. Als schwach koordinierendes Anion fungiert ebenfalls $B(C_6F_5)_4^-$.

Eine industrielle Nutzung von Metallocen-Katalysatoren fordert eine Heterogenisierung des Katalysatorsystems, um eine entsprechende Morphologie des resultierenden Polymers zu gewährleisten. Die Trägerung von kationischen Metallocen-Katalysatoren auf Basis der oben genannten Borat-Anionen ist in WO-91/09882 beschrieben. Dabei wird das Katalysatorsystem, durch Aufbringen einer Dialkylmetallocen-Verbindung und einer Brönsted-sauren, quatären AmmoniumVerbindung, mit einem nichtkoordinierenden Anion wie Tetrakis-pentafluorphenylborat, auf einem anorganischen Träger, gebildet.
Das Trägermaterial wird zuvor mit einer Trialkylaluminium-Verbindung modifiziert. Nachteil dieses Trägerungsverfahren ist, daß nur ein geringer Teil des eingesetzten Metallocens Physisorbtion an dem Trägermaterial fixiert ist. Bei der Dosierung des Katalysatorsystems in den Reaktor kann das Metallocen leicht von der Trägeroberfläche abgelöst werden. Dies führt zu einer teilweisen homogen verlaufenden Polymerisation, was eine unbefriedigende Morphologie des Polymers zur Folge hat.

In WO-96/04319 wird ein Katalysatorsystem beschrieben, in welchem der Cokatalysator kovalent an das Trägermaterial gebunden ist. Dieses Katalysatorsystem weist jedoch eine geringe Polymerisationsaktivität auf, zudem kann die hohe Empfindlichkeit der geträgerten kationischen Metallocen-Katalysatoren zu Problemen bei der Einschleusung in das Polymerisationssystem führen.

Es war daher wünschenswert ein Katalysatorsystem zu entwickeln, das wahlweise vor dem Einschleusen in den Reaktor bereits aktiviert ist oder erst im Polymerisationsautoklav aktiviert wird.

Die Aufgabe bestand darin ein Katalysatorsystem zur Verfügung zu stellen, welches die Nachteile des Standes der Technik vermeidet und trotzdem hohe Polymersationsaktivitäten und eine gute Polymermorphologie garantiert. Zudem war ein Verfahren zur Herstellung dieses Katalysatorsystems zu entwickeln, das es ermöglicht die Aktivierung des Katalysatorsystems wahlweise vor dem Einschleusen oder aber erst im Polymerisationsautoklav durchzuführen.

Die vorliegende Erfindung betrifft ein geträgertes Katalysatorsystem sowie dessen Verwendung bei der Polymerisation von Olefinen.

Das erfindungsgemäße Katalysatorsystem enthält

a) mindestens ein Metallocen,
b) mindestens eine Lewis-Base der Formel I,

$$M^2R^3R^4R^5 \qquad (I)$$

worin
$R^3$, $R^4$ und $R^5$ gleich oder verschieden sind und für ein Wasserstoffatom, eine $C_1$-$C_{20}$-Alkyl-, $C_1$-$C_{20}$-Halogenalkyl-,

$C_6$-$C_{40}$-Aryl-, $C_6$-$C_{40}$-Halogenaryl-, $C_7$-$C_{40}$-Alkylaryl- oder $C_7$-$C_{40}$-Arylalkyl-Gruppe stehen, wobei gegebenenfalls zwei Reste oder alle drei Reste $R^3$, $R^4$ und $R^5$ über $C_2$-$C_{20}$-Kohlenstoffeinheiten miteinander verbunden sein können und

$M^2$ für ein Element der V. Hauptgruppe des Periodensystems der Elemente steht,

c) einen Träger,

d) mindestens eine Organoboraluminium-Verbindung, die aus Einheiten der Formel II

$$R_i^1M^3\text{-O-}M^3R_j^2 \qquad \text{(II)}$$

worin

$R^1$ und $R^2$ gleich oder verschieden sind und ein Wasserstoffatom, ein Halogenatom, eine $C_1$-$C_{40}$-kohlenstoffhaltige Gruppe, insbesondere $C_1$-$C_{20}$-Alkyl, $C_1$-$C_{20}$-Halogenalkyl, $C_1$-$C_{10}$-Alkoxy, $C_6$-$C_{20}$-Aryl, $C_6$-$C_{20}$-Halogenaryl, $C_6$-$C_{20}$-Aryloxy, $C_7$-$C_{40}$-Arylalkyl, $C_7$-$C_{40}$-Halogenarylalkyl, $C_7$-$C_{40}$-Alkylaryl, $C_7$-$C_{40}$-Halogenalkylaryl sind oder $R^1$ kann eine -$OSiR_3$-Gruppe sein, worin R gleich oder verschieden sind und die gleiche Bedeutung wie $R^1$ haben,

$M^3$ gleich oder verschieden ist und für ein Element der 3. Hauptgruppe des Periodensystems der Elemente steht und

i und j jeweils eine ganze Zahl 0, 1 oder 2 steht,

aufgebaut ist und die kovalent an den Träger gebunden ist, sowie gegebenenfalls

e) eine Organometallverbindung der Formel V

$$[M^4R_p^6]_k \qquad \text{(V)}$$

worin

$M^4$ ein Element der I., II. und III. Hauptgruppe des Periodensystems der Elemente ist,

$R^6$ gleich oder verschieden ist und ein Wasserstoffatom, ein Halogenatom, eine $C_1$-$C_{40}$-kohlenstoffhaltige Gruppe, insbesondere $C_1$-$C_{20}$- Alkyl-, $C_6$-$C_{40}$-Aryl-, $C_7$-$C_{40}$-Aryl-alkyl oder $C_7$-$C_{40}$-Alkyl-aryl-Gruppe bedeutet,

p eine ganze Zahl von 1 bis 3 und

k ist eine ganze Zahl von 1 bis 4 ist.

Bevorzugt handelt es sich bei den Lewis-Basen der Formel (I) um solche bei denen $M^2$ für Stickstoff oder Phosphor steht. Beispiele für derartige Verbindungen sind Triethylamin, Triisopropylamin, Triisobutylamin, Tri(n-butyl) amin, N,N-Dimethylanilin, N,N-Diethylanilin, N,N-2,4,6-Pentamethylanilin, Dicyclohexylamin, Pyridin, Pyrazin, Triphenylphosphin, Tri(methylphenyl)phosphin und Tri(dimethylphenyl)phosphin.

Der Träger ist vorzugsweise ein poröser anorganischer oder organischer Feststoff. Bevorzugt enthält der Träger mindestens ein anorganisches Oxid, wie Siliziumoxid, Aluminiumoxid, Alumosilicate, Zeolithe, MgO, $ZrO_2$, $TiO_2$, $B_2O_3$, CaO, ZnO, $ThO_2$, $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$ , $Na_2O$, $K_2O$, oder $Li_2O$, insbesondere Siliziumoxid und/oder Aluminiumoxid.

Der Träger kann auch mindestens ein Polymer enthalten, z.B. ein Homo- oder Copolymer, ein vernetztes Polymer oder Polymerblends. Beispiele für Polymere sind Polyethylen, Polypropylen, Polybuten, Polystyrol, mit Divinylbenzol vernetztes Polystyrol, Polyvinylchlorid, Acrylnitril-Butadien-Styrol-Copolymer, Polyamid, Polymethacrylat, Polycarbonat, Polyester, Polyacetal oder Polyvinylalkohol.

Der Träger weist vorzugsweise eine spezifische Oberfläche im Bereich von 10 bis 1000 $m^2/g$, bevorzugt von 150 bis 500 $m^2/g$ auf. Die mittlere Partikelgröße des Trägers beträgt vorzugsweise 1 bis 500 um, bevorzugt 5 bis 350 µm, besonders bevorzugt 10 bis 200 µm.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers ist abhängig von der Nachbehandlung und kann irregulär oder sphärisch sein. Die Teilchengröße des Trägers kann z. B. durch kryogene Mahlung und/oder Siebung beliebig eingestellt werden.

Das erfindungsgemäße Katalysatorsystem enthält als cokatalytisch wirkende chemische Verbindung eine Organoboraluminiumverbindung, die Einheiten der Formel (II) enthält und $M^3$ für Bor oder Aluminium steht.

Die Einheiten der Formel (II)enthaltende Verbindung kann als Monomer oder als lineares, cyclisches oder käfigartiges Oligomer vorliegen. Es können auch zwei oder mehr chemische Verbindungen, welche Einheiten der Formel (II) enthalten durch Lewis-Säure-Base Wechselwirkungen oder Kondensationsreaktionen untereinander Dimere, Trimere

oder höhere Assoziate bilden.

Bevorzugte cokatalytisch wirkende Organoboraluminium-Verbindungen gemäß d) entsprechen den Formeln (III) und (IV),

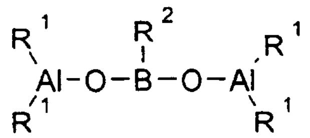

(III)

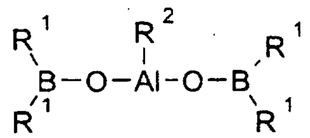

(IV)

worin $R^1$ und $R^2$ die gleiche Bedeutung wie unter Formel (II) haben.

Beispiele für die cokatalytisch wirkenden Verbindungen der Formeln (III) und (IV) sind

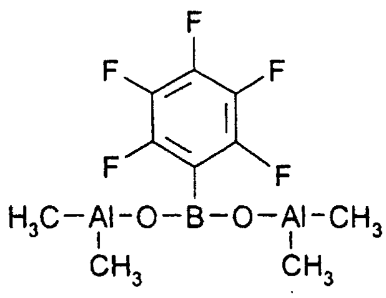

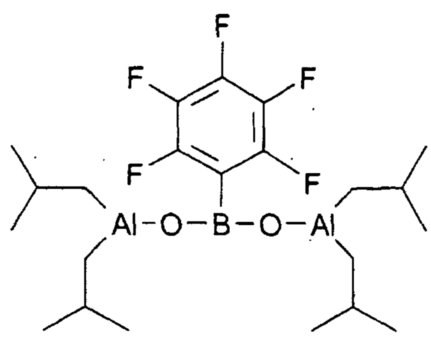

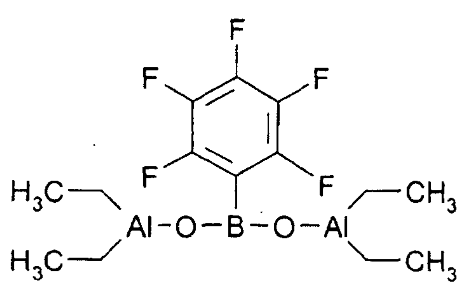

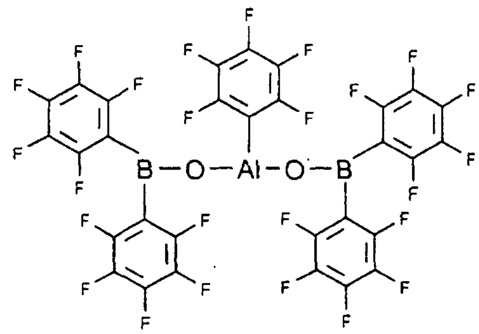

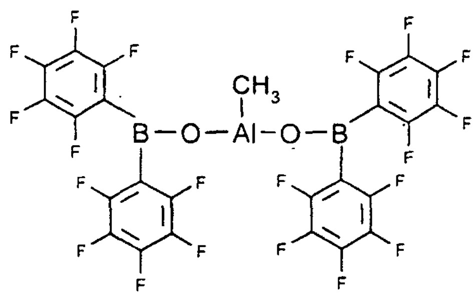

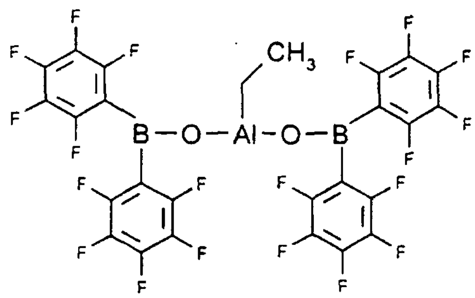

Bei den Organometallverbindungen der Formel (V) handelt es sich vorzugsweise um neutrale Lewissäuren worin $M^4$ für Lithium, Magnesium und/oder Aluminium, insbesondere Aluminium, steht. Beispiele für die bevorzugten Organometall-Verbindungen der Formel (V) sind Trimethylaluminium, Triethylaluminium, Tri-isopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesqui-chlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethylaluminium(triethylsiloxid), Phenylalan, Pentafluorphenylalan und o-Tolylalan

Die im erfindungsgemäßen Katalysatorsystem enthaltenen Metallocenverbindungen können z.B. verbrückte oder unverbrückte Biscyclopentadienylkomplexe sein, wie sie beispielsweise in EP-A-0,129,368, EP-A-0,561,479, EP-A-0,545,304 und EP-A-0,576,970 beschrieben sind, Monocyclopentadienylkomplexe, wie verbrückte Amidocyclopentadienylkomplexe die beispielsweise in EP-A-0,416,815 beschrieben sind, mehrkernige Cyclopentadienylkomplexe wie beispielsweise in EP-A-0,632,063 beschrieben, p-Ligand substituierte Tetrahydropentalene wie beispielsweise in EP-A-0,659,758 beschrieben oder p-Ligand substituierte Tetrahydroindene wie beispielsweise in EP-A-0,661,300 beschrieben.

Außerdem können Organometallverbindungen eingesetzt werden in denen der komplexierende Ligand kein Cyclopentadienyl-Liganden enthält. Beispiele hierfür sind Diamin-Komplexe der III. und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben werden. Außerdem können Diimin-Komplexe der VIII. Nebengruppe des Periodensystems der Elemente (z.B. $Ni^{2+}$ oder $Pd^{2+}$ Komplexe), wie sie *bei Brookhart et al, J. Am. Chem. Soc. 1995, 117, 6414* und , Brookhart et al, J. Am. Chem. Soc., 1996, 118, 267 beschrieben werden, eingesetzt werden. Ferner lassen sich 2,6-bis(imino)pyridyl-Komplexe der VIII. Nebengruppe des Periodensystems der Elemente (z.B. $Co^{2+}$ oder $Fe^{2+}$ Komplexe), wie sie bei Brookhart et al, J. Am. Chem. Soc. 1998, 120, 4049 und Gibson et al, Chem. Commun. 1998, 849 beschrieben werden, einsetzen. Weiterhin können Metallocenverbindungen eingesetzt werden,

deren komplexierender Ligand Heterocyclen enthält. Beispiele hierfür sind in WO 98/22486 beschrieben.

Bevorzugte Metallocenverbindungen sind unverbrückte oder verbrückte Verbindungen der Formel VI,

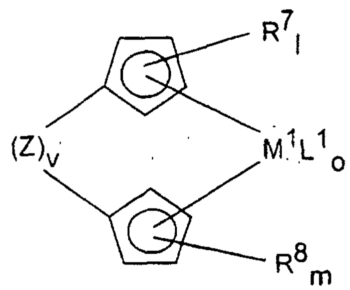

(VI)

worin

- $M^1$ ein Metall der III., IV., V. oder VI. Nebengruppe des Periodensystems der Elemente ist, insbesondere Ti, Zr oder Hf,
- $R^7$ gleich oder verschieden sind und ein Wasserstoffatom oder $SiR_3^{12}$ sind, worin $R^{12}$ gleich oder verschieden ein Wasserstoffatom oder eine $C_1$-$C_{40}$-kohlenstoffhaltige Gruppe wie $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, C7-C40-Arylalkyl, $C_7$-$C_{40}$-Alkylaryl oder $C_8$-$C_{40}$-Arylalkenyl sind, oder $R^7$ sind eine $C_1$-$C_{30}$ - kohlenstoffhaltige Gruppe wie $C_1$-$C_{25}$-Alkyl, z. B. Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_4$-$C_{24}$-Heteroaryl wie Pyridyl, Furyl oder Chinolyl, $C_7$-$C_{30}$-Arylalkyl, $C_5$-$C_{30}$-Heteroarylalkyl, $C_7$-$C_{30}$-Alkylaryl, $C_5$-$C_{30}$-Alkylheteroaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist, oder zwei oder mehrere Reste $R^7$ können so miteinander verbunden sein, daß die Reste $R^7$ und die sie verbindenden Atome des Cyclopentadienylringes ein kohlenstoffhaltiges oder ein kohlenstoff- und heteroatomhaltiges $C_4$-$C_{24}$-Ringsystem bilden, welches seinerseits substituiert sein kann,
- $R^8$ gleich oder verschieden sind und ein Wasserstoffatom oder $SiR_3^{12}$ sind, worin $R^{12}$ gleich oder verschieden ein Wasserstoffatom oder eine $C_1$-$C_{40}$-kohlenstoffhaltige Gruppe wie $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl sind, oder $R^8$ sind eine $C_1$-$C_{30}$ - kohlenstoffhaltige Gruppe wie $C_1$-$C_{25}$-Alkyl, z. B. Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, z. B. Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist, oder zwei oder mehrere Reste $R^8$ können so miteinander verbunden sein, daß die Reste $R^8$ und die sie verbindenden Atome des Cyclopentadienylringes ein kohlenstoffhaltiges oder ein kohlenstoff- und heteroatomhaltiges $C_4$-$C_{24}$-Ringsystem bilden, welches seinerseits substituiert sein kann,
- l gleich 5 für v = 0, und l gleich 4 für v = 1 ist,
- m gleich 5 für v = 0, und m gleich 4 für v = 1 ist,
- $L^1$ gleich oder verschieden sein können und ein Wasserstoffatom, eine $C_1$-$C_{10}$-Kohlenwasserstoffgruppe wie $C_1$-$C_{10}$-Alkyl oder $C_6$-$C_{10}$-Aryl, ein Halogenatom, oder $OR^9$, $SR^9$, $OSiR_3^9$, $SiR_3^9$, $PR_2^9$ oder $NR_2^9$ bedeuten, worin $R^9$ ein Halogenatom, eine $C_1$-$C_{10}$ Alkylgruppe, eine halogenierte $C_1$-$C_{10}$ Alkylgruppe, eine $C_6$-$C_{20}$ Arylgruppe oder eine halogenierte $C_6$-$C_{20}$ Arylgruppe sind, oder $L^1$ sind eine Toluolsulfonyl-, Trifluoracetyl-, Trifluoracetoxyl-, Trifluor-methansulfonyl-, Nonafluorbutansulfonyl- oder 2,2,2Trifluorethansulfonyl-Gruppe,
- o eine ganze Zahl von 1 bis 4, bevorzugt 2 ist,
- Z ein verbrückendes Strukturelement zwischen den beiden Cyclopentadienylringen bezeichnet und v ist 0 oder 1.

Beispiele für Z sind Gruppen $MR^{10}R^{11}$, worin M Kohlenstoff, Silizium, Germanium oder Zinn ist und $R^{10}$ und $R^{11}$ gleich oder verschieden eine $C_1$-$C_{20}$kohlenwasserstoffhaltige Gruppe wie $C_1$-$C_{10}$-Alkyl, $C_6$-$C_{14}$-Aryl oder Trimethylsilyl bedeuten. Bevorzugt ist Z gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Z kann auch mit einem oder mehreren Resten $R^7$ und/oder $R^8$ ein mono- oder polycyclisches Ringsystem bilden.

Bevorzugt sind chirale verbrückte Metallocenverbindungen der Formel (VI), insbesondere solche in denen v gleich 1 ist und einer oder beide Cyclopentadienylringe so substituiert sind, daß sie einen Indenylring, einen Schwefel,

Stickstoff oder Sauerstoff enthaltenden Indenyl-analogen Heterocyclus oder einen Schwefel, Stickstoff oder Sauerstoff enthaltenden Pentalen-analogen Heterocyclus darstellen.

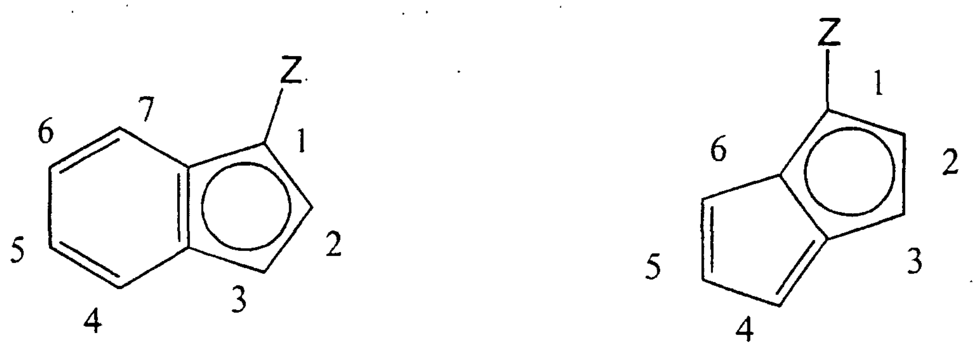

(VII)

Die genannten Ringe sind bevorzugt substituiert, insbesondere (gemäß der Nomenklatur in Formel (VII)) in 2-, 4-, 2,4-, 2,4,5-, 2,4,6-, 2,4,7 oder 2,4,5,6-Stellung, mit $C_1$-$C_{20}$-kohlenstoffhaltigen Gruppen, wie $C_1$-$C_{10}$-Alkyl oder $C_6$-$C_{20}$-Aryl, wobei auch zwei oder mehrere Substituenten der genannten Ringe zusammen ein Ringsystem bilden können.

Chirale verbrückte Metallocenverbindungen der Formel (VI) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:

Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4--acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl )zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl-4,5-(tetramethylbenzo)-indenyl)zirkoniumdichlorid
Methyl(phenyl)silandiylbis(2-methyl-4-acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid

1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-($\eta^5$-Cyclopentadienyl)-4,6,6-trimethyl-($\eta^5$-4,5-tetrahydropentalen)]-dichlorozirconium
[4-($\eta^5$-3'-Trimethylsilyl-cyclopentadienyl)-4,6,6-trimethyl-($\eta^5$-4,5-tetrahydropentalen)]-dichlorozirconium
[4-($\eta^5$-3'-Isopropyl-cyclopentadienyl)-4,6,6-trimethyl-($\eta^5$-4,5-tetrahydropentalen)]-dichlorozirconium
[4-($\eta^5$-Cyclopentadienyl)-4,7,7-trimethyl-($\eta^5$-4,5,6,7-tetrahydroindenyl)]-dichlorotitan
[4-($\eta^5$-Cyclopentadienyl)-4,7,7-trimethyl-($\eta^5$-4,5,6,7-tetrahydroindenyl)]-dichlorozirkonium
[4-($\eta^5$-Cyclopentadienyl)-4,7,7-trimethyl-($\eta^5$-4,5,6,7-tetrahydroindenyl)]-dichlorohafnium
[4-($\eta^5$-3=-tert.Butyl-cyclopentadienyl)-4,7,7-trimethyl-($\eta^5$-4,5,6,7-tetrahydroindenyl)]-dichlorotitan
4-($\eta^5$-3=-Isopropylcyclopentadienyl)-4,7,7-trimethyl-($\eta^5$-4,5,6,7-tetrahydroindenyl)]-dichlorotitan
4-($\eta^5$-3=-Methylcyclopentadienyl)-4,7,7-trimethyl-($\eta^5$-4,5,6,7-tetrahydroindenyl)]-dichlorotitan
4-($\eta^5$-3=-Trimethylsilyl-cyclopentadienyl)-2-trimethylsilyl-4,7,7-trimethyl-($\eta^5$-4,5,6,7-tetrahydroindenyl)]-dichloro-titan
4-($\eta^5$-3=-tert.Butyl-cyclopentadienyl)-4,7,7-trimethyl-($\eta^5$-4,5,6,7-tetrahydroindenyl)]-dichlorozirkonium
(Tertbutylamido)-(tetramethyl-$\eta^5$-cyclopentadienyl)-dimethylsilyl-dichlorotitan
(Tertbutylamido)-(tetramethyl-$\eta^5$-cyclopentadienyl)-1,2-ethandiyl-dichlorotitandichlorotitan
(Methylamido)-(tetramethyl-$\eta^5$-cyclopentadienyl)-dimethylsilyl-dichlorotitan
(Methylamido)-(tetramethyl-$\eta^5$-cyclopentadienyl)-1,2-ethandiyl-dichlorotitan
(Tertbutylamido)-(2,4-dimethyl-2,4-pentadien-1-yl)-dimethylsilyl-dichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis($\eta^5$-1H-inden-1-yliden)methylsilyl]-3-$\eta^5$-cyclopenta-2,4-dien-1-yliden)-3-$\eta^5$-9H-fluoren-9-yliden)butan]di-zirkonium
Tetrachloro-[2-[bis($\eta^5$-2-methyl-1H-inden-1-yliden)methoxysilyl]-5-($\eta^5$-2,3,4,5-tetramethylcyclopenta-2,4-dien-1-yliden)-5-($\eta^5$-9H-fluoren-9-yliden)hexan]dizirkonium
Tetrachloro-[1-[bis($\eta^5$-1H-inden-1-yliden)methylsilyl]-6-($\eta^5$-cyclopenta-2,4-dien-1-yliden)-6-($\eta^5$-9H-fluoren-9-yliden)-3-oxaheptan]di-zirkonium
Dimethylsilandiylbis(2-methyl-4-(4'-tert-butyl-phenyl-indenyl)zirkoniumdichlorid
Dimethylsilandiylbis(2-methyl-4-(4'-methyl-phenyl-indenyl)zirkoniumdichlorid
Dimethylsilandiylbis(2-methyl-4-(4'-ethyl-phenyl-indenyl)zirkoniumdichlorid
Dimethylsilandiylbis(2-methyl-4-(4'-trifluormethyl-phenyl-indenyl)zirkoniumdichlorid
Dimethylsilandiylbis(2-methyl-4-(4'-methoxy-phenyl-indenyl)zirkoniumdichlorid
Dimethylsilandiylbis(2-ethyl-4-(4'-tert-butyl-phenyl-indenyl)zirkoniumdichlorid
Dimethylsilandiylbis(2-ethyl-4-(4'-methyl-phenyl-indenyl)zirkoniumdichlorid
Dimethylsilandiylbis(2-ethyl-4-(4'-ethyl-phenyl-indenyl)zirkoniumdichlorid
Dimethylsilandiylbis(2-ethyl-4-(4'-trifluormethyl-phenyl-indenyl)zirkoniumdichlorid
Dimethylsilandiylbis(2-ethyl-4-(4'-methoxy-phenyl-indenyl)zirkoniumdichlorid
Dimethylsilandiylbis(2-methyl-4-(4'-tert-butyl-phenyl-indenyl)zirkoniumdimethyl
Dimethylsilandiylbis(2-methyl-4-(4'-methyl-phenyl-indenyl)zirkoniumdimethyl
Dimethylsilandiylbis(2-methyl-4-(4'-ethyl-phenyl-indenyl)zirkoniumdimethyl
Dimethylsilandiylbis(2-methyl-4-(4'-trifluormethyl-phenyl-indenyl)zirkoniumdimethyl
Dimethylsilandiylbis(2-methyl-4-(4'-methoxy-phenyl-indenyl)zirkoniumdimethyl
Dimethylsilandiylbis(2-ethyl-4-(4'-tert-butyl-phenyl-indenyl)zirkoniumdimethyl
Dimethylsilandiylbis(2-ethyl-4-(4'-methyl-phenyl-indenyl)zirkoniumdimethyl
Dimethylsilandiylbis(2-ethyl-4-(4'-ethyl-phenyl-indenyl)zirkoniumdimethyl
Dimethylsilandiylbis(2-ethyl-4-(4'-trifluormethyl-phenyl-indenyl)zirkoniumdimethyl
Dimethylsilandiylbis(2-ethyl-4-(4'-methoxy-phenyl-indenyl)zirkoniumdimethyl
Dimethylsilandiylbis(2-methyl-4-(4'-trimethylsilyl-phenyl-indenyl)zirkoniumdichlorid
Dimethylsilandiylbis(2-methyl-4-(4'-trimethylsilyl-phenyl-indenyl)zirkoniumdimethyl
Dimethylsilandiylbis(2-ethyl-4-(4'-trimethylsilyl-phenyl-indenyl)zirkoniumdichlorid
Dimethylsilandiylbis(2-ethyl-4-(4'-trimethylsilyl-phenyl-indenyl)zirkoniumdimethyl

Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl)titandichlorid
Dimethylsilandiylbis(2-methyl-4-(4'-methyl-phenyl)-indenyl)zirkoniumdichlorid
Dimethylsilandiylbis(2-methyl-4-(4'-n-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl

Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4--phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid
Dimethylsilandiyl(2-methyl-4-azapentalen)(2-methyl-4-(4'-methylphenyl-indenyl) zirkoniumdichlorid
Dimethylsilandiyl(2-methyl-5-azapentalen)(2-methyl-4-(4'-methylphenyl-indenyl) zirkoniumdichlorid
Dimethylsilandiyl(2-methyl-6-azapentalen)(2-methyl-4-(4'-methylphenyl-indenyl) zirkoniumdichlorid
Dimethylsilandiyl(2-methyl-N-phenyl-4-azapentalen)(2-methyl-4-(4'-methylphenylindenyl) zirkoniumdichlorid
Dimethylsilandiyl(2-methyl-N-phenyl-5-azapentalen)(2-methyl-4-(4'-methylphenylindenyl) zirkoniumdichlorid
Dimethylsilandiyl(2-methyl-N-phenyl-6-azapentalen)(2-methyl-4-(4'-methylphenylindenyl) zirkoniumdichlorid
Dimethylsilandiyl(2,5-dimethyl-4-azapentalen)(2-methyl-4-(4'-methylphenyl-indenyl) zirkoniumdichlorid
Dimethylsilandiyl(2,5-dimethyl-6-azapentalen)(2-methyl-4-(4'-methylphenyl-indenyl) zirkoniumdichlorid
Dimethylsilandiyl(2,5-dimethyl-N-phenyl-4-azapentalen)(2-methyl-4-(4'methylphenyl-indenyl) zirkoniumdichlorid
Dimethylsilandiyl(2,5-dimethyl-N-phenyl-6-azapentalen)(2-methyl-4-(4'methylphenyl-indenyl) zirkoniumdichlorid
Dimethylsilandiyl(2-methyl-4-thiapentalen)(2-methyl-4-(4'-methylphenylindenyl)zirkoniumdichlorid
Dimethylsilandiyl(2-methyl-5-thiapentalen)(2-methyl-4-(4'-methylphenylindenyl)zirkoniumdichlorid
Dimethylsilandiyl(2-methyl-6-thiapentalen)(2-methyl-4-(4'-methylphenylindenyl)zirkoniumdichlorid
Dimethylsilandiyl(2,5-dimethyl-4-thiapentalen)(2-methyl-4-(4'-methylphenyl-indenyl) zirkoniumdichlorid
Dimethylsilandiyl(2,5-dimethyl-6-thiapentalen)(2-methyl-4-(4'-methylphenyl-indenyl) zirkoniumdichlorid
Dimethylsilandiyl(2-methyl-4-oxapentalen)(2-methyl-4-(4'-methylphenylindenyl)zirkoniumdichlorid
Dimethylsilandiyl(2-methyl-5-oxapentalen)(2-methyl-4-(4'-methylphenylindenyl)zirkoniumdichlorid
Dimethylsilandiyl(2-methyl-6-oxapentalen)(2-methyl-4-(4'-methylphenylindenyl)zirkoniumdichlorid
Dimethylsilandiyl(2,5-dimethyl-4-oxapentalen)(2-methyl-4-(4'-methylphenyl-indenyl) zirkoniumdichlorid
Dimethylsilandiyl(2,5-dimethyl-6-oxapentalen)(2-methyl-4-(4'-methylphenyl-indenyl) zirkoniumdichlorid
Dimethylsilandiyl(2-methyl-4-azapentalen)(2-methyl-4-(4'-ethylphenyl-indenyl) zirkoniumdichlorid
Dimethylsilandiyl(2-methyl-5-azapentalen)(2-methyl-4-(4'-ethylphenyl-indenyl) zirkoniumdichlorid
Dimethylsilandiyl(2-methyl-6-azapentalen)(2-methyl-4-(4'-ethylphenyl-indenyl) zirkoniumdichlorid
Dimethylsilandiyl(2-methyl-N-phenyl-4-azapentalen)(2-methyl-4-(4'-ethylphenylindenyl) zirkoniumdichlorid
Dimethylsilandiyl(2-methyl-N-phenyl-5-azapentalen)(2-methyl-4-(4'-ethylphenylindenyl) zirkoniumdichlorid
Dimethylsilandiyl(2-methyl-N-phenyl-6-azapentalen)(2-methyl-4-(4'-ethylphenylindenyl) zirkoniumdichlorid
Dimethylsilandiyl(2,5-dimethyl-4-azapentalen)(2-methyl-4-(4'-ethylphenyl-indenyl) zirkoniumdichlorid
Dimethylsilandiyl(2,5-dimethyl-6-azapentalen)(2-methyl-4-(4'-ethylphenyl-indenyl) zirkoniumdichlorid
Dimethylsilandiyl(2,5-dimethyl-N-phenyl-4-azapentalen)(2-methyl-4-(4'-ethylphenylindenyl) zirkoniumdichlorid
Dimethylsilandiyl(2,5-dimethyl-N-phenyl-6-azapentalen)(2-methyl-4-(4'-ethylphenylindenyl) zirkoniumdichlorid
Dimethylsilandiyl(2-methyl-4-thiapentalen)(2-methyl-4-(4'-ethylphenylindenyl)zirkoniumdichlorid
Dimethylsilandiyl(2-methyl-5-thiapentalen)(2-methyl-4-(4'-ethylphenylindenyl)zirkoniumdichlorid
Dimethylsilandiyl(2-methyl-6-thiapentalen)(2-methyl-4-(4'-ethylphenylindenyl)zirkoniumdichlorid
Dimethylsilandiyl(2,5-dimethyl-4-thiapentalen)(2-methyl-4-(4'-ethylphenyl-indenyl) zirkoniumdichlorid
Dimethylsilandiyl(2,5-dimethyl-6-thiapentalen)(2-methyl-4-(4'-ethylphenyl-indenyl) zirkoniumdichlorid
Dimethylsilandiyl(2-methyl-4-oxapentalen)(2-methyl-4-(4'-ethylphenylindenyl)zirkoniumdichlorid
Dimethylsilandiyl(2-methyl-5-oxapentalen)(2-methyl-4-(4'-ethylphenylindenyl)zirkoniumdichlorid
Dimethylsilandiyl(2-methyl-6-oxapentalen)(2-methyl-4-(4'-ethylphenylindenyl)zirkoniumdichlorid
Dimethylsilandiyl(2,5-dimethyl-4-oxapentalen)(2-methyl-4-(4'-ethylphenyl-indenyl) zirkoniumdichlorid
Dimethylsilandiyl(2,5-dimethyl-6-oxapentalen)(2-methyl-4-(4'-ethylphenyl-indenyl) zirkoniumdichlorid
Dimethylsilandiyl(2-methyl-4-azapentalen)(2-methyl-4-(4'-n-propylphenyl-indenyl) zirkoniumdichlorid
Dimethylsilandiyl(2-methyl-5-azapentalen)(2-methyl-4-(4'-n-propylphenyl-indenyl) zirkoniumdichlorid
Dimethylsilandiyl(2-methyl-6-azapentalen)(2-methyl-4-(4'-n-propylphenyl-indenyl) zirkoniumdichlorid
Dimethylsilandiyl(2-methyl-N-phenyl-4-azapentalen)(2-methyl-4-(4'-n-propylphenylindenyl) zirkoniumdichlorid
Dimethylsilandiyl(2-methyl-N-phenyl-5-azapentalen)(2-methyl-4-(4'-n-propylphenylindenyl) zirkoniumdichlorid

Dimethylsilandiyl(2-methyl-N-phenyl-6-azapentalen)(2-methyl-4-(4'-n-propylphenylindenyl) zirkoniumdichlorid
Dimethylsilandiyl(2,5-dimethyl-4-azapentalen)(2-methyl-4-(4'-n-propylphenylindenyl) zirkoniumdichlorid
Dimethylsilandiyl(2,5-dimethyl-6-azapentalen)(2-methyl-4-(4'-n-propylphenylindenyl) zirkoniumdichlorid
Dimethylsilandiyl(2,5-dimethyl-N-phenyl-4-azapentalen)(2-methyl-4-(4'-npropylphenyl-indenyl) zirkoniumdichlorid
Dimethylsilandiyl(2,5-dimethyl-N-phenyl-6-azapentalen)(2-methyl-4-(4'-npropylphenyl-indenyl) zirkoniumdichlorid
Dimethylsilandiyl(2-methyl-4-thiapentalen)(2-methyl-4-(4'-n-propylphenylindenyl)zirkoniumdichlorid
Dimethylsilandiyl(2-methyl-5-thiapentalen)(2-methyl-4-(4'-n-propylphenylindenyl)zirkoniumdichlorid
Dimethylsilandiyl(2-methyl-6-thiapentalen)(2-methyl-4-(4'-n-propylphenylindenyl)zirkoniumdichlorid
Dimethylsilandiyl(2,5-dimethyl-4-thiapentalen)(2-methyl-4-(4'-n-propylphenylindenyl) zirkoniumdichlorid
Dimethylsilandiyl(2,5-dimethyl-6-thiapentalen)(2-methyl-4-(4'-n-propylphenylindenyl) zirkoniumdichlorid
Dimethylsilandiyl(2-methyl-4-oxapentalen)(2-methyl-4-(4'-n-propylphenylindenyl)zirkoniumdichlorid
Dimethylsilandiyl(2-methyl-5-oxapentalen)(2-methyl-4-(4'-n-propylphenylindenyl)zirkoniumdichlorid
Dimethylsilandiyl(2-methyl-6-oxapentalen)(2-methyl-4-(4'-n-propylphenylindenyl)zirkoniumdichlorid
Dimethylsilandiyl(2,5-dimethyl-4-oxapentalen)(2-methyl-4-(4'-n-propylphenylindenyl) zirkoniumdichlorid
Dimethylsilandiyl(2,5-dimethyl-6-oxapentalen)(2-methyl-4-(4'-n-propylphenylindenyl) zirkoniumdichlorid
Dimethylsilandiyl(2-methyl-4-azapentalen)(2-methyl-4-(4'-isopropylphenyl-indenyl) zirkoniumdichlorid
Dimethylsilandiyl(2-methyl-5-azapentalen)(2-methyl-4-(4'-isopropylphenyl-indenyl) zirkoniumdichlorid
Dimethylsilandiyl(2-methyl-6-azapentalen)(2-methyl-4-(4'-isopropylphenyl-indenyl) zirkoniumdichlorid
Dimethylsilandiyl(2-methyl-N-phenyl-4-azapentalen)(2-methyl-4-(4'-isopropylphenylindenyl) zirkoniumdichlorid
Dimethylsilandiyl(2-methyl-N-phenyl-5-azapentalen)(2-methyl-4-(4'-isopropylphenylindenyl) zirkoniumdichlorid
Dimethylsilandiyl(2-methyl-N-phenyl-6-azapentalen)(2-methyl-4-(4'-isopropylphenylindenyl) zirkoniumdichlorid
Dimethylsilandiyl(2,5-dimethyl-4-azapentalen)(2-methyl-4-(4'-isopropylphenylindenyl) zirkoniumdichlorid
Dimethylsilandiyl(2,5-dimethyl-6-azapentalen)(2-methyl-4-(4'-isopropylphenylindenyl) zirkoniumdichlorid
Dimethylsilandiyl(2,5-dimethyl-N-phenyl-4-azapentalen)(2-methyl-4-(4'isopropylphenyl-indenyl) zirkoniumdichlorid
Dimethylsilandiyl(2,5-dimethyl-N-phenyl-6-azapentalen)(2-methyl-4-(4'isopropylphenyl-indenyl) zirkoniumdichlorid
Dimethylsilandiyl(2-methyl-4-thiapentalen)(2-methyl-4-(4'-isopropylphenylindenyl)zirkoniumdichlorid
Dimethylsilandiyl(2-methyl-5-thiapentalen)(2-methyl-4-(4'-isopropylphenylindenyl)zirkoniumdichlorid
Dimethylsilandiyl(2-methyl-6-thiapentalen)(2-methyl-4-(4'-isopropylphenylindenyl)zirkoniumdichlorid
Dimethylsilandiyl(2,5-dimethyl-4-thiapentalen)(2-methyl-4-(4'-isopropylphenylindenyl) zirkoniumdichlorid
Dimethylsilandiyl(2,5-dimethyl-6-thiapentalen)(2-methyl-4-(4'-isopropylphenylindenyl) zirkoniumdichlorid
Dimethylsilandiyl(2-methyl-4-oxapentalen)(2-methyl-4-(4'-isopropylphenylindenyl)zirkoniumdichlorid
Dimethylsilandiyl(2-methyl-5-oxapentalen)(2-methyl-4-(4'-isopropylphenylindenyl)zirkoniumdichlorid
Dimethylsilandiyl(2-methyl-6-oxapentalen)(2-methyl-4-(4'-isopropylphenylindenyl)zirkoniumdichlorid
Dimethylsilandiyl(2,5-dimethyl-4-oxapentalen)(2-methyl-4-(4'-isopropylphenylindenyl) zirkoniumdichlorid
Dimethylsilandiyl(2,5-dimethyl-6-oxapentalen)(2-methyl-4-(4'-isopropylphenylindenyl) zirkoniumdichlorid
Dimethylsilandiyl(2-methyl-4-azapentalen)(2-methyl-4-(4'-n-butylphenyl-indenyl) zirkoniumdichlorid
Dimethylsilandiyl(2-methyl-5-azapentalen)(2-methyl-4-(4'-n-butylphenyl-indenyl) zirkoniumdichlorid
Dimethylsilandiyl(2-methyl-6-azapentalen)(2-methyl-4-(4'-n-butylphenyl-indenyl) zirkoniumdichlorid
Dimethylsilandiyl(2-methyl-N-phenyl-4-azapentalen)(2-methyl-4-(4'-n-butylphenylindenyl) zirkoniumdichlorid
Dimethylsilandiyl(2-methyl-N-phenyl-5-azapentalen)(2-methyl-4-(4'-n-butylphenylindenyl) zirkoniumdichlorid
Dimethylsilandiyl(2-methyl-N-phenyl-6-azapentalen)(2-methyl-4-(4'-n-butylphenylindenyl) zirkoniumdichlorid
Dimethylsilandiyl(2,5-dimethyl-4-azapentalen)(2-methyl-4-(4'-n-butylphenyl-indenyl) zirkoniumdichlorid
Dimethylsilandiyl(2,5-dimethyl-6-azapentalen)(2-methyl-4-(4'-n-butylphenyl-indenyl) zirkoniumdichlorid
Dimethylsilandiyl(2,5-dimethyl-N-phenyl-4-azapentalen)(2-methyl-4-(4'-nbutylphenyl-indenyl) zirkoniumdichlorid
Dimethylsilandiyl(2,5-dimethyl-N-phenyl-6-azapentalen)(2-methyl-4-(4'-nbutylphenyl-indenyl) zirkoniumdichlorid
Dimethylsilandiyl(2-methyl-4-thiapentalen)(2-methyl-4-(4'-n-butylphenylindenyl)zirkoniumdichlorid
Dimethylsilandiyl(2-methyl-5-thiapentalen)(2-methyl-4-(4'-n-butylphenylindenyl)zirkoniumdichlorid
Dimethylsilandiyl(2-methyl-6-thiapentalen)(2-methyl-4-(4'-n-butylphenylindenyl)zirkoniumdichlorid
Dimethylsilandiyl(2,5-dimethyl-4-thiapentalen)(2-methyl-4-(4'-n-butylphenyl-indenyl) zirkoniumdichlorid
Dimethylsilandiyl(2,5-dimethyl-6-thiapentalen)(2-methyl-4-(4'-n-butylphenyl-indenyl) zirkoniumdichlorid
Dimethylsilandiyl(2-methyl-4-oxapentalen)(2-methyl-4-(4'-n-butylphenylindenyl)zirkoniumdichlorid
Dimethylsilandiyl(2-methyl-5-oxapentalen)(2-methyl-4-(4'-n-butylphenylindenyl)zirkoniumdichlorid
Dimethylsilandiyl(2-methyl-6-oxapentalen)(2-methyl-4-(4'-n-butylphenylindenyl)zirkoniumdichlorid
Dimethylsilandiyl(2,5-dimethyl-4-oxapentalen)(2-methyl-4-(4'-n-butylphenyl-indenyl) zirkoniumdichlorid

Dimethylsilandiyl(2,5-dimethyl-6-oxapentalen)(2-methyl-4-(4'-n-butylphenyl-indenyl) zirkoniumdichlorid
Dimethylsilandiyl(2-methyl-4-azapentalen)(2-methyl-4-(4'-s-butylphenyl-indenyl) zirkoniumdichlorid
Dimethylsilandiyl(2-methyl-5-azapentalen)(2-methyl-4-(4'-s-butylphenyl-indenyl) zirkoniumdichlorid
Dimethylsilandiyl(2-methyl-6-azapentalen)(2-methyl-4-(4'-s-butylphenyl-indenyl) zirkoniumdichlorid
Dimethylsilandiyl(2-methyl-N-phenyl-4-azapentalen)(2-methyl-4-(4'-s-butylphenylindenyl) zirkoniumdichlorid
Dimethylsilandiyl(2-methyl-N-phenyl-5-azapentalen)(2-methyl-4-(4'-s-butylphenylindenyl) zirkoniumdichlorid
Dimethylsilandiyl(2-methyl-N-phenyl-6-azapentalen)(2-methyl-4-(4'-s-butylphenylindenyl) zirkoniumdichlorid
Dimethylsilandiyl(2,5-dimethyl-4-azapentalen)(2-methyl-4-(4'-s-butylphenyl-indenyl) zirkoniumdichlorid
Dimethylsilandiyl(2,5-dimethyl-6-azapentalen)(2-methyl-4-(4'-s-butylphenyl-indenyl) zirkoniumdichlorid
Dimethylsilandiyl(2,5-dimethyl-N-phenyl-4-azapentalen)(2-methyl-4-(4'-sbutylphenyl-indenyl) zirkoniumdichlorid
Dimethylsilandiyl(2,5-dimethyl-N-phenyl-6-azapentalen)(2-methyl-4-(4'-sbutylphenyl-indenyl) zirkoniumdichlorid
Dimethylsilandiyl(2-methyl-4-thiapentalen)(2-methyl-4-(4'-s-butylphenylindenyl)zirkoniumdichlorid
Dimethylsilandiyl(2-methyl-5-thiapentalen)(2-methyl-4-(4'-s-butylphenylindenyl)zirkoniumdichlorid
Dimethylsilandiyl(2-methyl-6-thiapentalen)(2-methyl-4-(4'-s-butylphenylindenyl)zirkoniumdichlorid
Dimethylsilandiyl(2,5-dimethyl-4-thiapentalen)(2-methyl-4-(4'-s-butylphenyl-indenyl) zirkoniumdichlorid
Dimethylsilandiyl(2,5-dimethyl-6-thiapentalen)(2-methyl-4-(4'-s-butylphenyl-indenyl) zirkoniumdichlorid
Dimethylsilandiyl(2-methyl-4-oxapentalen)(2-methyl-4-(4'-s-butylphenylindenyl)zirkoniumdichlorid
Dimethylsilandiyl(2-methyl-5-oxapentalen)(2-methyl-4-(4'-s-butylphenylindenyl)zirkoniumdichlorid
Dimethylsilandiyl(2-methyl-6-oxapentalen)(2-methyl-4-(4'-s-butylphenylindenyl)zirkoniumdichlorid
Dimethylsilandiyl(2,5-dimethyl-4-oxapentalen)(2-methyl-4-(4'-s-butylphenyl-indenyl) zirkoniumdichlorid
Dimethylsilandiyl(2,5-dimethyl-6-oxapentalen)(2-methyl-4-(4'-s-butylphenyl-indenyl) zirkoniumdichlorid
Dimethylsilandiyl(2-methyl-4-azapentalen)(2-methyl-4-(4'-tert-butylphenyl-indenyl) zirkoniumdichlorid
Dimethylsilandiyl(2-methyl-5-azapentalen)(2-methyl-4-(4'-tert-butylphenyl-indenyl) zirkoniumdichlorid
Dimethylsilandiyl(2-methyl-6-azapentalen)(2-methyl-4-(4'-tert-butylphenyl-indenyl) zirkoniumdichlorid
Dimethylsilandiyl(2-methyl-N-phenyl-4-azapentalen)(2-methyl-4-(4'-tert-butylphenylindenyl) zirkoniumdichlorid
Dimethylsilandiyl(2-methyl-N-phenyl-5-azapentalen)(2-methyl-4-(4'-tert-butylphenylindenyl) zirkoniumdichlorid
Dimethylsilandiyl(2-methyl-N-phenyl-6-azapentalen)(2-methyl-4-(4'-tert-butylphenylindenyl) zirkoniumdichlorid
Dimethylsilandiyl(2,5-dimethyl-4-azapentalen)(2-methyl-4-(4'-tert-butylphenylindenyl) zirkoniumdichlorid
Dimethylsilandiyl(2,5-dimethyl-6-azapentalen)(2-methyl-4-(4'-tert-butylphenylindenyl) zirkoniumdichlorid
Dimethylsilandiyl(2,5-dimethyl-N-phenyl-4-azapentalen)(2-methyl-4-(4'-tertbutylphenyl-indenyl) zirkoniumdichlorid
Dimethylsilandiyl(2,5-dimethyl-N-phenyl-6-azapentalen)(2-methyl-4-(4'-tertbutylphenyl-indenyl) zirkoniumdichlorid
Dimethylsilandiyl(2-methyl-4-thiapentalen)(2-methyl-4-(4'-tert-butylphenylindenyl)zirkoniumdichlorid
Dimethylsilandiyl(2-methyl-5-thiapentalen)(2-methyl-4-(4'-tert-butylphenylindenyl)zirkoniumdichlorid
Dimethylsilandiyl(2-methyl-6-thiapentalen)(2-methyl-4-(4'-tert-butylphenylindenyl)zirkoniumdichlorid
Dimethylsilandiyl(2,5-dimethyl-4-thiapentalen)(2-methyl-4-(4'-tert-butylphenylindenyl) zirkoniumdichlorid
Dimethylsilandiyl(2,5-dimethyl-6-thiapentalen)(2-methyl-4-(4'-tert-butylphenylindenyl) zirkoniumdichlorid
Dimethylsilandiyl(2-methyl-4-oxapentalen)(2-methyl-4-(4'-tert-butylphenylindenyl)zirkoniumdichlorid
Dimethylsilandiyl(2-methyl-5-oxapentalen)(2-methyl-4-(4'-tert-butylphenylindenyl)zirkoniumdichlorid
Dimethylsilandiyl(2-methyl-6-oxapentalen)(2-methyl-4-(4'-tert-butylphenylindenyl)zirkoniumdichlorid
Dimethylsilandiyl(2,5-dimethyl-4-oxapentalen)(2-methyl-4-(4'-tert-butylphenylindenyl) zirkoniumdichlorid
Dimethylsilandiyl(2,5-dimethyl-6-oxapentalen)(2-methyl-4-(4'-tert-butylphenylindenyl) zirkoniumdichlorid
Dimethylsilandiyl(2-methyl-4-azapentalen)(2-methyl-4-(4'-n-pentylphenyl-indenyl) zirkoniumdichlorid
Dimethylsilandiyl(2-methyl-5-azapentalen)(2-methyl-4-(4'-n-pentylphenyl-indenyl) zirkoniumdichlorid
Dimethylsilandiyl(2-methyl-6-azapentalen)(2-methyl-4-(4'-n-pentylphenyl-indenyl) zirkoniumdichlorid
Dimethylsilandiyl(2-methyl-N-phenyl-4-azapentalen )(2-methyl-4-(4'-n-pentylphenylindenyl) zirkoniumdichlorid
Dimethylsilandiyl(2-methyl-N-phenyl-5-azapentalen)(2-methyl-4-(4'-n-pentylphenylindenyl) zirkoniumdichlorid
Dimethylsilandiyl(2-methyl-N-phenyl-6-azapentalen)(2-methyl-4-(4'-n-pentylphenylindenyl) zirkoniumdichlorid
Dimethylsilandiyl(2,5-dimethyl-4-azapentalen)(2-methyl-4-(4'-n-pentylphenyl-indenyl) zirkoniumdichlorid
Dimethylsilandiyl(2,5-dimethyl-6-azapentalen)(2-methyl-4-(4'-n-pentylphenyl-indenyl) zirkoniumdichlorid
Dimethylsilandiyl(2,5-dimethyl-N-phenyl-4-azapentalen)(2-methyl-4-(4'-npentylphenyl-indenyl) zirkoniumdichlorid
Dimethylsilandiyl(2,5-dimethyl-N-phenyl-6-azapentalen)(2-methyl-4-(4'-npentylphenyl-indenyl) zirkoniumdichlorid
Dimethylsilandiyl(2-methyl-4-thiapentalen)(2-methyl-4-(4'-n-pentylphenylindenyl)zirkoniumdichlorid
Dimethylsilandiyl(2-methyl-5-thiapentalen)(2-methyl-4-(4'-n-pentylphenylindenyl)zirkoniumdichlorid
Dimethylsilandiyl(2-methyl-6-thiapentalen)(2-methyl-4-(4'-n-pentylphenylindenyl)zirkoniumdichlorid

Dimethylsilandiyl(2,5-dimethyl-4-thiapentalen)(2-methyl-4-(4'-n-pentylphenyl-indenyl) zirkoniumdichlorid
Dimethylsilandiyl(2,5-dimethyl-6-thiapentalen)(2-methyl-4-(4'-n-pentylphenyl-indenyl) zirkoniumdichlorid
Dimethylsilandiyl(2-methyl-4-oxapentalen)(2-methyl-4-(4'-n-pentylphenylindenyl)zirkoniumdichlorid
Dimethylsilandiyl(2-methyl-5-oxapentalen)(2-methyl-4-(4'-n-pentylphenylindenyl)zirkoniumdichlorid
Dimethylsilandiyl(2-methyl-6-oxapentalen)(2-methyl-4-(4'-n-pentylphenylindenyl)zirkoniumdichlorid
Dimethylsilandiyl(2,5-dimethyl-4-oxapentalen)(2-methyl-4-(4'-n-pentylphenyl-indenyl) zirkoniumdichlorid
Dimethylsilandiyl(2,5-dimethyl-6-oxapentalen)(2-methyl-4-(4'-n-pentylphenyl-indenyl) zirkoniumdichlorid
Dimethylsilandiyl(2-methyl-4-azapentalen)(2-methyl-4-(4'-n-hexylphenyl-indenyl) zirkoniumdichlorid
Dimethylsilandiyl(2-methyl-5-azapentalen)(2-methyl-4-(4'-n-hexylphenyl-indenyl) zirkoniumdichlorid
Dimethylsilandiyl(2-methyl-6-azapentalen)(2-methyl-4-(4'-n-hexylphenyl-indenyl) zirkoniumdichlorid
Dimethylsilandiyl(2-methyl-N-phenyl-4-azapentalen)(2-methyl-4-(4'-n-hexylphenylindenyl) zirkoniumdichlorid
Dimethylsilandiyl(2-methyl-N-phenyl-5-azapentalen)(2-methyl-4-(4'-n-hexylphenylindenyl) zirkoniumdichlorid
Dimethylsilandiyl(2-methyl-N-phenyl-6-azapentalen)(2-methyl-4-(4'-n-hexylphenylindenyl) zirkoniumdichlorid
Dimethylsilandiyl(2,5-dimethyl-4-azapentalen)(2-methyl-4-(4'-n-hexylphenyl-indenyl) zirkoniumdichlorid
Dimethylsilandiyl(2,5-dimethyl-6-azapentalen)(2-methyl-4-(4'-n-hexylphenyl-indenyl) zirkoniumdichlorid
Dimethylsilandiyl(2,5-dimethyl-N-phenyl-4-azapentalen)(2-methyl-4-(4'-nhexylphenyl-indenyl) zirkoniumdichlorid
Dimethylsilandiyl(2,5-dimethyl-N-phenyl-6-azapentalen)(2-methyl-4-(4'-nhexylphenyl-indenyl) zirkoniumdichlorid
Dimethylsilandiyl(2-methyl-4-thiapentalen)(2-methyl-4-(4'-n-hexylphenylindenyl)zirkoniumdichlorid
Dimethylsilandiyl(2-methyl-5-thiapentalen)(2-methyl-4-(4'-n-hexylphenylindenyl)zirkoniumdichlorid
Dimethylsilandiyl(2-methyl-6-thiapentalen )(2-methyl-4-(4'-n-hexylphenylindenyl)zirkoniumdichlorid
Dimethylsilandiyl(2,5-dimethyl-4-thiapentalen)(2-methyl-4-(4'-n-hexylphenyl-indenyl) zirkoniumdichlorid
Dimethylsilandiyl(2,5-dimethyl-6-thiapentalen)(2-methyl-4-(4'-n-hexylphenyl-indenyl) zirkoniumdichlorid
Dimethylsilandiyl(2-methyl-4-oxapentalen)(2-methyl-4-(4'-n-hexylphenylindenyl)zirkoniumdichlorid
Dimethylsilandiyl(2-methyl-5-oxapentalen)(2-methyl-4-(4'-n-hexylphenylindenyl)zirkoniumdichlorid
Dimethylsilandiyl(2-methyl-6-oxapentalen)(2-methyl-4-(4'-n-hexylphenylindenyl)zirkoniumdichlorid
Dimethylsilandiyl(2,5-dimethyl-4-oxapentalen)(2-methyl-4-(4'-n-hexylphenyl-indenyl) zirkoniumdichlorid
Dimethylsilandiyl(2,5-dimethyl-6-oxapentalen)(2-methyl-4-(4'-n-hexylphenyl-indenyl) zirkoniumdichlorid
Dimethylsilandiyl(2-methyl-4-azapentalen)(2-methyl-4-(4'-cyclohexylphenyl-indenyl) zirkoniumdichlorid
Dimethylsilandiyl(2-methyl-5-azapentalen)(2-methyl-4-(4'-cyclohexylphenyl-indenyl) zirkoniumdichlorid
Dimethylsilandiyl(2-methyl-6-azapentalen)(2-methyl-4-(4'-cyclohexylphenyl-indenyl) zirkoniumdichlorid
Dimethylsilandiyl(2-methyl-N-phenyl-4-azapentalen)(2-methyl-4-(4'cyclohexylphenyl-indenyl) zirkoniumdichlorid
Dimethylsilandiyl(2-methyl-N-phenyl-5-azapentalen)(2-methyl-4-(4'cyclohexylphenyl-indenyl) zirkoniumdichlorid
Dimethylsilandiyl(2-methyl-N-phenyl-6-azapentalen)(2-methyl-4-(4'cyclohexylphenyl-indenyl) zirkoniumdichlorid
Dimethylsilandiyl(2,5-dimethyl-4-azapentalen)(2-methyl-4-(4'-cyclohexylphenylindenyl) zirkoniumdichlorid
Dimethylsilandiyl(2,5-dimethyl-6-azapentalen)(2-methyl-4-(4'-cyclohexylphenylindenyl) zirkoniumdichlorid
Dimethylsilandiyl(2,5-dimethyl-N-phenyl-4-azapentalen)(2-methyl-4-(4'cyclohexylphenyl-indenyl) zirkoniumdichlorid
Dimethylsilandiyl(2,5-dimethyl-N-phenyl-6-azapentalen)(2-methyl-4-(4'cyclohexylphenyl-indenyl) zirkoniumdichlorid
Dimethylsilandiyl(2-methyl-4-thiapentalen)(2-methyl-4-(4'-cyclohexylphenylindenyl)zirkoniumdichlorid
Dimethylsilandiyl(2-methyl-5-thiapentalen)(2-methyl-4-(4'-cyclohexylphenylindenyl)zirkoniumdichlorid
Dimethylsilandiyl(2-methyl-6-thiapentalen)(2-methyl-4-(4'-cyclohexylphenylindenyl)zirkoniumdichlorid
Dimethylsilandiyl(2,5-dimethyl-4-thiapentalen)(2-methyl-4-(4'-cyclohexylphenylindenyl) zirkoniumdichlorid
Dimethylsilandiyl(2,5-dimethyl-6-thiapentalen)(2-methyl-4-(4'-cyclohexylphenylindenyl) zirkoniumdichlorid
Dimethylsilandiyl(2-methyl-4-oxapentalen)(2-methyl-4-(4'-cyclohexylphenylindenyl)zirkoniumdichlorid
Dimethylsilandiyl(2-methyl-5-oxapentalen)(2-methyl-4-(4'-cyclohexylphenylindenyl)zirkoniumdichlorid
Dimethylsilandiyl(2-methyl-6-oxapentalen)(2-methyl-4-(4'-cyclohexylphenylindenyl)zirkoniumdichlorid
Dimethylsilandiyl(2,5-dimethyl-4-oxapentalen)(2-methyl-4-(4'-cyclohexylphenylindenyl) zirkoniumdichlorid
Dimethylsilandiyl(2,5-dimethyl-6-oxapentalen)(2-methyl-4-(4'-cyclohexylphenylindenyl) zirkoniumdichlorid
Dimethylsilandiyl(2-methyl-4-azapentalen)(2-methyl-4-(4'-trimethylsilylphenylindenyl) zirkoniumdichlorid
Dimethylsilandiyl(2-methyl-5-azapentalen )(2-methyl-4-(4'-trimethylsilylphenylindenyl) zirkoniumdichlorid
Dimethylsilandiyl(2-methyl-6-azapentalen)(2-methyl-4-(4'-trimethylsilylphenylindenyl) zirkoniumdichlorid
Dimethylsilandiyl(2-methyl-N-phenyl-4-azapentalen)(2-methyl-4-(4'trimethylsilylphenyl-indenyl) zirkoniumdichlorid
Dimethylsilandiyl(2-methyl-N-phenyl-5-azapentalen)(2-methyl-4-(4'trimethylsilylphenyl-indenyl) zirkoniumdichlorid
Dimethylsilandiyl(2-methyl-N-phenyl-6-azapentalen)(2-methyl-4-(4'trimethylsilylphenyl-indenyl) zirkoniumdichlorid

Dimethylsilandiyl(2,5-dimethyl-4-azapentalen)(2-methyl-4-(4'-trimethylsilylphenylindenyl) zirkoniumdichlorid
Dimethylsilandiyl(2,5-dimethyl-6-azapentalen)(2-methyl-4-(4'-trimethylsilylphenylindenyl) zirkoniumdichlorid
Dimethylsilandiyl(2,5-dimethyl-N-phenyl-4-azapentalen)(2-methyl-4-(4'trimethylsilylphenyl-indenyl) zirkoniumdichlorid
Dimethylsilandiyl(2,5-dimethyl-N-phenyl-6-azapentalen)(2-methyl-4-(4'trimethylsilylphenyl-indenyl) zirkoniumdichlorid
Dimethylsilandiyl(2-methyl-4-thiapentalen)(2-methyl-4-(4'-trimethylsilylphenylindenyl)zirkoniumdichlorid
Dimethylsilandiyl(2-methyl-5-thiapentalen)(2-methyl-4-(4'-trimethylsilylphenylindenyl)zirkoniumdichlorid
Dimethylsilandiyl(2-methyl-6-thiapentalen)(2-methyl-4-(4'-trimethylsilylphenylindenyl)zirkoniumdichlorid
Dimethylsilandiyl(2,5-dimethyl-4-thiapentalen)(2-methyl-4-(4'-trimethylsilylphenylindenyl) zirkoniumdichlorid
Dimethylsilandiyl(2,5-dimethyl-6-thiapentalen)(2-methyl-4-(4'-trimethylsilylphenylindenyl) zirkoniumdichlorid
Dimethylsilandiyl(2-methyl-4-oxapentalen)(2-methyl-4-(4'-trimethylsilylphenylindenyl)zirkoniumdichlorid
Dimethylsilandiyl(2-methyl-5-oxapentalen)(2-methyl-4-(4'-trimethylsilylphenylindenyl)zirkoniumdichlorid
Dimethylsilandiyl(2-methyl-6-oxapentalen)(2-methyl-4-(4'-trimethylsilylphenylindenyl)zirkoniumdichlorid
Dimethylsilandiyl(2,5-dimethyl-4-oxapentalen)(2-methyl-4-(4'-trimethylsilylphenylindenyl) zirkoniumdichlorid
Dimethylsilandiyl(2,5-dimethyl-6-oxapentalen)(2-methyl-4-(4'-trimethylsilylphenylindenyl) zirkoniumdichlorid
Dimethylsilandiyl(2-methyl-4-azapentalen)(2-methyl-4-(4'-adamantylphenyl-indenyl) zirkoniumdichlorid
Dimethylsilandiyl(2-methyl-5-azapentalen)(2-methyl-4-(4'-adamantylphenyl-indenyl) zirkoniumdichlorid
Dimethylsilandiyl(2-methyl-6-azapentalen)(2-methyl-4-(4'-adamantylphenyl-indenyl) zirkoniumdichlorid
Dimethylsilandiyl(2-methyl-N-phenyl-4-azapentalen)(2-methyl-4-(4'adamantylphenyl-indenyl) zirkoniumdichlorid
Dimethylsilandiyl(2-methyl-N-phenyl-5-azapentalen)(2-methyl-4-(4'adamantylphenyl-indenyl) zirkoniumdichlorid
Dimethylsilandiyl(2-methyl-N-phenyl-6-azapentalen)(2-methyl-4-(4'adamantylphenyl-indenyl) zirkoniumdichlorid
Dimethylsilandiyl(2,5-dimethyl-4-azapentalen)(2-methyl-4-(4'-adamantylphenylindenyl) zirkoniumdichlorid
Dimethylsilandiyl(2,5-dimethyl-6-azapentalen)(2-methyl-4-(4'-adamantylphenylindenyl) zirkoniumdichlorid
Dimethylsilandiyl(2,5-dimethyl-4-azapentalen)(2-methyl-4-(4'-adamantylphenylindenyl) zirkoniumdichlorid
Dimethylsilandiyl(2,5-dimethyl-N-phenyl-4-azapentalen)(2-methyl-4-(4'adamantylphenyl-indenyl) zirkoniumdichlorid
Dimethylsilandiyl(2,5-dimethyl-N-phenyl-6-azapentalen)(2-methyl-4-(4'adamantylphenyl-indenyl) zirkoniumdichlorid
Dimethylsilandiyl(2-methyl-4-thiapentalen)(2-methyl-4-(4'-adamantylphenylindenyl)zirkoniumdichlorid
Dimethylsilandiyl(2-methyl-5-thiapentalen)(2-methyl-4-(4'-adamantylphenylindenyl)zirkoniumdichlorid
Dimethylsilandiyl(2-methyl-6-thiapentalen)(2-methyl-4-(4'-adamantylphenylindenyl)zirkoniumdichlorid
Dimethylsilandiyl(2,5-dimethyl-4-thiapentalen)(2-methyl-4-(4'-adamantylphenylindenyl) zirkoniumdichlorid
Dimethylsilandiyl(2,5-dimethyl-6-thiapentalen)(2-methyl-4-(4'-adamantylphenylindenyl) zirkoniumdichlorid
Dimethylsilandiyl(2-methyl-4-oxapentalen)(2-methyl-4-(4'-adamantylphenylindenyl)zirkoniumdichlorid
Dimethylsilandiyl(2-methyl-5-oxapentalen)(2-methyl-4-(4'-adamantylphenylindenyl)zirkoniumdichlorid
Dimethylsilandiyl(2-methyl-6-oxapentalen)(2-methyl-4-(4'-adamantylphenylindenyl)zirkoniumdichlorid
Dimethylsilandiyl(2,5-dimethyl-4-oxapentalen)(2-methyl-4-(4'-adamantylphenylindenyl) zirkoniumdichlorid
Dimethylsilandiyl(2,5-dimethyl-6-oxapentalen)(2-methyl-4-(4'-adamantylphenylindenyl) zirkoniumdichlorid
Dimethylsilandiyl(2-methyl-4-azapentalen)(2-methyl-4-(4'tris(trifluormethyl)methylphenyl-indenyl) zirkoniumdichlorid
Dimethylsilandiyl(2-methyl-5-azapentalen)(2-methyl-4-(4'tris(trifluormethyl)methylphenyl-indenyl) zirkoniumdichlorid
Dimethylsilandiyl(2-methyl-6-azapentalen)(2-methyl-4-(4'tris(trifluormethyl)methylphenyl-indenyl) zirkoniumdichlorid
Dimethylsilandiyl(2-methyl-N-phenyl-4-azapentalen)(2-methyl-4-(4'tris(trifluormethyl)methylphenyl-indenyl) zirkoniumdichlorid
Dimethylsilandiyl(2-methyl-N-phenyl-5-azapentalen)(2-methyl-4-(4'tris(trifluormethyl)methylphenyl-indenyl) zirkoniumdichlorid
Dimethylsilandiyl(2-methyl-N-phenyl-6-azapentalen)(2-methyl-4-(4'tris(trifluormethyl)methylphenyl-indenyl) zirkoniumdichlorid
Dimethylsilandiyl(2,5-dimethyl-4-azapentalen)(2-methyl-4-(4'tris(trifluormethyl)methylphenyl-indenyl) zirkoniumdichlorid
Dimethylsilandiyl(2,5-dimethyl-6-azapentalen)(2-methyl-4-(4'tris(trifluormethyl)methylphenyl-indenyl) zirkoniumdichlorid
Dimethylsilandiyl(2,5-dimethyl-N-phenyl-4-azapentalen)(2-methyl-4-(4'tris(trifluormethyl)methylphenyl-indenyl) zirkoniumdichlorid
Dimethylsilandiyl(2,5-dimethyl-N-phenyl-6-azapentalen)(2-methyl-4-(4'tris(trifluormethyl)methylphenyl-indenyl)

zirkoniumdichlorid
Dimethylsilandiyl(2-methyl-4-thiapentalen)(2-methyl-4-(4'tris(trifluormethyl)methylphenyl-indenyl)zirkoniumdichlorid
Dimethylsilandiyl(2-methyl-5-thiapentalen)(2-methyl-4-(4'tris(trifluormethyl)methylphenyl-indenyl)zirkoniumdichlorid
Dimethylsilandiyl(2-methyl-6-thiapentalen)(2-methyl-4-(4'tris(trifluormethyl)methylphenyl-indenyl)zirkoniumdichlorid
Dimethylsilandiyl(2,5-dimethyl-4-thiapentalen)(2-methyl-4-(4'tris(trifluormethyl)methylphenyl-indenyl) zirkoniumdichlorid
Dimethylsilandiyl(2,5-dimethyl-6-thiapentalen)(2-methyl-4-(4'tris(trifluormethyl)methylphenyl-indenyl) zirkoniumdichlorid
Dimethylsilandiyl(2-methyl-4-oxapentalen)(2-methyl-4-(4'tris(trifluormethyl)methylphenyl-indenyl)zirkoniumdichlorid
Dimethylsilandiyl(2-methyl-5-oxapentalen)(2-methyl-4-(4'tris(trifluormethyl)methylphenyl-indenyl)zirkoniumdichlorid
Dimethylsilandiyl(2-methyl-6-oxapentalen)(2-methyl-4-(4'tris(trifluormethyl)methylphenyl-indenyl)zirkoniumdichlorid
Dimethylsilandiyl(2,5-dimethyl-4-oxapentalen)(2-methyl-4-(4'tris(trifluormethyl)methylphenyl-indenyl) zirkoniumdichlorid
Dimethylsilandiyl(2,5-dimethyl-6-oxapentalen)(2-methyl-4-(4'tris(trifluormethyl)methylphenyl-indenyl) zirkoniumdichlorid
Dimethylsilandiyl(2-methyl-4-azapentalen)(2-ethyl-4-(4'-tert-butylphenyl-indenyl) zirkoniumdichlorid
Dimethylsilandiyl(2-methyl-5,6-di-hydro-4-azapentalen)(2-ethyl-4-(4'-tertbutylphenyl-indenyl) zirkoniumdichlorid
Dimethylsilandiyl(2-methyl-4-azapentalen)(2-ethyl-4-(4'-tert-butylphenyltetrahydroindenyl) zirkoniumdichlorid
Dimethylsilandiyl(2-methyl-5-azapentalen)(2-n-butyl-4-(4'-tert-butylphenyl-indenyl) zirkoniumdichlorid
Ethyliden(2-methyl-6-azapentalen)(2-methyl-4-(4'-tert-butylphenyl-indenyl) zirkoniumdichlorid
Dimethylsilandiyl(2-methyl-N-trimethylsilyl-4-azapentalen)(2-methyl-4-(4'-tertbutylphenyl-indenyl) zirkoniumdichlorid
Dimethylsilandiyl(2-methyl-N-tolyl-5-azapentalen)(2-n-propyl-4-(4'-tert-butylphenylindenyl) zirkoniumdichlorid
Dimethylgermyldiyl(2-methyl-N-phenyl-6-azapentalen)(2-methyl-4-(4'-tertbutylphenyl-indenyl) zirkoniumdichlorid
Methylethyliden(2,5-dimethyl-4-azapentalen)(2-methyl-4-(4'-tert-butylphenyl-indenyl) zirkoniumdichlorid
Dimethylsilandiyl(2,5-di-iso-propyl-6-azapentalen)(2-methyl-4-(4'-tert-butylphenylindenyl) zirkoniumdichlorid
Dimethylsilandiyl(2,5-dimethyl-N-phenyl-4-azapentalen)(2,6-dimethyl-4-(4'-tertbutylphenyl-indenyl) zirkoniumdichlorid
Dimethylsilandiyl(2,5-dimethyl-N-phenyl-6-azapentalen)(2-methyl-4-(6'-tertbutylnaphthyl-indenyl) zirkoniumdichlorid
Dimethylsilandiyl(2,5-dimethyl-N-phenyl-6-azapentalen)(2-methyl-4-(6'-tertbutylanthracenyl-indenyl) zirkoniumdichlorid
Dimethylsilandiyl(2-methyl-4-phosphapentalen)(2-methyl-4-(4'-tert-butylphenylindenyl)zirkoniumdichlorid
Diphenylsilandiyl(2-methyl-5-thiapentalen)(2-methyl-4-(4'-tert-butylphenylindenyl)zirkoniumdichlorid
Methylphenylsilandiyl(2-methyl-6-thiapentalen)(2-methyl-4-(4'-tert-butylphenylindenyl)zirkoniumdichlorid
Methyliden(2,5-dimethyl-4-thiapentalen)(2-methyl-4-(4'-tert-butylphenyl-indenyl) zirkoniumdichlorid
Dimethylmethyliden(2,5-dimethyl-6-thiapentalen)(2-methyl-4-(4'-tert-butylphenylindenyl) zirkoniumdichlorid
Diphenylsilandiyl(2,5-dimethyl-4-oxapentalen)(2-methyl-4-(4'-tert-butylphenylindenyl) zirkoniumdichlorid
Diphenylsilandiyl(2,5-dimethyl-6-oxapentalen)(2-methyl-4-(4'-tert-butylphenylindenyl) zirkoniumdichlorid
Dimethylsilandiyl(2-methyl-4-azapentalen)(2-methylindenyl) zirkoniumdichlorid
Dimethylsilandiyl(2-methyl-5-azapentalen)(2-methylindenyl) zirkoniumdichlorid
Dimethylsilandiyl(2-methyl-6-azapentalen)(2-methylindenyl) zirkoniumdichlorid
Dimethylsilandiyl(2-methyl-N-phenyl-4-azapentalen)(2-methylindenyl) zirkoniumdichlorid
Dimethylsilandiyl(2-methyl-N-phenyl-5-azapentalen)(2-methylindenyl) zirkoniumdichlorid
Dimethylsilandiyl(2-methyl-N-phenyl-6-azapentalen)(2-methylindenyl) zirkoniumdichlorid
Dimethylsilandiyl(2,5-dimethyl-4-azapentalen)(2-methylindenyl) zirkoniumdichlorid
Dimethylsilandiyl(2,5-dimethyl-6-azapentalen)(2-methylindenyl) zirkoniumdichlorid
Dimethylsilandiyl(2,5-dimethyl-N-phenyl-4-azapentalen)(2-methylindenyl) zirkoniumdichlorid
Dimethylsilandiyl(2,5-dimethyl-N-phenyl-6-azapentalen)(2-methylindenyl) zirkoniumdichlorid
Dimethylsilandiyl(2-methyl-4-thiapentalen)(2-methylindenyl)zirkoniumdichlorid
Dimethylsilandiyl(2-methyl-5-thiapentalen)(2-methylindenyl)zirkoniumdichlorid
Dimethylsilandiyl(2-methyl-6-thiapentalen)(2-methylindenyl)zirkoniumdichlorid

Dimethylsilandiyl(2,5-dimethyl-4-thiapentalen)(2-methylindenyl) zirkoniumdichlorid
Dimethylsilandiyl(2,5-dimethyl-6-thiapentalen)(2-methylindenyl) zirkoniumdichlorid
Dimethylsilandiyl(2-methyl-4-oxapentalen)(2-methylindenyl)zirkoniumdichlorid
Dimethylsilandiyl(2-methyl-5-oxapentalen)(2-methylindenyl)zirkoniumdichlorid
Dimethylsilandiyl(2-methyl-6-oxapentalen)(2-methylindenyl)zirkoniumdichlorid
Dimethylsilandiyl(2,5-dimethyl-4-oxapentalen)(2-methylindenyl) zirkoniumdichlorid
Dimethylsilandiyl(2,5-dimethyl-6-oxapentalen)(2-methylindenyl) zirkoniumdichlorid
Dimethylsilandiyl(2-methyl-4-azapentalen)(indenyl) zirkoniumdichlorid
Dimethylsilandiyl(2-methyl-5-azapentalen)(indenyl) zirkoniumdichlorid
Dimethylsilandiyl(2-methyl-6-azapentalen)(indenyl) zirkoniumdichlorid
Dimethylsilandiyl(2-methyl-N-phenyl-4-azapentalen)(indenyl) zirkoniumdichlorid
Dimethylsilandiyl(2-methyl-N-phenyl-5-azapentalen)(indenyl) zirkoniumdichlorid
Dimethylsilandiyl(2-methyl-N-phenyl-6-azapentalen)(indenyl)zirkoniumdichlorid
Dimethylsilandiyl(2,5-dimethyl-4-azapentalen)(indenyl) zirkoniumdichlorid
Dimethylsilandiyl(2,5-dimethyl-6-azapentalen)(indenyl) zirkoniumdichlorid
Dimethylsilandiyl(2,5-dimethyl-N-phenyl-4-azapentalen)(indenyl) zirkoniumdichlorid
Dimethylsilandiyl(2,5-dimethyl-N-phenyl-6-azapentalen)(indenyl) zirkoniumdichlorid
Dimethylsilandiyl(2-methyl-4-thiapentalen)(indenyl)zirkoniumdichlorid
Dimethylsilandiyl(2-methyl-5-thiapentalen)(indenyl)zirkoniumdichlorid
Dimethylsilandiyl(2-methyl-6-thiapentalen)(indenyl)zirkoniumdichlorid
Dimethylsilandiyl(2,5-dimethyl-4-thiapentalen)(indenyl) zirkoniumdichlorid
Dimethylsilandiyl(2,5-dimethyl-6-thiapentalen)(indenyl) zirkoniumdichlorid
Dimethylsilandiyl(2-methyl-4-oxapentalen)(indenyl)zirkoniumdichlorid
Dimethylsilandiyl(2-methyl-5-oxapentalen)(indenyl)zirkoniumdichlorid
Dimethylsilandiyl(2-methyl-6-oxapentalen)(indenyl)zirkoniumdichlorid
Dimethylsilandiyl(2,5-dimethyl-4-oxapentalen)(indenyl)zirkoniumdichlorid
Dimethylsilandiyl(2,5-dimethyl-6-oxapentalen)(indenyl)zirkoniumdichlorid
Dimethylsilandiyl(2-methyl-4-azapentalen)(2-methyl-4-phenyl-indenyl) zirkoniumdichlorid
Dimethylsilandiyl(2-methyl-5-azapentalen)(2-methyl-4-phenyl-indenyl) zirkoniumdichlorid
Dimethylsilandiyl(2-methyl-6-azapentalen)(2-methyl-4-phenyl-indenyl) zirkoniumdichlorid
Dimethylsilandiyl(2-methyl-N-phenyl-4-azapentalen)(2-methyl-4-phenyl-indenyl) zirkoniumdichlorid
Dimethylsilandiyl(2-methyl-N-phenyl-5-azapentalen)(2-methyl-4-phenyl-indenyl) zirkoniumdichlorid
Dimethylsilandiyl(2-methyl-N-phenyl-6-azapentalen)(2-methyl-4-phenyl-indenyl) zirkoniumdichlorid
Dimethylsilandiyl(2,5-dimethyl-4-azapentalen)(2-methyl-4-phenyl-indenyl) zirkoniumdichlorid
Dimethylsilandiyl(2,5-dimethyl-6-azapentalen)(2-methyl-4-phenyl-indenyl) zirkoniumdichlorid
Dimethylsilandiyl(2,5-dimethyl-N-phenyl-4-azapentalen)(2-methyl-4-phenyl-indenyl) zirkoniumdichlorid
Dimethylsilandiyl(2,5-dimethyl-N-phenyl-6-azapentalen)(2-methyl-4-phenyl-indenyl) zirkoniumdichlorid
Dimethylsilandiyl(2-methyl-4-thiapentalen)(2-methyl-4-phenylindenyl)zirkoniumdichlorid
Dimethylsilandiyl(2-methyl-5-thiapentalen)(2-methyl-4-phenylindenyl)zirkoniumdichlorid
Dimethylsilandiyl(2-methyl-6-thiapentalen)(2-methyl-4-phenylindenyl)zirkoniumdichlorid
Dimethylsilandiyl(2,5-dimethyl-4-thiapentalen)(2-methyl-4-phenyl-indenyl) zirkoniumdichlorid
Dimethylsilandiyl(2,5-dimethyl-6-thiapentalen )(2-methyl-4-phenyl-indenyl) zirkoniumdichlorid
Dimethylsilandiyl(2-methyl-4-oxapentalen)(2-methyl-4-phenylindenyl)zirkoniumdichlorid
Dimethylsilandiyl(2-methyl-5-oxapentalen)(2-methyl-4-phenylindenyl)zirkoniumdichlorid
Dimethylsilandiyl(2-methyl-6-oxapentalen)(2-methyl-4-phenylindenyl)zirkoniumdichlorid
Dimethylsilandiyl(2,5-dimethyl-4-oxapentalen)(2-methyl-4-phenyl-indenyl) zirkoniumdichlorid
Dimethylsilandiyl(2,5-dimethyl-6-oxapentalen)(2-methyl-4-phenyl-indenyl) zirkoniumdichlorid
Dimethylsilandiyl(2-methyl-4-azapentalen)(2-methyl-4,5-benzo-indenyl) zirkoniumdichlorid
Dimethylsilandiyl(2-methyl-5-azapentalen)(2-methyl-4,5-benzo-indenyl) zirkoniumdichlorid
Dimethylsilandiyl(2-methyl-6-azapentalen)(2-methyl-4,5-benzo-indenyl) zirkoniumdichlorid
Dimethylsilandiyl(2-methyl-N-phenyl-4-azapentalen)(2-methyl-4,5-benzo-indenyl) zirkoniumdichlorid
Dimethylsilandiyl(2-methyl-N-phenyl-5-azapentalen)(2-methyl-4,5-benzo-indenyl) zirkoniumdichlorid
Dimethylsilandiyl(2-methyl-N-phenyl-6-azapentalen)(2-methyl-4,5-benzo-indenyl) zirkoniumdichlorid
Dimethylsilandiyl(2,5-dimethyl-4-azapentalen)(2-methyl-4,5-benzo-indenyl) zirkoniumdichlorid
Dimethylsilandiyl(2,5-dimethyl-6-azapentalen)(2-methyl-4,5-benzo-indenyl) zirkoniumdichlorid
Dimethylsilandiyl(2,5-dimethyl-N-phenyl-4-azapentalen)(2-methyl-4,5-benzo-indenyl) zirkoniumdichlorid
Dimethylsilandiyl(2,5-dimethyl-N-phenyl-6-azapentalen)(2-methyl-4,5-benzo-indenyl) zirkoniumdichlorid
Dimethylsilandiyl(2-methyl-4-thiapentalen)(2-methyl-4,5-benzoindenyl)zirkoniumdichlorid

Dimethylsilandiyl(2-methyl-5-thiapentalen)(2-methyl-4,5-benzoindenyl)zirkoniumdichlorid
Dimethylsilandiyl(2-methyl-6-thiapentalen)(2-methyl-4,5-benzoindenyl)zirkoniumdichlorid
Dimethylsilandiyl(2,5-dimethyl-4-thiapentalen)(2-methyl-4,5-benzo-indenyl) zirkoniumdichlorid
Dimethylsilandiyl(2,5-dimethyl-6-thiapentalen)(2-methyl-4,5-benzo-indenyl) zirkoniumdichlorid
Dimethylsilandiyl(2-methyl-4-oxapentalen)(2-methyl-4,5-benzoindenyl)zirkoniumdichlorid
Dimethylsilandiyl(2-methyl-5-oxapentalen)(2-methyl-4,5-benzoindenyl)zirkoniumdichlorid
Dimethylsilandiyl(2-methyl-6-oxapentalen)(2-methyl-4,5-benzoindenyl)zirkoniumdichlorid
Dimethylsilandiyl(2,5-dimethyl-4-oxapentalen)(2-methyl-4,5-benzo-indenyl) zirkoniumdichlorid
Dimethylsilandiyl(2,5-dimethyl-6-oxapentalen)(2-methyl-4,5-benzo-indenyl) zirkoniumdichlorid
Dimethylsilandiylbis(2-methyl-4-azapentalen)zirkoniumdichlorid
Dimethylsilandiylbis(2-methyl-5-azapentalen) zirkoniumdichlorid
Dimethylsilandiylbis(2-methyl-6-azapentalen) zirkoniumdichlorid
Dimethylsilandiylbis(2-methyl-N-phenyl-4-azapentalen) zirkoniumdichlorid
Dimethylsilandiylbis(2-methyl-N-phenyl-5-azapentalen) zirkoniumdichlorid
Dimethylsilandiylbis(2-methyl-N-phenyl-6-azapentalen) zirkoniumdichlorid
Dimethylsilandiylbis(2,5-dimethyl-4-azapentalen) zirkoniumdichlorid
Dimethylsilandiylbis(2,5-dimethyl-6-azapentalen) zirkoniumdichlorid
Dimethylsilandiylbis(2,5-dimethyl-N-phenyl-4-azapentalen) zirkoniumdichlorid
Dimethylsilandiylbis(2,5-dimethyl-N-phenyl-6-azapentalen) zirkoniumdichlorid
Dimethylsilandiylbis(2-methyl-4-thiapentalen)zirkoniumdichlorid
Dimethylsilandiylbis(2-methyl-5-thiapentalen)zirkoniumdichlorid
Dimethylsilandiylbis(2-methyl-6-thiapentalen)zirkoniumdichlorid
Dimethylsilandiylbis(2,5-dimethyl-4-thiapentalen) zirkoniumdichlorid
Dimethylsilandiylbis(2,5-dimethyl-6-thiapentalen)zirkoniumdichlorid
Dimethylsilandiylbis(2-methyl-4-oxapentalen)zirkoniumdichlorid
Dimethylsilandiylbis(2-methyl-5-oxapentalen)zirkoniumdichlorid
Dimethylsilandiylbis(2-methyl-6-oxapentalen)zirkoniumdichlorid
Dimethylsilandiylbis(2,5-dimethyl-4-oxapentalen)zirkoniumdichlorid
Dimethylsilandiylbis(2,5-dimethyl-6-oxapentalen)zirkoniumdichlorid

Das erfindungsgemäße Katalysatorsystem ist erhältlich durch Umsetzung einer Lewis-Base der Formel (I) und einer Organoboraluminium-Verbindung, die aus Einheiten der Formel (II) aufgebaut ist, mit einem Träger. Anschließend erfolgt die Umsetzung mit einer Lösung oder Suspension aus einem oder mehreren Metallocenverbindungen der Formel (VI) und optional einer oder mehrerer Organometallverbindungen der Formel (V).
Die Aktivierung des Katalysatorsystems kann dadurch wahlweise vor dem Einschleusen in den Reaktor vorgenommen werden oder aber erst im Reaktor durchgeführt werden. Ferner wird ein Verfahren zur Herstellung von Polyolefinen beschrieben. Die Zugabe einer weiteren chemischen Verbindung, die als Additiv vor der Polymerisation zudosiert wird, kann zusätzlich von Vorteil sein.

Zur Herstellung des erfindungsgemäßen Katalysatorsystems wird das Trägermeterial in einem organischen Lösemittel suspendiert. Geeignete Lösemittel sind aromatische oder aliphatische Lösemittel, wie beispielsweise Hexan, Heptan, Toluol oder Xylol oder halogenierte Kohlenwasserstoffe, wie Methylenchlorid oder halogenierte aromatische Kohlenwasserstoffe wie o-Dichlorbenzol. Der Träger kann zuvor mit einer Verbindung der Formel (V) vorbehandelt werden. Anschließend wird eine oder mehrere Verbindungen der Formel (I) zu dieser Suspension gegeben, wobei die Reaktionszeit zwischen 1 Minute und 48 Stunden liegen kann, bevorzugt ist eine Reaktionszeit zwischen 10 Minuten und 2 Stunden. Die Reaktionslösung kann isoliert und anschließend resuspendiert werden oder aber auch direkt mit einer cokatalytisch wirkenden Organoboraluminimverbindung, die aus Einheiten gemäß der Formel (II) aufgebaut ist, umgesetzt werden. Die Reaktionszeit liegt dabei zwischen 1 Minute und 48 Stunden, wobei eine Reaktionszeit von zwischen 10 Minuten und 2 Stunden bevorzugt ist. Bevorzugt ist die Menge von 1 bis 4 Äquivalenten einer Lewis-Base der Formel (I) mit einem Äquivalent einer cokatalytisch wirksamen Verbindung die gemäß der Formel (II) aufgebaut ist. Besonders bevorzugt ist die Menge von einem Äquivalent einer Lewis-Base der Formel (I) mit einem Äquivalent einer cokatalytisch wirksamen Verbindung die gemäß der Formel (II) aufgebaut ist. Das Reaktionsprodukt dieser Umsetzung ist eine metalloceniumbildende Verbindung, die kovalent an das Trägermaterial fixiert ist. Es wird nachfolgend als modifiziertes Trägermaterial bezeichnet. Die Reaktionslösung wird anschließend filtriert und mit einem der oben genannten Lösemittel gewaschen. Danach wird das modifizierte Trägermaterial im Hochvakuum getrocknet. Das modifizierte Trägermaterial kann nach dem Trocknen wieder resuspendiert werden und mit einer Verbindung der Formel (V) nachbehandelt werden. Die Verbindung der Formel (V) kann aber auch vor der Filtration und Trocknung des modifizierten Trägermaterials zugegeben werden.
Das Aufbringen einer oder mehrerer Metallocenverbindungen vorzugsweise der Formel (VI) und einer oder mehrerer

Organometallverbindungen der Formel (V) auf das modifizierte Trägermaterial geht vorzugsweise so vonstatten, daß eine oder mehrere Metallocenverbindungen der Formel (VI) in einem oben beschriebenen Lösemittel gelöst bzw. suspendiert wird und anschließend eine oder mehrere Verbindungen der Formel (V), die vorzugsweise ebenfalls gelöst bzw. suspendiert ist, umgesetzt werden. Das stöchiometrische Verhältnis an Metallocenverbindung der Formel (VI) und einer Organometallverbindung der (V) beträgt 100 : 1 bis $10^{-4}$ : 1. Vorzugsweise beträgt das Verhältnis 1 : 1 bis $10^{-2}$ : 1. Das modifizierte Trägermaterial kann entweder direkt im Polymerisationsreaktor oder in einem Reaktionskolben in einem oben genannten Lösemittel vorgelegt werden. Anschließend erfolgt die Zugabe der Mischung aus einer Metallocenverbindung der Formel (VI) und einer Organometallverbindung der Formel (V). Optional kann aber auch eine oder mehrere Metallocenverbindungen der Formel (VI) ohne vorherige Zugabe einer Organometallverbindung der Formel (V) zu dem modifizieten Trägermaterial gegeben werden.
Die Menge an modifizierten Träger zu einer Metallocenverbindung der Formel (VI) beträgt vorzugsweise 10g : 1 μmol bis $10^{-2}$g : 1 μmol. Das stöchiometrische Verhältnis an Metallocenverbindung der Formel (VI) zu der geträgerten cokatalytisch wirkenden Organobor-aluminiumverbindung, bestehend aus Einheiten der Formel (II), beträgt 100 : 1 bis $10^{-4}$ : 1, vorzugsweise 1 :1 bis $10^{-2}$ : 1.
Das geträgerte Katalysatorsystem kann direkt zur Polymerisation eingesetzt werden.

Es kann aber auch nach Entfernen des Lösemittels resuspendiert zur Polymerisation eingesetzt werden. Der Vorteil dieser Aktivierungsmethode liegt darin, daß es die Option bietet das polymerisationsaktive Katalysatorsystem erst im Reaktor entstehen zu lassen. Dadurch wird verhindert, daß beim Einschleusen des luftempfindlichen Katalysators zum Teil Zersetzung eintritt.

Weiterhin wird ein Verfahren zur Herstellung eines Olefinpolymers in Gegenwart des erfindungsgemäßen Katalysatorsystems beschrieben. Die Polymerisation kann eine Homo- oder eine Copolymerisation sein.

Bevorzugt werden Olefine der Formel $R^{\alpha}$-CH=CH-$R^{\beta}$ polymerisiert, worin $R^{\alpha}$ und $R^{\beta}$ gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäureoder Carbonsäureestergruppe substituiert sein kann, oder $R^{\alpha}$ und $R^{\beta}$ mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren $C_3$-$C_{20}$-1-Olefinen, insbesondere Propylen, und /oder einem oder mehreren $C_4$-$C_{20}$-Diene, insbesondere 1,3-Butadien, copolymerisiert oder Norbornen und Ethylen copolymerisiert.
Die Polymerisation wird bevorzugt bei einer Temperatur von - 60 bis 300 °C, besonders bevorzugt 30 bis 250 °C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Das geträgerte Katalysatorsystem kann entweder direkt im Polymerisationssystem gebildet werden oder es kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.
Dabei wird die erfindungsgemäße Verbindung in einer Konzentration, bezogen auf das Übergangsmetall von bevorzugt $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol. Vor Zugabe des erfindungsgemäßen Katalysatorsystems bzw. vor Aktivierung des erfindungsgemäßen Katalysatorsystems im Polymerisationssystem kann zusätzlich eine Alkylalumiuniumverbindung

wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 200 bis 0,001 mmol Al pro kg Reaktorinhalt dem Polymerisationssystem zugesetzt. Bevorzugt werden Triisobutylaluminium und Triethylaluminium in einer Konzentration von 10 bis 0,01 mmol Al pro kg Reaktorinhalt eingesetzt, dadurch kann bei der Synthese eines geträgerten Katalysatorsystems das molare $Al/M^1$-Verhältnis klein gewählt werden.

Weiterhin kann bei dem erfindungsgemäßen Verfahren ein Additiv wie ein Antistatikum verwendet werden z.B. zur Verbesserung der Kornmorphologie des Olefinpolymers. Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschreiben werden. Weitere geeignete Antistatika sind z.B. $C_{12}$- bis $C_{22}$-Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A-0,107,127 angegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben.

Kommerziell erhältliche Produkte wie Stadis® 450 der Fa. DuPont, eine Mischung aus Toluol, Isopropanoi, Dodecylbenzolsulfonsäure, einem Polyamin, einem Copolymer aus Dec-1-en und $SO_2$ sowie Dec-1-en oder ASA®-3 der Fa. Shell und ARU5R® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel VI) eingesetzt. Die benötigten Mengen an Antistatikum können jedoch, je nach Art des eingesetzten Antistatikums, in weiten Bereichen schwanken.

Die eigentliche Polymerisation wird vorzugsweise in flüssigen Monomer (bulk) oder in der Gasphase durchgeführt.

Das Antistatikum kann zu jedem beliebigen Zeitpunkt zur Polymerisation zudosiert werden. Zum Beispiel ist eine bevorzugte Verfahrensweise die, daß das geträgerte Katalysatorsystem in einem organischen Lösemittel, bevorzugt Alkane wie Heptan oder Isododekan, resuspendiert wird. Anschließend wird es unter Rühren in den Polymerisationsautoklav zugegeben. Danach wird das Antistatikum zudosiert. Die Polymerisation wird bei Temperaturen im Bereich von 0 bis 100°C durchgeführt. Eine weitere bevorzugte Verfahrensweise ist, daß das Antistatikum vor Zugabe des geträgerten katalysatorsystems in den Polymerisationsautoklav zudosiert wird. Anschließend wird das resuspendierte geträgerte Katalysatorsystem unter Rühren bei Temperaturen im Bereich von 0 bis 100°C zudosiert. Die Polymerisationszeit kann im Bereich von 0,1 bis 24 Stunden. Bevorzugt ist eine Polymerisationszeit im Bereich von 0,1 bis 5 Stunden.

Bei dem vorstehend beschriebenen Verfahren treten keine Reaktorbeläge auf, es bilden sich keine Agglomerate und die Produktivität des eingesetzten Katalysatorsystems ist hoch. Die mit dem erfindungsgemäßen Verfahren hergestellten Polymere zeichnen sich durch eine enge Molekulargewichtsverteilung und gute Kornmorphologie aus.

Die nachfolgenden Beispiele dienen zur näheren Erläuterung der Erfindung

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrsthndiges Sieden über geeignete Trockenmittel und anschließende Destillation unter Argon absolutiert.

Beispiel 1: Synthese von Bis(dimethylalumoxy)pentafluorphenylboran

10ml Trimethylaluminium (2M in Toluol, 20mmol) werden in 40ml Toluol vorgelegt. Bei 40°C werden zu dieser Lösung 2,1g Pentafluorphenylboronsäure (10mmol) in 50ml Toluol über 15 Minuten zugetropft. Es wird 1 Stunde bei -40°C gerührt und anschließend eine weitere Stunde bei Raumtemperatur (RT). Die leicht trübe, hellgelbe Lösung wird über eine G4-Fritte filtriert. Es resultiert eine klare, hellgelbe Lösung (0.1 M bezogen auf Bor) von Bis(dimethylalumoxy) pentafluorphenylboran in Toluol.

Beispiel 2: Synthese von Bis(pentafluorphenylboroxy)methylalan

5ml Trimethylaluminium (2M in Toluol, 10 mmol) werden in 45ml Toluol vorgelegt. Bei -40°C werden zu dieser Lösung 6.92g Bis(pentafluorphenyl)borinsäure (20mmol) in 50 ml Toluol über 15 Minuten zugetropft. Es wird 1 Stunde bei -40°C gerührt und anschließend eine weitere Stunde bei Raumtemperatur. Die leicht trübe, hellgelbe Lösung wird über eine G4-Fritte filtriert. Es resultiert eine klare, hellgelbe Lösung (0.1 M bezogen auf Al) von Bis(pentafluorphenylboroxy)methylalan in Toluol.

Beispiel 3: Synthese von Bis(phenylboroxy)methylalan

5ml Trimethylaluminium (2M in Toluol, 10 mmol) werden in 45ml Toluol vorgelegt. Bei -40°C werden zu dieser Lösung 3,32g Bis(phenyl)borinsäure (20mmol) in 50 ml Toluol über 15 Minuten zugetropft. Es wird 1 Stunde bei -40°C gerührt und anschließend eine weitere Stunde bei Raumtemperatur. Die leicht trübe Lösung wird über eine G4-Fritte filtriert. Es resultiert eine klare, farblose Lösung (0.1 M bezogen auf Al) von Bis(phenylboroxy)methylalan in Toluol.

Beispiel 4: Synthese von Bis(pentafluorphenylboroxy)isobutylalan

10ml Triisobutylaluminium (1M in Toluol, 10 mmol) werden in 40ml Toluol vorgelegt. Bei -40°C werden zu dieser Lösung 6,92g Bis(pentafluorphenyl)borinsäure (20mmol) in 50 ml Toluol über 15 Minuten zugetropft. Es wird 1 Stunde bei -40°C gerührt und anschließend eine weitere Stunde bei Raumtemperatur. Die leicht trübe, hellgelbe Lösung wird über eine G4-Fritte filtriert. Es resultiert eine klare, hellgelbe Lösung (0.1M bezogen auf Al) von Bis(pentafluorphenylboroxy)isobutylalan in Toluol.

Beispiel 5: Trägerung von Bis(dimethylalumoxy)pentafluorphenylboran

2g $SiO_2$ (PQ MS3030, vorbehandelt bei 140°C, 10 mbar, 10 Std.) werden in 30 ml Toluol suspendiert und bei Raumtemperatur 0,63 ml N,N-Dimethylanilin zugegeben. Es wird auf 0°C gekühlt und über einen Tropftrichter 50ml der im Beispiel 1 hergestellten Lösung zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 3,03g eines schwach blau gefärbten Trägermaterials.

Beispiel 6: Trägerung von Bis(pentafluorphenylboroxy)methylalan

2g $SiO_2$ (PQ MS3030, vorbehandelt bei 140°C, 10 mbar, 10 Std.) werden in 30 ml Toluol suspendiert und bei Raumtemperatur 0,5 ml N,N-Dimethylanilin zugegeben. Es wird auf 0°C gekühlt und über einen Tropftrichter 40ml der im Beispiel 2 hergestellten Lösung zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 4,01g eines hellila gefärbten Trägermaterials.

Beispiel 7: Trägerung von Bis(phenylboroxy)methylalan

2g $SiO_2$ (PQ MS3030, vorbehandelt bei 140°C, 10 mbar, 10 Std.) werden in 30 ml Toluol suspendiert und bei RT 0.63 ml N,N-Dimethylanilin zugegeben. Es wird auf 0°C gekühlt und über einen Tropftrichter 50ml der im Beispiel 3 hergestellten Lösung zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 3,17g eines schwach gelb gefärbten Trägermaterials.

Beispiel 8: Trägerung von Bis(pentafluorphenylboroxy)isobutylalan

2g $SiO_2$ (PQ MS3030, vorbehandelt bei 140°C, 10 mbar, 10 Std.) werden in 30 ml Toluol suspendiert und bei Raumtemperatur 0,63 ml N,N-Dimethylanilin zugegeben. Es wird auf 0°C gekühlt und über einen Tropftrichter 50ml der im Beispiel 3 hergestellten Lösung zugetropft. Man läßt auf Raumtemperatur kommen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 4,22g eines schwach blau gefärbten Trägermaterials.

Beispiel 9: Herstellung des Katalysatorsystems 1

Zu 5,8 mg Dimethylsilandiylbis(2-methyl-4-phenyl-indenyl)-zirkoniumdimethyl (10 µmol) in 3 ml Toluol werden bei Raumtemperatur 0,5g des im Beispiel 5 hergestellten Trägers gegeben. Die Suspension wird kurz gerührt und anschließend werden 0,01 ml Trimethylaluminium (TMA) (2M in Toluol, 20 µmol) zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 10: Polymerisation mit dem Katalysatorsystem 1

Ein trockener 2l-Reaktor wird zunächst mit Stickstoff und anschließend mit Propylen gespült und mit 1,5 l

flüssigem Propylen befüllt. Dazu werden 3ml Triisobutylaluminium (TIBA) (20% ig in Varsol) zugegeben und 15 Minuten gerührt. Anschließend wird das im Beispiel 9 hergestellte Katalysatorsystem 1 in 20ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 151g Polypropylen-Pulver (PP). Der Reaktor zeigte keine Beläge an der Innenwand oder Rührer. Die Katalysatoraktivität beträgt 26 kg PP/g Metallocen x h.

Beispiel 11: Herstellung des Katalysatorsystems 2

Zu 5,8 mg Dimethylsilandiylbis(2-methyl-4-phenyl-indenyl)-zirkoniumdimethyl (10 µmol) in 3 ml Toluol werden bei Raumtemperatur 0,43 g des im Beispiel 6 hergestellten Trägers gegeben. Die Suspension wird kurz gerührt und anschließend werden 0,01 ml TMA (2M in Toluol, 20 µmol) zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 12: Polymerisation mit dem Katalysatorsystem 2

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 11 hergestellte Katalysatorsystem 2 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 272 g Polypropylen-Pulver. Der Reaktor zeigte keine Beläge an der Innenwand oder Rührer. Die Katalysatoraktivität beträgt 47 kg PP/g Metallocen x h.

Beispiel 13: Herstellung des Katalysatorsystems 3

Zu 5,8 mg Dimethylsilandiylbis(2-methyl-4-phenyl-indenyl)-zirkoniumdimethyl (10 µmol) in 3 ml Toluol werden bei Raumtemperatur 0,43 g des im Beispiel 6 hergestellten Trägers gegeben. Die Katalysatorlösung wird 1 Stunde gerührt und danach das Lösemittel im Ölpumpenvakuum abgezogen. Es resultiert ein rosa farbendes, freifließendes Pulver.

Beispiel 14: Polymerisation mit dem Katalysatorsystem 3

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 13 hergestellte Katalysatorsystem 3 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 214 g Polypropylen-Pulver. Der Reaktor zeigte keine Beläge an der Innenwand oder Rührer. Die Katalysatoraktivität beträgt 37 kg PP/g Metallocen x h.

Beispiel 15: Herstellung des Katalysatorsystems 4

Zu 5,8 mg Dimethylsilandiylbis(2-methyl-4-phenyl-indenyl)-zirkoniumdimethyl (10 µmol) in 3 ml Toluol werden bei Raumtemperatur 0,91 g des im Beispiel 7 hergestellten Trägers gegeben. Die Suspension wird kurz gerührt und anschließend werden 0,01 ml TMA (2M in Toluol, 20 µmol) zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 16: Polymerisation mit dem Katalysatorsystem 4

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 15 hergestelite Katalysatorsystem 4 in 20 ml Heptan resuspendiert eingespritzt und mit 15ml Heptan nachgespült. Das Reaktionsgemisch wird auf die Polymerisations-temperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 166 g Polypropylen-Pulver. Der Reaktor zeigte keine Beläge an der Innenwand oder Rührer. Die Katalysatoraktivität beträgt 29 kg PP/g Metallocen x h.

Beispiel 17: Herstellung des Katalysatorsystems 5

Zu 5,8 mg Dimethylsilandiylbis(2-methyl-4-phenyl-indenyl)-zirkoniumdimethyl (10 :mol) in 3 ml Toluol werden bei Raumtemperatur 0,44 g des im Beispiel 8 hergestellten Trägers gegeben. Die Suspension wird kurz gerührt und anschließend werden 0,01 ml TMA (2M in Toluol, 20 μmol) zugegeben. Die Katalysatorlösung wird 1 Stunde gerührt und danach das Lösemittel im Ölpumpenvakuum abgezogen. Es resultiert ein rosa farbendes, freifließendes Pulver.

Beispiel 18: Polymerisation mit dem Katalysatorsystem 5

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 17 hergestellte Katalysatorsystem 5 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 258 g Polypropylen-Pulver. Der Reaktor zeigte keine Beläge an der Innenwand oder Rührer. Die Katalysatoraktivität beträgt 45 kg PP/g Metallocen x h.

Beispiel 19: Herstellung des Katalysatorsystems 6

Zu 5,8 mg Dimethylsilandiylbis(2-methyl-4-phenyl-indenyl)-zirkoniumdimethyl (10 μmol) in 3 ml Toluol werden bei Raumtemperatur 0,44 g des im Beispiel 8 hergestellten Trägers gegeben. Die Katalysatorlösung wird 1 Stunde gerührt und danach das Lösemittel im Ölpumpenvakuum abgezogen. Es resultiert ein rosa farbendes, freifließendes Pulver.

Beispiel 20: Polymerisation mit dem Katalysatorsystem 6

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 19 hergestellte Katalysatorsystem 6 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 198 g Polypropylen-Pulver. Der Reaktor zeigte keine Beläge an der Innenwand oder Rührer. Die Katalysatoraktivität beträgt 34 kg PP/g Metallocen x h.

Beispiel 21: Herstellung des Katalysatorsystems 7

Zu 6,3 mg Dimethylsilandiylbis(2-methyl-4-phenyl-indenyl)-zirkoniumdichlorid (10 μmol) in 3 ml Toluol werden 10 Minuten mit 0,02 ml TMA (2M in Toluol, 40 μmol) gerührt. Anschließend werden bei Raumtemperatur 0,44 g des im Beispiel 6 hergestellten Trägers gegeben. Die Katalysatorlösung wird 1 Stunde gerührt und danach das Lösemittel im Ölpumpenvakuum abgezogen. Es resultiert ein rosa farbendes, freifließendes Pulver.

Beispiel 22: Polymerisation mit dem Katalysatorsystem 7

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 21 hergestellte Katalysatorsystem 7 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 600 g Polypropylen-Pulver. Der Reaktor zeigte keine Beläge an der Innenwand oder Rührer. Die Katalysatoraktivität beträgt 95 kg PP/g Metallocen x h.

Beispiel 23: Trägerung von Bis(pentafluorphenylboroxy)methylalan

2g $SiO_2$ (PQ MS3030, vorbehandelt bei 140°C, 10 mbar, 10 Std.) werden in 30 ml Toluol suspendiert und bei Raumtemperatur 0,5 ml N,N-Dimethylanilin zugegeben. Es wird auf 0°C gekühlt und über einen Tropftrichter 40ml der im Beispiel 2 hergestellten Lösung zugetropft. Man läßt auf Raumtemperatur erwärmen und tropft anschließend 4 ml TIBA (1M in Toluol) zu. Nachfolgend wird noch 1 Stunde bei Raumtemperatur gerührt. Die Suspension wird anschließend filtriert und mit Pentan gewaschen. Danach wird der Rückstand im Ölpumpenvakuum bis zur Gewichtskonstanz

getrocknet. Es resultieren 4,14g eines weißen Trägermaterials.

Beispiel 24: Herstellung des Katalysatorsystems 8

Zu 6,3 mg Dimethylsilandiylbis(2-methyl-4-phenyl-indenyl)-zirkoniumdichlorid (10 µmol) in 3 ml Toluol werden 10 Minuten mit 0,02 ml TMA (2M in Toluol, 40 µmol) gerührt. Anschließend werden bei Raumtemperatur 0,48 g des im Beispiel 23 hergestellten Trägers gegeben. Die Katalysatorlösung wird 1 Stunde gerührt und danach das Lösemittel im Ölpumpenvakuum abgezogen. Es resultiert ein rosa farbendes, freifließendes Pulver.

Beispiel 25: Polymerisation mit dem Katalysatorsystem 8

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 24 hergestellte Katalysatorsystem 8 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 640 g Polypropylen-Pulver. Der Reaktor zeigte keine Beläge an der Innenwand oder Rührer. Die Katalysatoraktivität beträgt 102 kg PP/g Metallocen x h.

Vergleichsbeispiele:

Beispiel 26: Herstellung des Katalysatorsystems 9

100 mg (0,165 mmol) Dimethylsilandiylbis-(2-methyl-4-phenylindenyl)zirkoniumdichlorid werden in 7,5 ml 30%-iger MAO-Lösung in Toluol (Al/Zr=225) und weiteren 7,5 ml Toluol vermischt und 30 Minuten bei Raumtemperatur gerührt. Anschließend werden 10 g $SiO_2$ (PQ MS3030, vorbehandelt bei 140°C, 10 mbar, 10 Std.) dazugegeben und weitere 10 Minuten gerührt. Das Lösemittel wird im Ölpumpenvakuum entfernt.

Beispiel 27 Polymerisation mit dem Katalysatorsystem 9

Ein trockener 2l-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird 0,753 g (5,97 mg Dimethylsilandiylbis-(2-methyl-4-phenyl-indenyl)zirkoniumdichlorid) des im Beispiel 26 hergestellten Katalysatorsystems 9 in 20 ml Heptan resuspendiert eingespritzt und mit 15ml Heptan nachgespült. Das Reaktionsgemisch wird auf die Polymerisations-temperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 316 g Polypropylen-Pulver. Der Reaktor zeigte keine Beläge an der Innenwand oder Rührer. Die Katalysatoraktivität beträgt 53 kg PP/g Metallocen x h.

## Patentansprüche

**1.** Katalysatorsystem enthaltend

a) mindestens ein Metallocen,
b) mindestens eine Lewis-Base der Formel I,

$$M^2R^3R^4R^5 \qquad (I)$$

worin $R^3$, $R^4$ und $R^5$ gleich oder verschieden sind und für ein Wasserstoffatom, eine $C_1$-$C_{20}$-Alkyl-, $C_1$-$C_{20}$-Halogenalkyl-, $C_6$-$C_{40}$-Aryl-, $C_6$-$C_{40}$-Halogenaryl-, $C_7$-$C_{40}$-Alkylaryl- oder $C_7$-$C_{40}$-Arylalkyl-Gruppe stehen, wobei gegebenenfalls zwei Reste oder alle drei Reste $R^3$, $R^4$ und $R^5$ über $C_2$-$C_{20}$-Kohlenstoffeinheiten miteinander verbunden sein können und
$M^2$ für ein ein Element der V. Hauptgruppe des Periodensystems der Elemente steht,
c) einen Träger,
d) mindestens eine Organoboraluminium-Verbindung, die aus Einheiten der Formel II

$$R_i^1M^3\text{-O-}M^3R_j^2 \qquad \text{(II)}$$

worin

$R^1$ und $R^2$ gleich oder verschieden sind und ein Wasserstoffatom, ein Halogenatom, eine $C_1$-$C_{40}$-kohlenstoffhaltige Gruppe, insbesondere $C_1$-$C_{20}$-Alkyl, $C_1$-$C_{20}$-Halogenalkyl, $C_1$-$C_{10}$-Alkoxy, $C_6$-$C_{20}$-Aryl, $C_6$-$C_{20}$-Halogenaryl, $C_6$-$C_{20}$-Aryloxy, $C_7$-$C_{40}$-Arylalkyl, $C_7$-$C_{40}$-Halogenarylalkyl, $C_7$-$C_{40}$-Alkylaryl, $C_7$-$C_{40}$-Halogenalkylaryl sind oder $R^1$ kann eine -$OSiR_3$-Gruppe sein, worin R gleich oder verschieden sind und und die gleiche Bedeutung wie $R^1$ haben,
$M^3$ gleich oder verschieden ist und für Bor oder Aluminium steht und
i und j jeweis eine ganze Zahl 0, 1 oder 2 steht,
aufgebaut ist und die kovalent an den Träger gebunden ist,
sowie gegebenenfalls
e) eine Organometallverbindung der Formel V

$$[M^4R_p^6]_k \qquad \text{(V)}$$

worin
$M^4$ ein Element der I., II. und III. Hauptgruppe des Periodensystems der Elemente ist,
$R^6$ gleich oder verschieden ist und ein Wasserstoffatom, ein Halogenatom, eine $C_1$-$C_{40}$-kohlenstoffhaltige Gruppe, insbesondere $C_1$-$C_{20}$-Alkyl-, $C_6$-$C_{40}$-Aryl-, $C_7$-$C_{40}$-Aryl-alkyl oder $C_7$-$C_{40}$-Alkyl-aryl-Gruppe bedeutet,
p eine ganze Zahl von 1 bis 3 und
k ist eine ganze Zahl von 1 bis 4 ist.

**2.** Katalysatorsystem gemäß Anspruch 1, **dadurch gekennzeichnet, daß** es sich bei den Lewis-Basen der Formel (I) um solche handelt, bei denen $M^2$ für Stickstoff oder Phosphor steht.

**3.** Katalysatorsystem gemäß Anspruch 2, **dadurch gekennzeichnet, daß** es sich bei den Lewis-Basen der Formel (I) um Triethylamin, Triilsopropylamin, Triisobutylamin, Tri(n-butyl)amin, N,N-Dimethylanilin, N,N-Diethylanilin, N, N-2,4,6-Pentamethylanilin, Dicyclohexylamin, Pyridin, Pyrazin, Triphenylphosphin, Tri(methylphenyl)phosphin und Tri(dimethylphenyl)phosphin handelt.

**4.** Katalysatorsystem gemäß einem der Ansprüche 1 bis 3, **dadurch gekennzeichnet, daß** der Träger ist ein poröser anorganischer oder organischer Feststoff ist.

**5.** Katalysatorsystem gemäß einem der Ansprüche 1 bis 4, **dadurch gekennzeichnet, daß** es bei den Organoboraluminiumverbindung um Verbindungen der Formeln (III) und (IV),

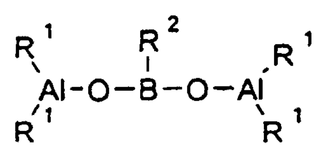

(III)

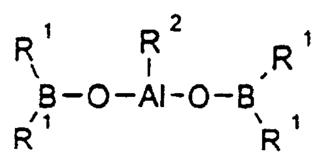

(IV)

worin $R^1$ und $R^2$ die gleiche Bedeutung wie unter Formel (II) haben, handelt.

**6.** Katalysatorsystem gemäß Anspruch 5, **dadurch gekennzeichnet, daß** es sich bei den Organoboraluminiumverbindung der Formeln (III) und (IV) um

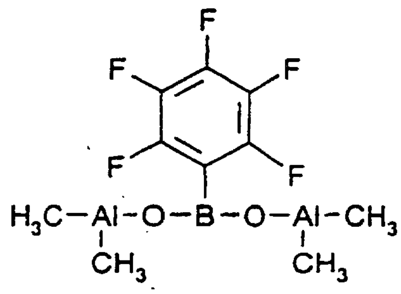

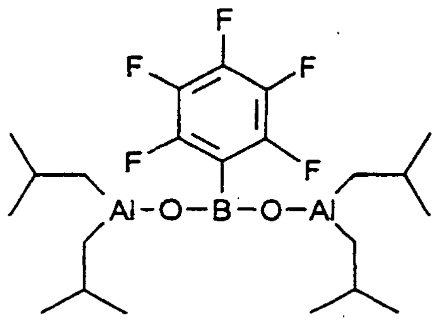

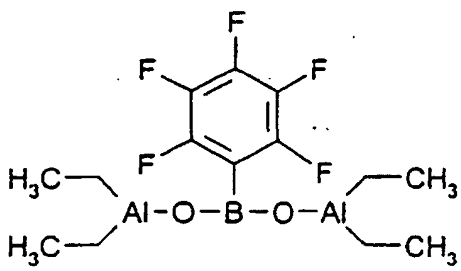

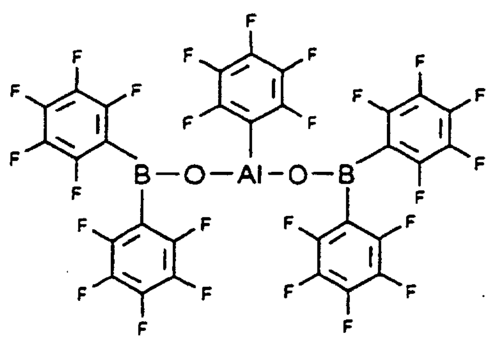

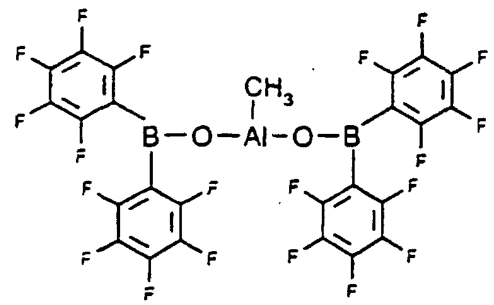

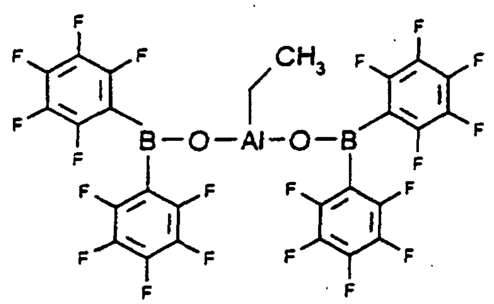

handelt.

7. Katalysatorsystem gemäß einem der Ansprüche 1 bis 6, **dadurch gekennzeichnet, daß** es sich bei Organometallverbindungen der Formel (V) um Trimethylaluminium, Triethylaluminium, Tri-isopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesquichlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethylaluminium(triethylsiloxid), Phenylalan, Pentafluorphenylalan und o-Tolylalan, handelt.

8. Katalysatorsystem gemäß einem der Ansprüche 1 bis 7, **dadurch gekennzeichnet, daß** es sich bei dem Metallocen um ein unverbrücktes oder verbrücktes Metallocen der Formel (VI),

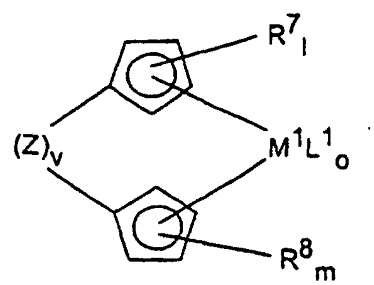

(VI)

worin

$M^1$ ein Metall der III., IV., V. oder VI. Nebengruppe des Periodensystems der Elemente ist, insbesondere Ti, Zr oder Hf,

$R^7$ gleich oder verschieden sind und ein Wasserstoffatom oder $SiR_3^{12}$ sind, worin $R^{12}$ gleich oder verschieden ein Wasserstoffatom oder eine $C_1$-$C_{40}$kohlenstoffhaltige Gruppe wie $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl sind, oder $R^7$ sind eine $C_1$-$C_{30}$ - kohlenstoffhaltige Gruppe wie $C_1$-$C_{25}$-Alkyl, z. B. Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl,

$C_5$-$C_{24}$-Heteroaryl wie Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist, oder zwei oder mehrere Reste $R^7$ können so miteinander verbunden sein, daß die Reste $R^7$ und die sie verbindenden Atome des Cyclopentadienylringes ein kohlenstoffhaltiges oder ein kohlenstoff- und heteroatomhaltiges $C_4$-$C_{24}$-Ringsystem bilden, welches seinerseits substituiert sein kann,

$R^8$ gleich oder verschieden sind und ein Wasserstoffatom oder $SiR_3^{12}$ sind, worin $R^{12}$ gleich oder verschieden ein Wasserstoffatom oder eine $C_1$-$C_{40}$kohlenstoffhaltige Gruppe wie $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl sind, oder $R^8$ sind eine $C_1$-$C_{30}$ - kohlenstoffhaltige Gruppe wie $C_1$-$C_{25}$-Alkyl, z. B. Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, z. B. Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist, oder zwei oder mehrere Reste $R^8$ können so miteinander verbunden sein, daß die Reste $R^8$ und die sie verbindenden Atome des Cyclopentadienylringes ein kohlenstoffhaltiges oder ein kohlenstoff- und heteroatomhaltiges $C_4$-$C_{24}$-Ringsystem bilden, welches seinerseits substituiert sein kann,

l gleich 5 für v = 0, und l gleich 4 für v = 1 ist,

m gleich 5 für v = 0, und m gleich 4 für v = 1 ist,

$L^1$ gleich oder verschieden sein können und ein Wasserstoffatom, eine $C_1$-$C_{10}$-Kohlenwasserstoffgruppe wie $C_1$-$C_{10}$-Alkyl oder $C_6$-$C_{10}$-Aryl, ein Halogenatom, oder $OR^9$, $SR^9$, $OSiR_3^9$, $SiR_3^9$, $PR_2^9$ oder $NR_2^9$ bedeuten, worin $R^9$ ein Halogenatom, eine $C_1$-$C_{10}$ Alkylgruppe, eine halogenierte $C_1$-$C_{10}$ Alkylgruppe, eine $C_6$-$C_{20}$ Arylgruppe oder eine halogenierte $C_6$-$C_{20}$ Arylgruppe sind, oder $L^1$ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,

o eine ganze Zahl von 1 bis 4, bevorzugt 2 ist,

Z ein verbrückendes Strukturelement zwischen den beiden Cyclopentadienylringen bezeichnet und v ist 0 oder 1,

bedeutet, handelt.

9. Katalysatorsystem gemäß einem der Ansprüche 1 bis 6, **dadurch gekennzeichnet, daß** es sich bei dem Metallocen der Formel (VI) worin Z für eine Gruppe $MR^{10}R^{11}$ steht, worin M Kohlenstoff, Silizium, Germanium oder Zinn ist und $R^{10}$ und $R^{11}$ gleich oder verschieden eine $C_1$-$C_{20}$-kohlenwasserstoffhaltige Gruppe wie $C_1$-$C_{10}$-Alkyl, $C_6$-$C_{14}$-Aryl oder Trimethylsilyl bedeutet.

10. Katalysatorsystem gemäß Anspruch 9, **dadurch gekennzeichnet, daß** es sich bei dem Metallocen der Formel (VI) worin Z für $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$ steht.

11. Katalysatorsystem gemäß Anspruch 10, **dadurch gekennzeichnet, daß** als Metallocen Dimethylsilandiylbis(indenyl)zirkoniumdichlorid,
Dimethylsilandiylbis(4-naphthyl-indenyl)zirkoniumdichlorid,
Dimethylsilandiylbis(2-methyl-benzo-indenyl)zirkoniumdichlorid,
Dimethylsilandiylbis(2-methyl-indenyl)zirkoniumdichlorid,
Dimethylsilandiylbis(2-methyl-4-(1-naphthyl)-indenyl)zirkoniumdichlorid,
Dimethylsilandiylbis(2-methyl-4-(2-naphthyl)-indenyl)zirkoniumdichlorid,
Dimethylsilandiylbis(2-methyl-4-phenyl-indenyl)zirkoniumdichlorid,
Dimethylsilandiylbis(2-methyl-4-t-butyl-indenyl)zirkoniumdichlorid,
Dimethylsilandiylbis(2-methyl-4-isopropyl-indenyl)zirkoniumdichlorid,
Dimethylsilandiylbis(2-methyl-4-ethyl-indenyl)zirkoniumdichlorid,
Dimethylsilandiylbis(2-methyl-4--acenaphth-indenyl)zirkoniumdichlorid,
Dimethylsilandiylbis(2,4-dimethyl-indenyl)zirkoniumdichlorid,
Dimethylsilandiylbis(2-ethyl-indenyl)zirkoniumdichlorid,
Dimethylsilandiylbis(2-ethyl-4-ethyl-indenyl)zirkoniumdichlorid,
Dimethylsilandiylbis(2-ethyl-4-phenyl-indenyl)zirkoniumdichlorid,
Dimethylsilandiybis(2-methyl-4,5-benzo-indenyl)zirkoniumdichlorid,
Dimethylsilandiylbis(2-methyl-4,6 diisopropyl-indenyl)zirkoniumdichlorid,
Dimethylsilandiylbis(2-methyl-4,5 diisopropyl-indenyl)zirkoniumdichlorid,
Dimethylsilandiylbis(2,4,6-trimethyl-indenyl)zirkoniumdichlorid,

Dimethylsilandiylbis(2,5,6-trimethyl-indenyl)zirkoniumdichlorid,
Dimethylsilandiylbis(2,4,7-trimethyl-indenyl)zirkoniumdichlorid,
Dimethylsilandiylbis(2-methyl-5-isobutyl-indenyl)zirkoniumdichlorid,
Dimethylsilandiylbis(2-methyl-5-t-butyl-indenyl)zirkoniumdichlorid,
Methyl(phenyl)silandiylbis(2-methyl-4-phenyl-indenyl)zirkoniumdichlorid,
Methyl(phenyl)silandiylbis(2-methyl-4,6 diisopropyl-indenyl)zirkoniumdichlorid,
Methyl(phenyl)silandiylbis(2-methyl-4-isopropyl-indenyl)zirkoniumdichlorid,
Methyl(phenyl)silandiylbis(2-methyl-4,5-benzo-indenyl)zirkoniumdichlorid,
Methyl(phenyl)silandiylbis(2-methyl-4,5-(methylbenzo)-indenyl)zirkoniumdi-chlorid,
Methyl(phenyl)silandiylbis(2-methyl-4,5-(tetramethylbenzo)-indenyl)zirkoniumdichlorid,
Methyl(phenyl)silandiylbis(2-methyl-4--acenaphth-indenyl)zirkoniumdichlorid,
Methyl(phenyl)silandiylbis(2-methyl-indenyl)zirkoniumdichlorid,
Methyl(phenyl)silandiylbis(2-methyl-5-isobutyl-indenyl)zirkoniumdichlorid,
1,2-Ethandiylbis(2-methyl-4-phenyl-indenyl)zirkoniumdichlorid,
1,4-Butandiylbis(2-methyl-4-phenyl-indenyl)zirkoniumdichlorid,
1,2-Ethandiylbis(2-methyl-4,6 diisopropyl-indenyl)zirkoniumdichlorid,
1,4-Butandiylbis(2-methyl-4-isopropyl-indenyl)zirkoniumdichlorid,
1,4-Butandiylbis(2-methyl-4,5-benzo-indenyl)zirkoniumdichlorid,
1,2-Ethandiylbis(2-methyl-4,5-benzo-indenyl)zirkoniumdichlorid,
1,2-Ethandiylbis(2,4,7-trimethyl-indenyl)zirkoniumdichlorid,
1,2-Ethandiylbis(2-methyl-indenyl)zirkoniumdichlorid,
1,4-Butandiylbis(2-methyl-indenyl)zirkoniumdichlorid,
[4-($0^5$-Cyclopentadienyl)-4,6,6-trimethyl-($0^5$-4,5-tetrahydropentalen)]-dichlorozirconium,
[4-($0^5$ -3'-Trimethylsilyl-cyclopentadienyl)-4,6,6-trimethyl-($0^5$ -4,5-tetrahydropentalen)]-dichlorozirconium,
[4-($0^5$-3'-Isopropyl-cyclopentadienyl)-4,6,6-trimethyl-($0^5$-4,5-tetrahydropentalen)]-dichlorozirconium,
[4-($0^5$-Cyclopentadienyl)-4,7,7-trimethyl-($0^5$-4,5,6,7-tetrahydroindenyl)]-dichlorotitan,
[4-($0^5$-Cyclopentadienyl)-4,7,7-trimethyl-($0^5$-4,5,6,7-tetrahydroindenyl)]-dichlorozirkonium,
[4-($0^5$-Cyclopentadienyl)-4,7,7-trimethyl-($0^5$-4,5,6,7-tetrahydroindenyl)]-dichlorohafnium,
[4-($0^5$-3=-tert.Butyl-cyclopentadienyl)-4,7,7-trimethyl-($0^5$-4,5,6,7-tetrahydroindenyl)]-dichlorotitan,
4-($0^5$-3=-Isopropylcyclopentadienyl)-4,7,7-trimethyl-($0^5$-4,5,6,7-tetrahydroindenyl)]-dichlorotitan,
4-($0^5$-3=-Methylcyclopentadienyl)-4,7,7-trimethyl-($0^5$-4,5,6,7-tetrahydroindenyl)]-dichlorotitan,
4-($0^5$-3=-Trimethylsilyl-cyclopentadienyl)-2-trimethylsilyl-4,7,7-trimethyl-($0^5$-4,5,6,7-tetrahydroindenyl)]-dichlorotitan,
4-($0^5$-3=-tert.Butyl-cyclopentadienyl)-4,7,7-trimethyl-($0^5$-4,5,6,7-tetrahydroindenyl)]-dichlorozirkonium,
(Tertbutylamido)-(tetramethyl-$0^5$-cyclopentadienyl)-dimethylsilyl-dichlorotitan,
(Tertbutylamido)-(tetramethyl-$0^5$-cyclopentadienyl)-1,2-ethandiyl-dichlorotitandichlorotitan,
(Methylamido)-(tetramethyl-$0^5$-cyclopentadienyl)-dimethylsilyl-dichlorotitan,
(Methylamido)-(tetramethyl-$0^5$-cyclopentadienyl)-1,2-ethandiyl-dichlorotitan,
(Tertbutylamido)-(2,4-dimethyl-2,4-pentadien-1-yl)-dimethylsilyl-dichlorotitan,
Bis-(cyclopentadienyl)-zirkoniumdichlorid,
Bis-(n-butylcyclopentadienyl)-zirkoniumdichlorid,
Bis-(1,3-dimethylcyclopentadienyl)-zirkoniumdichlorid,
Tetrachloro-[1-[bis($0^5$-1H-inden-1-yliden)methylsilyl]-3-$0^5$-cyclopenta-2,4-dien-1-yliden)-3-$0^5$-9H-fluoren-9-yliden)butan]di-zirkonium,
Tetrachloro-[2-[bis($0^5$-2-methyl-1H-inden-1-yliden)methoxysilyl]-5-($0^5$-2,3,4,5-tetramethylcyclopenta-2,4-dien-1-yliden)-5-($0^5$-9H-fluoren-9-yliden)hexan]dizirkonium,
Tetrachloro-[1-[bis($0^5$-1H-inden-1-yliden)methylsilyl]6-($0^5$-cyclopenta-2,4-dien-1-yliden)-6-($0^5$-9H-fluoren-9-yliden)-3-oxaheptan]di-zirkonium,
Dimethylsilandiylbis(2-methyl-4-(4'-tert-butyl-phenyl-indenyl)zirkoniumdichlorid
Dimethylsilandiylbis(2-methyl-4-(4'-methyl-phenyl-indenyl)zirkoniumdichlorid
Dimethylsilandiylbis(2-methyl-4-(4'-ethyl-phenyl-indenyl)zirkoniumdichlorid
Dimethylsilandiylbis(2-methyl-4-(4'-trifluormethyl-phenyl-indenyl)zirkoniumdichlorid
Dimethylsilandiylbis(2-methyl-4-(4'-methoxy-phenyl-indenyl)zirkoniumdichlorid
Dimethylsilandiylbis(2-ethyl-4-(4'-tert-butyl-phenyl-indenyl)zirkoniumdichlorid
Dimethylsilandiylbis(2-ethyl-4-(4'-methyl-phenyl-indenyl)zirkoniumdichlorid
Dimethylsilandiylbis(2-ethyl-4-(4'-ethyl-phenyl-indenyl)zirkoniumdichlorid
Dimethylsilandiylbis(2-ethyl-4-(4'-trifluormethyl-phenyl-indenyl)zirkoniumdichlorid
Dimethylsilandiylbis(2-ethyl-4-(4'-methoxy-phenyl-indenyl)zirkoniumdichlorid

Dimethylsilandiylbis(2-methyl-4-(4'-tert-butyl-phenyl-indenyl)zirkoniumdimethyl
Dimethylsilandiylbis(2-methyl-4-(4'-methyl-phenyl-indenyl)zirkoniumdimethyl
Dimethylsilandiylbis(2-methyl-4-(4'-ethyl-phenyl-indenyl)zirkoniumdimethyl
Dimethylsilandiylbis(2-methyl-4-(4'-trifluormethyl-phenyl-indenyl)zirkoniumdimethyl
Dimethylsilandiylbis(2-methyl-4-(4'-methoxy-phenyl-indenyl)zirkoniumdimethyl
Dimethylsilandiylbis(2-ethyl-4-(4'-tert-butyl-phenyl-indenyl)zirkoniumdimethyl
Dimethylsilandiylbis(2-ethyl-4-(4'-methyl-phenyl-indenyl)zirkoniumdimethyl
Dimethylsilandiylbis(2-ethyl-4-(4'-ethyl-phenyl-indenyl)zirkoniumdimethyl
Dimethylsilandiylbis(2-ethyl-4-(4'-trifluormethyl-phenyl-indenyl)zirkoniumdimethyl
Dimethylsilandiylbis(2-ethyl-4-(4'-methoxy-phenyl-indenyl)zirkoniumdimethyl
Dimethylsilandiylbis(2-methyl-4-(4'-trimethylsilyl-phenyl-indenyl)zirkoniumdichlorid
Dimethylsilandiylbis(2-methyl-4-(4'-trimethylsilyl-phenyl-indenyl)zirkoniumdimethyl
Dimethylsilandiylbis(2-ethyl-4-(4'-trimethylsilyl-phenyl-indenyl)zirkoniumdichlorid
Dimethylsilandiylbis(2-ethyl-4-(4'-trimethylsilyl-phenyl-indenyl)zirkoniumdimethyl
Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl)titandichlorid
Dimethylsilandiylbis(2-methyl-4-(4'-methyl-phenyl)-indenyl)zirkoniumdichlorid
Dimethylsilandiylbis(2-methyl-4-(4'-n-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiytbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid

Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4--phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl )-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid
Dimethylsilandiyl(2-methyl-4-azapentalen)(2-methyl-4-(4'-methylphenyl-indenyl) zirkoniumdichlorid
Dimethylsilandiyl(2-methyl-5-azapentalen)(2-methyl-4-(4'-methylphenyl-indenyl) zirkoniumdichlorid
Dimethylsilandiyl(2-methyl-6-azapentalen)(2-methyl-4-(4'-methylphenyl-indenyl) zirkoniumdichlorid
Dimethylsilandiyl(2-methyl-N-phenyl-4-azapentalen)(2-methyl-4-(4'-methylphenylindenyl) zirkoniumdichlorid
Dimethylsilandiyl(2-methyl-N-phenyl-5-azapentalen)(2-methyl-4-(4'-methylphenylindenyl) zirkoniumdichlorid
Dimethylsilandiyl(2-methyl-N-phenyl-6-azapentalen)(2-methyl-4-(4'-methylphenylindenyl) zirkoniumdichlorid
Dimethylsilandiyl(2,5-dimethyl-4-azapentalen )(2-methyl-4-(4'-methylphenyl-indenyl) zirkoniumdichlorid
Dimethylsilandiyl(2,5-dimethyl-6-azapentalen)(2-methyl-4-(4'-methylphenyl-indenyl) zirkoniumdichlorid
Dimethylsilandiyl(2,5-dimethyl-N-phenyl-4-azapentalen)(2-methyl-4-(4'methylphenyl-indenyl) zirkoniumdichlorid
Dimethylsilandiyl(2,5-dimethyl-N-phenyl-6-azapentalen)(2-methyl-4-(4'methylphenyl-indenyl) zirkoniumdichlorid
Dimethylsilandiyl(2-methyl-4-thiapentalen)(2-methyl-4-(4'-methylphenylindenyl)zirkoniumdichlorid
Dimethylsilandiyl(2-methyl-5-thiapentalen)(2-methyl-4-(4'-methylphenylindenyl)zirkoniumdichlorid
Dimethylsilandiyl(2-methyl-6-thiapentalen)(2-methyl-4-(4'-methylphenylindenyl)zirkoniumdichlorid
Dimethylsilandiyl(2,5-dimethyl-4-thiapentalen)(2-methyl-4-(4'-methylphenyl-indenyl) zirkoniumdichlorid
Dimethylsilandiyl(2,5-dimethyl-6-thiapentalen)(2-methyl-4-(4'-methylphenyl-indenyl) zirkoniumdichlorid
Dimethylsilandiyl(2-methyl-4-oxapentalen)(2-methyl-4-(4'-methylphenylindenyl)zirkoniumdichlorid
Dimethylsilandiyl(2-methyl-5-oxapentalen)(2-methyl-4-(4'-methylphenylindenyl)zirkoniumdichlorid
Dimethylsilandiyl(2-methyl-6-oxapentalen)(2-methyl-4-(4'-methylphenylindenyl )zirkoniumdichlorid
Dimethylsilandiyl(2,5-dimethyl-4-oxapentalen)(2-methyl-4-(4'-methylphenyl-indenyl) zirkoniumdichlorid
Dimethylsilandiyl(2,5-dimethyl-6-oxapentalen)(2-methyl-4-(4'-methylphenyl-indenyl) zirkoniumdichlorid
Dimethylsilandiyl(2-methyl-4-azapentalen)(2-methyl-4-(4'-ethylphenyl-indenyl) zirkoniumdichlorid
Dimethylsilandiyl(2-methyl-5-azapentalen)(2-methyl-4-(4'-ethylphenyl-indenyl) zirkoniumdichlorid
Dimethylsilandiyl(2-methyl-6-azapentalen)(2-methyl-4-(4'-ethylphenyl-indenyl) zirkoniumdichlorid
Dimethylsilandiyl(2-methyl-N-phenyl-4-azapentalen)(2-methyl-4-(4'-ethylphenylindenyl) zirkoniumdichlorid
Dimethylsilandiyl(2-methyl-N-phenyl-5-azapentalen)(2-methyl-4-(4'-ethylphenylindenyl) zirkoniumdichlorid
Dimethylsilandiyl(2-methyl-N-phenyl-6-azapentalen)(2-methyl-4-(4'-ethylphenylindenyl) zirkoniumdichlorid
Dimethylsilandiyl(2,5-dimethyl-4-azapentalen)(2-methyl-4-(4'-ethylphenyl-indenyl) zirkoniumdichlorid
Dimethylsilandiyl(2,5-dimethyl-6-azapentalen)(2-methyl-4-(4'-ethylphenyl-indenyl) zirkoniumdichlorid
Dimethylsilandiyl(2,5-dimethyl-N-phenyl-4-azapentalen)(2-methyl-4-(4'-ethylphenylindenyl) zirkoniumdichlorid
Dimethylsilandiyl(2,5-dimethyl-N-phenyl-6-azapentalen)(2-methyl-4-(4'-ethylphenylindenyl) zirkoniumdichlorid
Dimethylsilandiyl(2-methyl-4-thiapentalen)(2-methyl-4-(4'-ethylphenylindenyl)zirkoniumdichlorid
Dimethylsilandiyl(2-methyl-5-thiapentalen)(2-methyl-4-(4'-ethylphenylindenyl)zirkoniumdichlorid

Dimethylsilandiyl(2-methyl-6-thiapentalen)(2-methyl-4-(4'-ethylphenylindenyl)zirkoniumdichlorid
Dimethylsilandiyl(2,5-dimethyl-4-thiapentalen)(2-methyl-4-(4'-ethylphenyl-indenyl) zirkoniumdichlorid
Dimethylsilandiyl(2,5-dimethyl-6-thiapentalen)(2-methyl-4-(4'-ethylphenyl-indenyl) zirkoniumdichlorid
Dimethylsilandiyl(2-methyl-4-oxapentalen)(2-methyl-4-(4'-ethylphenylindenyl)zirkoniumdichlorid
Dimethylsilandiyl(2-methyl-5-oxapentalen)(2-methyl-4-(4'-ethylphenylindenyl)zirkoniumdichlorid
Dimethylsilandiyl(2-methyl-6-oxapentalen)(2-methyl-4-(4'-ethylphenylindenyl)zirkoniumdichlorid
Dimethylsilandiyl(2,5-dimethyl-4-oxapentalen)(2-methyl-4-(4'-ethylphenyl-indenyl) zirkoniumdichlorid
Dimethylsilandiyl(2,5-dimethyl-6-oxapentalen)(2-methyl-4-(4'-ethylphenyl-indenyl) zirkoniumdichlorid
Dimethylsilandiyl(2-methyl-4-azapentalen)(2-methyl-4-(4'-n-propylphenyl-indenyl) zirkoniumdichlorid
Dimethylsilandiyl(2-methyl-5-azapentalen)(2-methyl-4-(4'-n-propylphenyl-indenyl) zirkoniumdichlorid
Dimethylsilandiyl(2-methyl-6-azapentalen)(2-methyl-4-(4'-n-propylphenyl-indenyl) zirkoniumdichlorid
Dimethylsilandiyl(2-methyl-N-phenyl-4-azapentalen)(2-methyl-4-(4'-n-propylphenylindenyl) zirkoniumdichlorid
Dimethylsilandiyl(2-methyl-N-phenyl-5-azapentalen)(2-methyl-4-(4'-n-propylphenylindenyl) zirkoniumdichlorid
Dimethylsilandiyl(2-methyl-N-phenyl-6-azapentalen)(2-methyl-4-(4'-n-propylphenylindenyl) zirkoniumdichlorid
Dimethylsilandiyl(2,5-dimethyl-4-azapentalen)(2-methyl-4-(4'-n-propylphenylindenyl) zirkoniumdichlorid
Dimethylsilandiyl(2,5-dimethyl-6-azapentalen)(2-methyl-4-(4'-n-propylphenylindenyl) zirkoniumdichlorid
Dimethylsilandiyl(2,5-dimethyl-N-phenyl-4-azapentalen)(2-methyl-4-(4'-npropylphenyl-indenyl) zirkoniumdichlorid
Dimethylsilandiyl(2,5-dimethyl-N-phenyl-6-azapentalen)(2-methyl-4-(4'-npropylphenyl-indenyl) zirkoniumdichlorid
Dimethylsilandiyl(2-methyl-4-thiapentalen)(2-methyl-4-(4'-n-propylphenylindenyl)zirkoniumdichlorid
Dimethylsilandiyl(2-methyl-5-thiapentalen)(2-methyl-4-(4'-n-propylphenylindenyl)zirkoniumdichlorid
Dimethylsilandiyl(2-methyl-6-thiapentalen)(2-methyl-4-(4'-n-propylphenylindenyl)zirkoniumdichlorid
Dimethylsilandiyl(2,5-dimethyl-4-thiapentalen)(2-methyl-4-(4'-n-propylphenylindenyl) zirkoniumdichlorid
Dimethylsilandiyl(2,5-dimethyl-6-thiapentalen)(2-methyl-4-(4'-n-propylphenylindenyl) zirkoniumdichlorid
Dimethylsilandiyl(2-methyl-4-oxapentalen)(2-methyl-4-(4'-n-propylphenylindenyl)zirkoniumdichlorid
Dimethylsilandiyl(2-methyl-5-oxapentalen)(2-methyl-4-(4'-n-propylphenylindenyl)zirkoniumdichlorid
Dimethylsilandiyl(2-methyl-6-oxapentalen)(2-methyl-4-(4'-n-propylphenylindenyl)zirkoniumdichlorid
Dimethylsilandiyl(2,5-dimethyl-4-oxapentalen)(2-methyl-4-(4'-n-propylphenylindenyl) zirkoniumdichlorid
Dimethylsilandiyl(2,5-dimethyl-6-oxapentalen)(2-methyl-4-(4'-n-propylphenylindenyl) zirkoniumdichlorid
Dimethylsilandiyl(2-methyl-4-azapentalen)(2-methyl-4-(4'-isopropylphenyl-indenyl) zirkoniumdichlorid
Dimethylsilandiyl(2-methyl-5-azapentalen)(2-methyl-4-(4'-isopropylphenyl-indenyl) zirkoniumdichlorid
Dimethylsilandiyl(2-methyl-6-azapentalen)(2-methyl-4-(4'-isopropylphenyl-indenyl) zirkoniumdichlorid
Dimethylsilandiyl(2-methyl-N-phenyl-4-azapentalen)(2-methyl-4-(4'-isopropylphenylindenyl) zirkoniumdichlorid
Dimethylsilandiyl(2-methyl-N-phenyl-5-azapentalen)(2-methyl-4-(4'-isopropylphenylindenyl) zirkoniumdichlorid
Dimethylsilandiyl(2-methyl-N-phenyl-6-azapentalen)(2-methyl-4-(4'-isopropylphenylindenyl) zirkoniumdichlorid
Dimethylsilandiyl(2,5-dimethyl-4-azapentalen)(2-methyl-4-(4'-isopropylphenylindenyl) zirkoniumdichlorid
Dimethylsilandiyl(2,5-dimethyl-6-azapentalen)(2-methyl-4-(4'-isopropylphenylindenyl) zirkoniumdichlorid
Dimethylsilandiyl(2,5-dimethyl-N-phenyl-4-azapentalen)(2-methyl-4-(4'isopropylphenyl-indenyl) zirkoniumdichlorid
Dimethylsilandiyl(2,5-dimethyl-N-phenyl-6-azapentalen)(2-methyl-4-(4'isopropylphenyl-indenyl) zirkoniumdichlorid
Dimethylsilandiyl(2-methyl-4-thiapentalen)(2-methyl-4-(4'-isopropylphenylindenyl)zirkoniumdichlorid
Dimethylsilandiyl(2-methyl-5-thiapentalen)(2-methyl-4-(4'-isopropylphenylindenyl)zirkoniumdichlorid
Dimethylsilandiyl(2-methyl-6-thiapentalen)(2-methyl-4-(4'-isopropylphenylindenyl)zirkoniumdichlorid
Dimethylsilandiyl(2,5-dimethyl-4-thiapentalen)(2-methyl-4-(4'-isopropylphenylindenyl) zirkoniumdichlorid
Dimethylsilandiyl(2,5-dimethyl-6-thiapentalen)(2-methyl-4-(4'-isopropylphenylindenyl) zirkoniumdichlorid
Dimethylsilandiyl(2-methyl-4-oxapentalen)(2-methyl-4-(4'-isopropylphenylindenyl)zirkoniumdichlorid
Dimethylsilandiyl(2-methyl-5-oxapentalen)(2-methyl-4-(4'-isopropylphenylindenyl)zirkoniumdichlorid
Dimethylsilandiyl(2-methyl-6-oxapentalen)(2-methyl-4-(4'-isopropylphenylindenyl)zirkoniumdichlorid
Dimethylsilandiyl(2,5-dimethyl-4-oxapentalen)(2-methyl-4-(4'-isopropylphenylindenyl) zirkoniumdichlorid
Dimethylsilandiyl(2,5-dimethyl-6-oxapentalen)(2-methyl-4-(4'-isopropylphenylindenyl) zirkoniumdichlorid
Dimethylsilandiyl(2-methyl-4-azapentalen)(2-methyl-4-(4'-n-butylphenyl-indenyl) zirkoniumdichlorid
Dimethylsilandiyl(2-methyl-5-azapentalen)(2-methyl-4-(4'-n-butylphenyl-indenyl) zirkoniumdichlorid
Dimethylsilandiyl(2-methyl-6-azapentalen)(2-methyl-4-(4'-n-butylphenyl-indenyl) zirkoniumdichlorid
Dimethylsilandiyl(2-methyl-N-phenyl-4-azapentalen)(2-methyl-4-(4'-n-butylphenylindenyl) zirkoniumdichlorid
Dimethylsilandiyl(2-methyl-N-phenyl-5-azapentalen)(2-methyl-4-(4'-n-butylphenylindenyl) zirkoniumdichlorid
Dimethylsilandiyl(2-methyl-N-phenyl-6-azapentalen)(2-methyl-4-(4'-n-butylphenylindenyl) zirkoniumdichlorid

Dimethylsilandiyl(2,5-dimethyl-4-azapentalen)(2-methyl-4-(4'-n-butylphenyl-indenyl) zirkoniumdichlorid
Dimethylsilandiyl(2,5-dimethyl-6-azapentalen)(2-methyl-4-(4'-n-butylphenyl-indenyl) zirkoniumdichlorid
Dimethylsilandiyl(2,5-dimethyl-N-phenyl-4-azapentalen)(2-methyl-4-(4'-nbutylphenyl-indenyl) zirkoniumdichlorid
Dimethylsilandiyl(2,5-dimethyl-N-phenyl-6-azapentalen)(2-methyl-4-(4'-nbutylphenyl-indenyl) zirkoniumdichlorid
Dimethylsilandiyl(2-methyl-4-thiapentalen)(2-methyl-4-(4'-n-butylphenylindenyl)zirkoniumdichlorid
Dimethylsilandiyl(2-methyl-5-thiapentalen)(2-methyl-4-(4'-n-butylphenylindenyl)zirkoniumdichlorid
Dimethylsilandiyl(2-methyl-6-thiapentalen)(2-methyl-4-(4'-n-butylphenylindenyl)zirkoniumdichlorid
Dimethylsilandiyl(2,5-dimethyl-4-thiapentalen)(2-methyl-4-(4'-n-butylphenyl-indenyl) zirkoniumdichlorid
Dimethylsilandiyl(2,5-dimethyl-6-thiapentalen)(2-methyl-4-(4'-n-butylphenyl-indenyl) zirkoniumdichlorid
Dimethylsilandiyl(2-methyl-4-oxapentalen)(2-methyl-4-(4'-n-butylphenylindenyl)zirkoniumdichlorid
Dimethylsilandiyl(2-methyl-5-oxapentalen)(2-methyl-4-(4'-n-butylphenylindenyl)zirkoniumdichlorid
Dimethylsilandiyl(2-methyl-6-oxapentalen)(2-methyl-4-(4'-n-butylphenylindenyl)zirkoniumdichlorid
Dimethylsilandiyl(2,5-dimethyl-4-oxapentalen)(2-methyl-4-(4'-n-butylphenyl-indenyl) zirkoniumdichlorid
Dimethylsilandiyl(2,5-dimethyl-6-oxapentalen)(2-methyl-4-(4'-n-butylphenyl-indenyl) zirkoniumdichlorid
Dimethylsilandiyl(2-methyl-4-azapentalen)(2-methyl-4-(4'-s-butylphenyl-indenyl) zirkoniumdichlorid
Dimethylsilandiyl(2-methyl-5-azapentalen)(2-methyl-4-(4'-s-butylphenyl-indenyl) zirkoniumdichlorid
Dimethylsilandiyl(2-methyl-6-azapentalen)(2-methyl-4-(4'-s-butylphenyl-indenyl) zirkoniumdichlorid
Dimethylsilandiyl(2-methyl-N-phenyl-4-azapentalen)(2-methyl-4-(4'-s-butylphenylindenyl) zirkoniumdichlorid
Dimethylsilandiyl(2-methyl-N-phenyl-5-azapentalen)(2-methyl-4-(4'-s-butylphenylindenyl) zirkoniumdichlorid
Dimethylsilandiyl(2-methyl-N-phenyl-6-azapentalen)(2-methyl-4-(4'-s-butylphenylindenyl) zirkoniumdichlorid
Dimethylsilandiyl(2,5-dimethyl-4-azapentalen)(2-methyl-4-(4'-s-butylphenyl-indenyl) zirkoniumdichlorid
Dimethylsilandiyl(2,5-dimethyl-6-azapentalen)(2-methyl-4-(4'-s-butylphenyl-indenyl) zirkoniumdichlorid
Dimethylsilandiyl(2,5-dimethyl-N-phenyl-4-azapentalen)(2-methyl-4-(4'-sbutylphenyl-indenyl) zirkoniumdichlorid
Dimethylsilandiyl(2,5-dimethyl-N-phenyl-6-azapentalen)(2-methyl-4-(4'-sbutylphenyl-indenyl) zirkoniumdichlorid
Dimethylsilandiyl(2-methyl-4-thiapentalen)(2-methyl-4-(4'-s-butylphenylindenyl)zirkoniumdichlorid
Dimethylsilandiyl(2-methyl-5-thiapentalen)(2-methyl-4-(4'-s-butylphenylindenyl)zirkoniumdichlorid
Dimethylsilandiyl(2-methyl-6-thiapentalen)(2-methyl-4-(4'-s-butylphenylindenyl)zirkoniumdichlorid
Dimethylsilandiyl(2,5-dimethyl-4-thiapentalen)(2-methyl-4-(4'-s-butylphenyl-indenyl) zirkoniumdichlorid
Dimethylsilandiyl(2,5-dimethyl-6-thiapentalen)(2-methyl-4-(4'-s-butylphenyl-indenyl) zirkoniumdichlorid
Dimethylsilandiyl(2-methyl-4-oxapentalen)(2-methyl-4-(4'-s-butylphenylindenyl)zirkoniumdichlorid
Dimethylsilandiyl(2-methyl-5-oxapentalen)(2-methyl-4-(4'-s-butylphenylindenyl)zirkoniumdichlorid
Dimethylsilandiyl(2-methyl-6-oxapentalen)(2-methyl-4-(4'-s-butylphenylindenyl)zirkoniumdichlorid
Dimethylsilandiyl(2,5-dimethyl-4-oxapentalen)(2-methyl-4-(4'-s-butylphenyl-indenyl) zirkoniumdichlorid
Dimethylsilandiyl(2,5-dimethyl-6-oxapentalen)(2-methyl-4-(4'-s-butylphenyl-indenyl) zirkoniumdichlorid
Dimethylsilandiyl(2-methyl-4-azapentalen)(2-methyl-4-(4'-tert-butylphenyl-indenyl) zirkoniumdichlorid
Dimethylsilandiyl(2-methyl-5-azapentalen)(2-methyl-4-(4'-tert-butylphenyl-indenyl) zirkoniumdichlorid
Dimethylsilandiyl(2-methyl-6-azapentalen)(2-methyl-4-(4'-tert-butylphenyl-indenyl) zirkoniumdichlorid
Dimethylsilandiyl(2-methyl-N-phenyl-4-azapentalen)(2-methyl-4-(4'-tert-butylphenylindenyl) zirkoniumdichlorid
Dimethylsilandiyl(2-methyl-N-phenyl-5-azapentalen)(2-methyl-4-(4'-tert-butylphenylindenyl) zirkoniumdichlorid
Dimethylsilandiyl(2-methyl-N-phenyl-6-azapentalen)(2-methyl-4-(4'-tert-butylphenylindenyl) zirkoniumdichlorid
Dimethylsilandiyl(2,5-dimethyl-4-azapentalen)(2-methyl-4-(4'-tert-butylphenylindenyl) zirkoniumdichlorid
Dimethylsilandiyl(2,5-dimethyl-6-azapentalen)(2-methyl-4-(4'-tert-butylphenylindenyl) zirkoniumdichlorid
Dimethylsilandiyl(2,5-dimethyl-N-phenyl-4-azapentalen)(2-methyl-4-(4'-tertbutylphenyl-indenyl) zirkoniumdichlorid
Dimethylsilandiyl(2,5-dimethyl-N-phenyl-6-azapentalen)(2-methyl-4-(4'-tertbutylphenyl-indenyl) zirkoniumdichlorid
Dimethylsilandiyl(2-methyl-4-thiapentalen)(2-methyl-4-(4'-tert-butylphenylindenyl)zirkoniumdichlorid
Dimethylsilandiyl(2-methyl-5-thiapentalen)(2-methyl-4-(4'-tert-butylphenylindenyl)zirkoniumdichlorid
Dimethylsilandiyl(2-methyl-6-thiapentalen)(2-methyl-4-(4'-tert-butylphenylindenyl)zirkoniumdichlorid
Dimethylsilandiyl(2,5-dimethyl-4-thiapentalen)(2-methyl-4-(4'-tert-butylphenylindenyl) zirkoniumdichlorid
Dimethylsilandiyl(2,5-dimethyl-6-thiapentalen)(2-methyl-4-(4'-tert-butylphenylindenyl) zirkoniumdichlorid
Dimethylsilandiyl(2-methyl-4-oxapentalen)(2-methyl-4-(4'-tert-butylphenylindenyl)zirkoniumdichlorid
Dimethylsilandiyl(2-methyl-5-oxapentalen)(2-methyl-4-(4'-tert-butylphenylindenyl)zirkoniumdichlorid
Dimethylsilandiyl(2-methyl-6-oxapentalen)(2-methyl-4-(4'-tert-butylphenylindenyl)zirkoniumdichlorid
Dimethylsilandiyl(2,5-dimethyl-4-oxapentalen)(2-methyl-4-(4'-tert-butylphenylindenyl) zirkoniumdichlorid
Dimethylsilandiyl(2,5-dimethyl-6-oxapentalen)(2-methyl-4-(4'-tert-butylphenylindenyl) zirkoniumdichlorid
Dimethylsilandiyl(2-methyl-4-azapentalen)(2-methyl-4-(4'-n-pentylphenyl-indenyl) zirkoniumdichlorid
Dimethylsilandiyl(2-methyl-5-azapentalen)(2-methyl-4-(4'-n-pentylphenyl-indenyl) zirkoniumdichlorid

Dimethylsilandiyl(2-methyl-6-azapentalen)(2-methyl-4-(4'-n-pentylphenyl-indenyl) zirkoniumdichlorid
Dimethylsilandiyl(2-methyl-N-phenyl-4-azapentalen)(2-methyl-4-(4'-n-pentylphenylindenyl) zirkoniumdichlorid
Dimethylsilandiyl(2-methyl-N-phenyl-5-azapentalen)(2-methyl-4-(4'-n-pentylphenylindenyl) zirkoniumdichlorid
Dimethylsilandiyl(2-methyl-N-phenyl-6-azapentalen)(2-methyl-4-(4'-n-pentylphenylindenyl) zirkoniumdichlorid
Dimethylsilandiyl(2,5-dimethyl-4-azapentalen)(2-methyl-4-(4'-n-pentylphenyl-indenyl) zirkoniumdichlorid
Dimethylsilandiyl(2,5-dimethyl-6-azapentalen)(2-methyl-4-(4'-n-pentylphenyl-indenyl) zirkoniumdichlorid
Dimethylsilandiyl(2,5-dimethyl-N-phenyl-4-azapentalen)(2-methyl-4-(4'-npentylphenyl-indenyl) zirkoniumdichlorid
Dimethylsilandiyl(2,5-dimethyl-N-phenyl-6-azapentalen)(2-methyl-4-(4'-npentylphenyl-indenyl) zirkoniumdichlorid
Dimethylsilandiyl(2-methyl-4-thiapentalen )(2-methyl-4-(4'-n-pentylphenylindenyl)zirkoniumdichlorid
Dimethylsilandiyl(2-methyl-5-thiapentalen)(2-methyl-4-(4'-n-pentylphenylindenyl)zirkoniumdichlorid
Dimethylsilandiyl(2-methyl-6-thiapentalen)(2-methyl-4-(4'-n-pentylphenylindenyl)zirkoniumdichlorid
Dimethylsilandiyl(2,5-dimethyl-4-thiapentalen)(2-methyl-4-(4'-n-pentylphenyl-indenyl) zirkoniumdichlorid
Dimethylsilandiyl(2,5-dimethyl-6-thiapentalen)(2-methyl-4-(4'-n-pentylphenyl-indenyl) zirkoniumdichlorid
Dimethylsilandiyl(2-methyl-4-oxapentalen)(2-methyl-4-(4'-n-pentylphenylindenyl)zirkoniumdichlorid
Dimethylsitandiyl(2-methyl-5-oxapentalen)(2-methyl-4-(4'-n-pentylphenylindenyl)zirkoniumdichlorid
Dimethylsilandiyl(2-methyl-6-oxapentalen)(2-methyl-4-(4'-n-pentylphenylindenyl)zirkoniumdichlorid
Dimethylsilandiyl(2,5-dimethyl-4-oxapentalen)(2-methyl-4-(4'-n-pentylphenyl-indenyl) zirkoniumdichlorid
Dimethylsilandiyl(2,5-dimethyl-6-oxapentalen)(2-methyl-4-(4'-n-pentylphenyl-indenyl) zirkoniumdichlorid
Dimethylsilandiyl(2-methyl-4-azapentalen)(2-methyl-4-(4'-n-hexylphenyl-indenyl) zirkoniumdichlorid
Dimethylsilandiyl(2-methyl-5-azapentalen)(2-methyl-4-(4'-n-hexylphenyl-indenyl) zirkoniumdichlorid
Dimethylsilandiyl(2-methyl-6-azapentalen)(2-methyl-4-(4'-n-hexylphenyl-indenyl) zirkoniumdichlorid
Dimethylsilandiyl(2-methyl-N-phenyl-4-azapentalen)(2-methyl-4-(4'-n-hexylphenylindenyl) zirkoniumdichlorid
Dimethylsilandiyl(2-methyl-N-phenyl-5-azapentalen)(2-methyl-4-(4'-n-hexylphenylindenyl) zirkoniumdichlorid
Dimethylsilandiyl(2-methyl-N-phenyl-6-azapentalen)(2-methyl-4-(4'-n-hexylphenylindenyl) zirkoniumdichlorid
Dimethylsilandiyl(2,5-dimethyl-4-azapentalen)(2-methyl-4-(4'-n-hexylphenyl-indenyl) zirkoniumdichlorid
Dimethylsilandiyl(2,5-dimethyl-6-azapentalen)(2-methyl-4-(4'-n-hexylphenyl-indenyl) zirkoniumdichlorid
Dimethylsilandiyl(2,5-dimethyl-N-phenyl-4-azapentalen)(2-methyl-4-(4'-nhexylphenyl-indenyl) zirkoniumdichlorid
Dimethylsilandiyl(2,5-dimethyl-N-phenyl-6-azapentalen)(2-methyl-4-(4'-nhexylphenyl-indenyl) zirkoniumdichlorid
Dimethylsilandiyl(2-methyl-4-thiapentalen)(2-methyl-4-(4'-n-hexylphenylindenyl)zirkoniumdichlorid
Dimethylsilandiyl(2-methyl-5-thiapentalen)(2-methyl-4-(4'-n-hexylphenylindenyl)zirkoniumdichlorid
Dimethylsilandiyl(2-methyl-6-thiapentalen)(2-methyl-4-(4'-n-hexylphenylindenyl)zirkoniumdichlorid
Dimethylsilandiyl(2,5-dimethyl-4-thiapentalen)(2-methyl-4-(4'-n-hexylphenyl-indenyl) zirkoniumdichlorid
Dimethylsilandiyl(2,5-dimethyl-6-thiapentalen)(2-methyl-4-(4'-n-hexylphenyl-indenyl) zirkoniumdichlorid
Dimethylsilandiyl(2-methyl-4-oxapentalen)(2-methyl-4-(4'-n-hexylphenylindenyl)zirkoniumdichlorid
Dimethylsilandiyl(2-methyl-5-oxapentalen)(2-methyl-4-(4'-n-hexylphenylindenyl)zirkoniumdichlorid
Dimethylsilandiyl(2-methyl-6-oxapentalen)(2-methyl-4-(4'-n-hexylphenylindenyl)zirkoniumdichlorid
Dimethylsilandiyl(2,5-dimethyl-4-oxapentalen)(2-methyl-4-(4'-n-hexylphenyl-indenyl) zirkoniumdichlorid
Dimethylsilandiyl(2,5-dimethyl-6-oxapentalen)(2-methyl-4-(4'-n-hexylphenyl-indenyl) zirkoniumdichlorid
Dimethylsilandiyl(2-methyl-4-azapentalen)(2-methyl-4-(4'-cyclohexylphenyl-indenyl) zirkoniumdichlorid
Dimethylsilandiyl(2-methyl-5-azapentalen)(2-methyl-4-(4'-cyclohexylphenyl-indenyl) zirkoniumdichlorid
Dimethylsilandiyl(2-methyl-6-azapentalen)(2-methyl-4-(4'-cyclohexylphenyl-indenyl) zirkoniumdichlorid
Dimethylsilandiyl(2-methyl-N-phenyl-4-azapentalen)(2-methyl-4-(4'cyclohexylphenyl-indenyl) zirkoniumdichlorid
Dimethylsilandiyl(2-methyl-N-phenyl-5-azapentalen)(2-methyl-4-(4'cyclohexylphenyl-indenyl) zirkoniumdichlorid
Dimethylsilandiyl(2-methyl-N-phenyl-6-azapentalen)(2-methyl-4-(4'cyclohexylphenyl-indenyl) zirkoniumdichlorid
Dimethylsilandiyl(2,5-dimethyl-4-azapentalen)(2-methyl-4-(4'-cyclohexylphenylindenyl) zirkoniumdichlorid
Dimethylsilandiyl(2,5-dimethyl-6-azapentalen)(2-methyl-4-(4'-cyclohexylphenylindenyl) zirkoniumdichlorid
Dimethylsilandiyl(2,5-dimethyl-N-phenyl-4-azapentalen)(2-methyl-4-(4'cyclohexylphenyl-indenyl) zirkoniumdichlorid
Dimethylsilandiyl(2,5-dimethyl-N-phenyl-6-azapentalen)(2-methyl-4-(4'cyclohexylphenyl-indenyl) zirkoniumdichlorid
Dimethylsilandiyl(2-methyl-4-thiapentalen)(2-methyl-4-(4'-cyclohexylphenylindenyl)zirkoniumdichlorid
Dimethylsilandiyl(2-methyl-5-thiapentalen )(2-methyl-4-(4'-cyclohexylphenylindenyl)zirkoniumdichlorid
Dimethylsilandiyl(2-methyl-6-thiapentalen)(2-methyl-4-(4'-cyclohexylphenylindenyl)zirkoniumdichlorid
Dimethylsilandiyl(2,5-dimethyl-4-thiapentalen)(2-methyl-4-(4'-cyclohexylphenylindenyl) zirkoniumdichlorid
Dimethylsilandiyl(2,5-dimethyl-6-thiapentalen)(2-methyl-4-(4'-cyclohexylphenylindenyl) zirkoniumdichlorid
Dimethylsilandiyl(2-methyl-4-oxapentalen)(2-methyl-4-(4'-cyclohexylphenylindenyl)zirkoniumdichlorid

Dimethylsilandiyl(2-methyl-5-oxapentalen)(2-methyl-4-(4'-cyclohexylphenylindenyl)zirkoniumdichlorid
Dimethylsilandiyl(2-methyl-6-oxapentalen)(2-methyl-4-(4'-cyclohexylphenylindenyl)zirkoniumdichlorid
Dimethylsilandiyl(2,5-dimethyl-4-oxapentalen)(2-methyl-4-(4'-cyclohexylphenylindenyl) zirkoniumdichlorid
Dimethylsilandiyl(2,5-dimethyl-6-oxapentalen)(2-methyl-4-(4'-cyclohexylphenylindenyl) zirkoniumdichlorid
Dimethylsilandiyl(2-methyl-4-azapentalen)(2-methyl-4-(4'-trimethylsilylphenylindenyl) zirkoniumdichlorid
Dimethylsilandiyl(2-methyl-5-azapentalen)(2-methyl-4-(4'-trimethylsilylphenylindenyl) zirkoniumdichlorid
Dimethylsilandiyl(2-methyl-6-azapentalen)(2-methyl-4-(4'-trimethylsilylphenylindenyl) zirkoniumdichlorid
Dimethylsilandiyl(2-methyl-N-phenyl-4-azapentalen)(2-methyl-4-(4'trimethylsilylphenyl-indenyl) zirkoniumdichlorid
Dimethylsilandiyl(2-methyl-N-phenyl-5-azapentalen)(2-methyl-4-(4'trimethylsilylphenyl-indenyl) zirkoniumdichlorid
Dimethylsilandiyl(2-methyl-N-phenyl-6-azapentalen)(2-methyl-4-(4'trimethylsilylphenyl-indenyl) zirkoniumdichlorid
Dimethylsilandiyl(2,5-dimethyl-4-azapentalen)(2-methyl-4-(4'-trimethylsilylphenylindenyl) zirkoniumdichlorid
Dimethylsilandiyl(2,5-dimethyl-6-azapentalen)(2-methyl-4-(4'-trimethylsilylphenylindenyl) zirkoniumdichlorid
Dimethylsilandiyl(2,5-dimethyl-N-phenyl-4-azapentalen)(2-methyl-4-(4'trimethylsilylphenyl-indenyl) zirkoniumdichlorid
Dimethylsilandiyl(2,5-dimethyl-N-phenyl-6-azapentalen)(2-methyl-4-(4'trimethylsilylphenyl-indenyl) zirkoniumdichlorid
Dimethylsilandiyl(2-methyl-4-thiapentalen)(2-methyl-4-(4'-trimethylsilylphenylindenyl)zirkoniumdichlorid
Dimethylsilandiyl(2-methyl-5-thiapentalen)(2-methyl-4-(4'-trimethylsilylphenylindenyl)zirkoniumdichlorid
Dimethylsilandiyl(2-methyl-6-thiapentalen)(2-methyl-4-(4'-trimethylsilylphenylindenyl)zirkoniumdichlorid
Dimethylsilandiyl(2,5-dimethyl-4-thiapentalen)(2-methyl-4-(4'-trimethylsilylphenylindenyl) zirkoniumdichlorid
Dimethylsilandiyl(2,5-dimethyl-6-thiapentalen)(2-methyl-4-(4'-trimethylsilylphenylindenyt) zirkoniumdichlorid
Dimethylsilandiyl(2-methyl-4-oxapentalen)(2-methyl-4-(4'-trimethylsilylphenylindenyl)zirkoniumdichlorid
Dimethylsilandiyl(2-methyl-5-oxapentalen)(2-methyl-4-(4'-trimethylsilylphenylindenyl)zirkoniumdichlorid
Dimethylsilandiyl(2-methyl-6-oxapentalen)(2-methyl-4-(4'-trimethylsilylphenylindenyl)zirkoniumdichlorid
Dimethylsilandiyl(2,5-dimethyl-4-oxapentalen)(2-methyl-4-(4'-trimethylsilylphenylindenyl) zirkoniumdichlorid
Dimethylsilandiyl(2,5-dimethyl-6-oxapentalen)(2-methyl-4-(4'-trimethylsilylphenylindenyl) zirkoniumdichlorid
Dimethylsilandiyl(2-methyl-4-azapentalen)(2-methyl-4-(4'-adamantylphenyl-indenyl) zirkoniumdichlorid
Dimethylsilandiyl(2-methyl-5-azapentalen)(2-methyl-4-(4'-adamantylphenyl-indenyl) zirkoniumdichlorid
Dimethylsilandiyl(2-methyl-6-azapentalen)(2-methyl-4-(4'-adamantylphenyl-indenyl) zirkoniumdichlorid
Dimethylsilandiyl(2-methyl-N-phenyl-4-azapentalen)(2-methyl-4-(4'adamantylphenyl-indenyl) zirkoniumdichlorid
Dimethylsilandiyl(2-methyl-N-phenyl-5-azapentalen)(2-methyl-4-(4'adamantylphenyl-indenyl) zirkoniumdichlorid
Dimethylsilandiyl(2-methyl-N-phenyl-6-azapentalen)(2-methyl-4-(4'adamantylphenyl-indenyl) zirkoniumdichlorid
Dimethylsilandiyl(2,5-dimethyl-4-azapentalen)(2-methyl-4-(4'-adamantylphenylindenyl) zirkoniumdichlorid
Dimethylsilandiyl(2,5-dimethyl-6-azapentalen)(2-methyl-4-(4'-adamantylphenylindenyl) zirkoniumdichlorid
Dimethylsilandiyl(2,5-dimethyl-4-azapentalen)(2-methyl-4-(4'-adamantylphenylindenyl) zirkoniumdichlorid
Dimethylsilandiyl(2,5-dimethyl-N-phenyl-4-azapentalen)(2-methyl-4-(4'adamantylphenyl-indenyl) zirkoniumdichlorid
Dimethylsilandiyl(2,5-dimethyl-N-phenyl-6-azapentalen)(2-methyl-4-(4'adamantylphenyl-indenyl) zirkoniumdichlorid
Dimethylsilandiyl(2-methyl-4-thiapentalen)(2-methyl-4-(4'-adamantylphenylindenyl)zirkoniumdichlorid
Dimethylsilandiyl(2-methyl-5-thiapentalen)(2-methyl-4-(4'-adamantylphenylindenyl)zirkoniumdichlorid
Dimethylsilandiyl(2-methyl-6-thiapentalen)(2-methyl-4-(4'-adamantylphenylindenyl)zirkoniumdichlorid
Dimethylsilandiyl(2,5-dimethyl-4-thiapentalen)(2-methyl-4-(4'-adamantylphenylindenyl) zirkoniumdichlorid
Dimethylsilandiyl(2,5-dimethyl-6-thiapentalen)(2-methyl-4-(4'-adamantylphenylindenyl) zirkoniumdichlorid
Dimethylsilandiyl(2-methyl-4-oxapentalen)(2-methyl-4-(4'-adamantylphenylindenyl)zirkoniumdichlorid
Dimethylsilandiyl(2-methyl-5-oxapentalen)(2-methyl-4-(4'-adamantylphenylindenyl)zirkoniumdichlorid
Dimethylsilandiyl(2-methyl-6-oxapentalen)(2-methyl-4-(4'-adamantylphenylindenyl)zirkoniumdichlorid
Dimethylsilandiyl(2,5-dimethyl-4-oxapentalen)(2-methyl-4-(4'-adamantylphenylindenyl) zirkoniumdichlorid
Dimethylsilandiyl(2,5-dimethyl-6-oxapentalen)(2-methyl-4-(4'-adamantylphenylindenyl) zirkoniumdichlorid
Dimethylsilandiyl(2-methyl-4-azapentalen)(2-methyl-4-(4'tris(trifluormethyl)methylphenyl-indenyl) zirkoniumdichlorid
Dimethylsilandiyl(2-methyl-5-azapentalen )(2-methyl-4-(4'tris(trifluormethyl)methylphenyl-indenyl) zirkoniumdichlorid
Dimethylsilandiyl(2-methyl-6-azapentalen)(2-methyl-4-(4'tris(trifluormethyl)methylphenyl-indenyl) zirkoniumdichlorid

Dimethylsilandiyl(2-methyl-N-phenyl-4-azapentalen)(2-methyl-4-(4'tris(trifluormethyl)methylphenyl-indenyl) zirkoniumdichlorid
Dimethylsilandiyl(2-methyl-N-phenyl-5-azapentalen)(2-methyl-4-(4'tris(trifluormethyl)methylphenyl-indenyl) zirkoniumdichlorid
Dimethylsilandiyl(2-methyl-N-phenyl-6-azapentalen)(2-methyl-4-(4'tris(trifluormethyl)methylphenyl-indenyl) zirkoniumdichlorid
Dimethylsilandiyl(2,5-dimethyl-4-azapentalen)(2-methyl-4-(4'tris(trifluormethyl)methylphenyl-indenyl) zirkoniumdichlorid
Dimethylsilandiyl(2,5-dimethyl-6-azapentalen)(2-methyl-4-(4'tris(trifluormethyl)methylphenyl-indenyl) zirkoniumdichlorid
Dimethylsilandiyl(2,5-dimethyl-N-phenyl-4-azapentalen)(2-methyl-4-(4'tris(trifluormethyl)methylphenyl-indenyl) zirkoniumdichlorid
Dimethylsilandiyl(2,5-dimethyl-N-phenyl-6-azapentalen)(2-methyl-4-(4'tris(trifluormethyl)methylphenyl-indenyl) zirkoniumdichlorid
Dimethylsilandiyl(2-methyl-4-thiapentalen)(2-methyl-4-(4'tris(trifluormethyl)methylphenyl-indenyl )zirkoniumdichlorid
Dimethylsilandiyl(2-methyl-5-thiapentalen)(2-methyl-4-(4'tris(trifluormethyl )methylphenyl-indenyl)zirkoniumdichlorid
Dimethylsilandiyl(2-methyl-6-thiapentalen)(2-methyl-4-(4'tris(trifluormethyl)methylphenyl-indenyl )zirkoniumdichlorid
Dimethylsilandiyl(2,5-dimethyl-4-thiapentalen)(2-methyl-4-(4'tris(trifluormethyl)methylphenyl-indenyl) zirkoniumdichlorid
Dimethylsilandiyl(2,5-dimethyl-6-thiapentalen)(2-methyl-4-(4'tris(trifluormethyl)methylphenyl-indenyl) zirkoniumdichlorid
Dimethylsilandiyl(2-methyl-4-oxapentalen)(2-methyl-4-(4'tris(trifluormethyl)methylphenyl-indenyl)zirkoniumdichlorid
Dimethylsilandiyl(2-methyl-5-oxapentalen)(2-methyl-4-(4'tris(trifluormethyl )methylphehyl-indenyl)zirkoniumdichlorid
Dimethylsilandiyl(2-methyl-6-oxapentalen)(2-methyl-4-(4'tris(trifluormethyl)methylphenyl-indenyl)zirkoniumdichlorid
Dimethylsilandiyl(2,5-dimethyl-4-oxapentalen)(2-methyl-4-(4'tris(trifluormethyl)methylphenyl-indenyl) zirkoniumdichlorid
Dimethylsilandiyl(2,5-dimethyl-6-oxapentalen)(2-methyl-4-(4'tris(trifluormethyl)methylphenyl-indenyl) zirkoniumdichlorid
Dimethylsilandiyl(2-methyl-4-azapentalen)(2-ethyl-4-(4'-tert-butylphenyl-indenyl) zirkoniumdichlorid
Dimethylsilandiyl(2-methyl-5,6-di-hydro-4-azapentalen)(2-ethyl-4-(4'-tertbutylphenyl-indenyl) zirkoniumdichlorid
Dimethylsilandiyl(2-methyl-4-azapentalen)(2-ethyl-4-(4'-tert-butylphenyltetrahydroindenyl) zirkoniumdichlorid
Dimethylsilandiyl(2-methyl-5-azapentalen )(2-n-butyl-4-(4'-tert-butylphenyl-indenyl) zirkoniumdichlorid
Ethyliden(2-methyl-6-azapentalen)(2-methyl-4-(4'-tert-butylphenyl-indenyl) zirkoniumdichlorid
Dimethylsilandiyl(2-methyl-N-trimethylsilyl-4-azapentalen)(2-methyl-4-(4'-tertbutylphenyl-indenyl) zirkoniumdichlorid
Dimethylsilandiyl(2-methyl-N-tolyl-5-azapentalen)(2-n-propyl-4-(4'-tert-butylphenylindenyl) zirkoniumdichlorid
Dimethylgermyldiyl(2-methyl-N-phenyl-6-azapentalen)(2-methyl-4-(4'-tertbutylphenyl-indenyl) zirkoniumdichlorid
Methylethyliden(2,5-dimethyl-4-azapentalen)(2-methyl-4-(4'-tert-butylphenyl-indenyl) zirkoniumdichlorid
Dimethylsilandiyl(2,5-di-iso-propyl-6-azapentalen)(2-methyl-4-(4'-tert-butylphenylindenyl) zirkoniumdichlorid
Dimethylsilandiyl(2,5-dimethyl-N-phenyl-4-azapentalen)(2,6-dimethyl-4-(4'-tertbutylphenyl-indenyl) zirkoniumdichlorid
Dimethylsilandiyl(2,5-dimethyl-N-phenyl-6-azapentalen)(2-methyl-4-(6'-tertbutylnaphthyl-indenyl) zirkoniumdichlorid
Dimethylsilandiyl(2,5-dimethyl-N-phenyl-6-azapentalen)(2-methyl-4-(6'-tertbutylanthracenyl-indenyl) zirkoniumdichlorid
Dimethylsilandiyl(2-methyl-4-phosphapentalen)(2-methyl-4-(4'-tert-butylphenylindenyl)zirkoniumdichlorid
Diphenylsilandiyl(2-methyl-5-thiapentalen)(2-methyl-4-(4'-tert-butylphenylindenyl)zirkoniumdichlorid
Methylphenylsilandiyl(2-methyl-6-thiapentalen)(2-methyl-4-(4'-tert-butylphenylindenyl)zirkoniumdichlorid
Methyliden(2,5-dimethyl-4-thiapentalen)(2-methyl-4-(4'-tert-butylphenyl-indenyl) zirkoniumdichlorid
Dimethylmethyliden(2,5-dimethyl-6-thiapentalen)(2-methyl-4-(4'-tert-butylphenylindenyl) zirkoniumdichlorid
Diphenylsilandiyl(2,5-dimethyl-4-oxapentalen)(2-methyl-4-(4'-tert-butylphenylindenyl) zirkoniumdichlorid
Diphenylsilandiyl(2,5-dimethyl-6-oxapentalen)(2-methyl-4-(4'-tert-butylphenylindenyl) zirkoniumdichlorid

Dimethylsilandiyl(2-methyl-4-azapentalen)(2-methylindenyl) zirkoniumdichlorid
Dimethylsilandiyl(2-methyl-5-azapentalen)(2-methylindenyl) zirkoniumdichlorid
Dimethylsilandiyl(2-methyl-6-azapentalen)(2-methylindenyl) zirkoniumdichlorid
Dimethylsilandiyl(2-methyl-N-phenyl-4-azapentalen)(2-methylindenyl) zirkoniumdichlorid
Dimethylsilandiyl(2-methyl-N-phenyl-5-azapentalen)(2-methylindenyl) zirkoniumdichlorid
Dimethylsilandiyl(2-methyl-N-phenyl-6-azapentalen)(2-methylindenyl) zirkoniumdichlorid
Dimethylsilandiyl(2,5-dimethyl-4-azapentalen)(2-methylindenyl) zirkoniumdichlorid
Dimethylsilandiyl(2,5-dimethyl-6-azapentalen)(2-methylindenyl) zirkoniumdichlorid
Dimethylsilandiyl(2,5-dimethyl-N-phenyl-4-azapentalen)(2-methylindenyl) zirkoniumdichlorid
Dimethylsilandiyl(2,5-dimethyl-N-phenyl-6-azapentalen)(2-methylindenyl) zirkoniumdichlorid
Dimethylsilandiyl(2-methyl-4-thiapentalen)(2-methylindenyl)zirkoniumdichlorid
Dimethylsilandiyl(2-methyl-5-thiapentalen)(2-methylindenyl)zirkoniumdichlorid
Dimethylsilandiyl(2-methyl-6-thiapentalen)(2-methylindenyl)zirkoniumdichlorid
Dimethylsilandiyl(2,5-dimethyl-4-thiapentalen)(2-methylindenyl) zirkoniumdichlorid
Dimethylsilandiyl(2,5-dimethyl-6-thiapentalen)(2-methylindenyl) zirkoniumdichlorid
Dimethylsilandiyl(2-methyl-4-oxapentalen)(2-methylindenyl)zirkoniumdichlorid
Dimethylsilandiyl(2-methyl-5-oxapentalen)(2-methylindenyl)zirkoniumdichlorid
Dimethylsilandiyl(2-methyl-6-oxapentalen)(2-methylindenyl)zirkoniumdichlorid
Dimethylsilandiyl(2,5-dimethyl-4-oxapentalen)(2-methylindenyl) zirkoniumdichlorid
Dimethylsilandiyl(2,5-dimethyl-6-oxapentalen)(2-methylindenyl) zirkoniumdichlorid
Dimethylsilandiyl(2-methyl-4-azapentalen)(indenyl) zirkoniumdichlorid
Dimethylsilandiyl(2-methyl-5-azapentalen)(indenyl) zirkoniumdichlorid
Dimethylsilandiyl(2-methyl-6-azapentalen)(indenyl) zirkoniumdichlorid
Dimethylsilandiyl(2-methyl-N-phenyl-4-azapentalen)(indenyl) zirkoniumdichlorid
Dimethylsilandiyl(2-methyl-N-phenyl-5-azapentalen)(indenyl) zirkoniumdichlorid
Dimethylsilandiyl(2-methyl-N-phenyl-6-azapentalen)(indenyl) zirkoniumdichlorid
Dimethylsilandiyl(2,5-dimethyl-4-azapentalen)(indenyl) zirkoniumdichlorid
Dimethylsilandiyl(2,5-dimethyl-6-azapentalen)(indenyl) zirkoniumdichlorid
Dimethylsilandiyl(2,5-dimethyl-N-phenyl-4-azapentalen)(indenyl) zirkoniumdichlorid
Dimethylsilandiyl(2,5-dimethyl-N-phenyl-6-azapentalen)(indenyl) zirkoniumdichlorid
Dimethylsilandiyl(2-methyl-4-thiapentalen)(indenyl)zirkoniumdichlorid
Dimethylsilandiyl(2-methyl-5-thiapentalen)(indenyl)zirkoniumdichlorid
Dimethylsilandiyl(2-methyl-6-thiapentalen)(indenyl)zirkoniumdichlorid
Dimethylsilandiyl(2,5-dimethyl-4-thiapentalen)(indenyl) zirkoniumdichlorid
Dimethylsilandiyl(2,5-dimethyl-6-thiapentalen)(indenyl) zirkoniumdichlorid
Dimethylsilandiyl(2-methyl-4-oxapentalen)(indenyl)zirkoniumdichlorid
Dimethylsilandiyl(2-methyl-5-oxapentalen)(indenyl)zirkoniumdichlorid
Dimethylsilandiyl(2-methyl-6-oxapentalen)(indenyl)zirkoniumdichlorid
Dimethylsilandiyl(2,5-dimethyl-4-oxapentalen)(indenyl) zirkoniumdichlorid Dimethylsilandiyl(2,5-dimethyl-6-oxapentalen)(indenyl) zirkoniumdichlorid
Dimethylsilandiyl(2-methyl-4-azapentalen)(2-methyl-4-phenyl-indenyl) zirkoniumdichlorid
Dimethylsilandiyl(2-methyl-5-azapentalen)(2-methyl-4-phenyl-indenyl) zirkoniumdichlorid
Dimethylsilandiyl(2-methyl-6-azapentalen)(2-methyl-4-phenyl-indenyl) zirkoniumdichlorid
Dimethylsilandiyl(2-methyl-N-phenyl-4-azapentalen)(2-methyl-4-phenyl-indenyl) zirkoniumdichlorid
Dimethylsilandiyl(2-methyl-N-phenyl-5-azapentalen)(2-methyl-4-phenyl-indenyl) zirkoniumdichlorid
Dimethylsilandiyl(2-methyl-N-phenyl-6-azapentalen)(2-methyl-4-phenyl-indenyl) zirkoniumdichlorid
Dimethylsilandiyl(2,5-dimethyl-4-azapentalen)(2-methyl-4-phenyl-indenyl) zirkoniumdichlorid
Dimethylsilandiyl(2,5-dimethyl-6-azapentalen)(2-methyl-4-phenyl-indenyl) zirkoniumdichlorid
Dimethylsilandiyl(2,5-dimethyl-N-phenyl-4-azapentalen)(2-methyl-4-phenyl-indenyl) zirkoniumdichlorid
Dimethylsilandiyl(2,5-dimethyl-N-phenyl-6-azapentalen)(2-methyl-4-phenyl-indenyl) zirkoniumdichlorid
Dimethylsilandiyl(2-methyl-4-thiapentalen)(2-methyl-4-phenylindenyl)zirkoniumdichlorid
Dimethylsilandiyl(2-methyl-5-thiapentalen)(2-methyl-4-phenylindenyl)zirkoniumdichlorid
Dimethylsilandiyl(2-methyl-6-thiapentalen)(2-methyl-4-phenylindenyl)zirkoniumdichlorid
Dimethylsilandiyl(2,5-dimethyl-4-thiapentalen)(2-methyl-4-phenyl-indenyl) zirkoniumdichlorid
Dimethylsilandiyl(2,5-dimethyl-6-thiapentalen)(2-methyl-4-phenyl-indenyl) zirkoniumdichlorid
Dimethylsilandiyl(2-methyl-4-oxapentalen)(2-methyl-4-phenylindenyl)zirkoniumdichlorid
Dimethylsilandiyl(2-methyl-5-oxapentalen)(2-methyl-4-phenylindenyl)zirkoniumdichlorid
Dimethylsilandiyl(2-methyl-6-oxapentalen)(2-methyl-4-phenylindenyl)zirkoniumdichlorid

Dimethylsilandiyl(2,5-dimethyl-4-oxapentalen)(2-methyl-4-phenyl-indenyl) zirkoniumdichlorid
Dimethylsilandiyl(2,5-dimethyl-6-oxapentalen)(2-methyl-4-phenyl-indenyl) zirkoniumdichlorid
Dimethylsilandiyl(2-methyl-4-azapentalen)(2-methyl-4,5-benzo-indenyl) zirkoniumdichlorid
Dimethylsilandiyl(2-methyl-5-azapentalen)(2-methyl-4,5-benzo-indenyl) zirkoniumdichlorid
Dimethylsilandiyl(2-methyl-6-azapentalen)(2-methyl-4,5-benzo-indenyl) zirkoniumdichlorid
Dimethylsilandiyl(2-methyl-N-phenyl-4-azapentalen)(2-methyl-4,5-benzo-indenyl) zirkoniumdichlorid
Dimethylsilandiyl(2-methyl-N-phenyl-5-azapentalen)(2-methyl-4,5-benzo-indenyl) zirkoniumdichlorid
Dimethylsilandiyl(2-methyl-N-phenyl-6-azapentalen)(2-methyl-4,5-benzo-indenyl) zirkoniumdichlorid
Dimethylsilandiyl(2,5-dimethyl-4-azapentalen)(2-methyl-4,5-benzo-indenyl) zirkoniumdichlorid
Dimethylsilandiyl(2,5-dimethyl-6-azapentalen)(2-methyl-4,5-benzo-indenyl) zirkoniumdichlorid
Dimethylsilandiyl(2,5-dimethyl-N-phenyl-4-azapentalen)(2-methyl-4,5-benzo-indenyl) zirkoniumdichlorid
Dimethylsilandiyl(2,5-dimethyl-N-phenyl-6-azapentalen)(2-methyl-4,5-benzo-indenyl) zirkoniumdichlorid
Dimethylsilandiyl(2-methyl-4-thiapentalen)(2-methyl-4,5-benzoindenyl)zirkoniumdichlorid
Dimethylsilandiyl(2-methyl-5-thiapentalen)(2-methyl-4,5-benzoindenyl)zirkoniumdichlorid
Dimethylsilandiyl(2-methyl-6-thiapentalen)(2-methyl-4,5-benzoindenyl)zirkoniumdichlorid
Dimethylsilandiyl(2,5-dimethyl-4-thiapentalen)(2-methyl-4,5-benzo-indenyl) zirkoniumdichlorid
Dimethylsilandiyl(2,5-dimethyl-6-thiapentalen)(2-methyl-4,5-benzo-indenyl) zirkoniumdichlorid
Dimethylsilandiyl(2-methyl-4-oxapentalen)(2-methyl-4,5-benzoindenyl)zirkoniumdichlorid
Dimethylsilandiyl(2-methyl-5-oxapentalen)(2-methyl-4,5-benzoindenyl)zirkoniumdichlorid
Dimethylsilandiyl(2-methyl-6-oxapentalen)(2-methyl-4,5-benzoindenyl)zirkoniumdichlorid
Dimethylsilandiyl(2,5-dimethyl-4-oxapentalen)(2-methyl-4,5-benzo-indenyl) zirkoniumdichlorid
Dimethylsilandiyl(2,5-dimethyl-6-oxapentalen)(2-methyl-4,5-benzo-indenyl) zirkoniumdichlorid
Dimethylsilandiylbis(2-methyl-4-azapentalen)zirkoniumdichlorid
Dimethylsilandiylbis(2-methyl-5-azapentalen) zirkoniumdichlorid
Dimethylsilandiylbis(2-methyl-6-azapentalen) zirkoniumdichlorid
Dimethylsilandiylbis(2-methyl-N-phenyl-4-azapentalen) zirkoniumdichlorid
Dimethylsilandiylbis(2-methyl-N-phenyl-5-azapentalen) zirkoniumdichlorid
Dimethylsilandiylbis(2-methyl-N-phenyl-6-azapentalen) zirkoniumdichlorid
Dimethylsilandiylbis(2,5-dimethyl-4-azapentalen) zirkoniumdichlorid
Dimethylsilandiylbis(2,5-dimethyl-6-azapentalen) zirkoniumdichlorid
Dimethylsilandiylbis(2,5-dimethyl-N-phenyl-4-azapentalen)zirkoniumdichlorid
Dimethylsilandiylbis(2,5-dimethyl-N-phenyl-6-azapentalen) zirkoniumdichlorid
Dimethylsilandiylbis(2-methyl-4-thiapentalen)zirkoniumdichlorid
Dimethylsilandiylbis(2-methyl-5-thiapentalen)zirkoniumdichlorid
Dimethylsilandiylbis(2-methyl-6-thiapentalen)zirkoniumdichlorid
Dimethylsilandiylbis(2,5-dimethyl-4-thiapentalen) zirkoniumdichlorid
Dimethylsilandiylbis(2,5-dimethyl-6-thiapentalen) zirkoniumdichlorid
Dimethylsilandiylbis(2-methyl-4-oxapentalen)zirkoniumdichlorid
Dimethylsilandiylbis(2-methyl-5-oxapentalen)zirkoniumdichlorid
Dimethylsilandiylbis(2-methyl-6-oxapentalen)zirkoniumdichlorid
Dimethylsilandiylbis(2,5-dimethyl-4-oxapentalen)zirkoniumdichlorid
Dimethylsilandiylbis(2,5-dimethyl-6-oxapentalen)zirkoniumdichlorid
oder ein Gemisch derselben, eingesetzt wird.

**12.** Verfahren zur Herstellung eines Polyolefins durch Polymerisation eines oder mehrerer Olefine in Gegenwart eines Katalysatorsystems nach einem der Ansprüche 1 bis 11.

**13.** Verwendung eines Katalysatorsystems gemäß einem der Ansprüche 1 bis 11 zur Herstellung eines Polyolefins.

## Claims

**1.** A catalyst system comprising

a) at least one metallocene,

b) at least one Lewis base of the formula (I),

$$M^2R^3R^4R^5 \quad (I)$$

where
$R^3$ , $R^4$ and $R^5$ are identical or different and are each a hydrogen atom, a $C_1$-$C_{20}$-alkyl group, a $C_1$-$C_{20}$-haloalkyl group, a $C_6$-$C_{40}$-aryl group, a $C_6$-$C_{40}$-haloaryl group, a $C_7$-$C_{40}$-alkylaryl group or a $C_7$-$C_{40}$-arylalkyl group, where two radicals or all three radicals $R^3$, $R^4$ and $R^5$ may be joined to one another via $C_2$-$C_{20}$ units, and
$M^2$ is an element of main group V of the Periodic Table of the Elements,

c) a support,

d) at least one organoboroaluminum compound which is made up of units of the formula II

$$R_i^1M^3\text{-O-}M^3R_j^2 \quad (II)$$

where
$R^1$ and $R^2$ are identical or different and are each a hydrogen atom, a halogen atom, a $C_1$-$C_{40}$ group, in particular $C_1$-$C_{20}$-alkyl, $C_1$-$C_{20}$-haloalkyl, $C_1$-$C_{10}$-alkoxy, $C_6$-$C_{20}$-aryl, $C_6$-$C_{20}$-haloaryl, $C_6$-$C_{20}$-aryloxy, $C_7$-$C_{40}$-arylalkyl, $C_7$-$C_{40}$-haloarylalkyl, $C_7$-$C_{40}$-alkylaryl or $C_7$-$C_{40}$-haloalkylaryl, or $R^1$ may be an -$OSiR_3$ group, where R are identical or different and are as defined for $R^1$,
$M^3$ are identical or different and are each boron or aluminum and
i and j are each an integer 0, 1 or 2,
and is covalently bound to the support,
and, if desired

e) an organometallic compound of the formula (V)

$$[M^4R^6_p]_k \quad (V)$$

where
$M^4$ is an element of main group I, II or III of the Periodic Table of the Elements,
$R^6$ are identical or different and are each a hydrogen atom, a halogen atom or a $C_1$-$C_{40}$ group, in particular a $C_1$-$C_{20}$-alkyl group, a $C_6$-$C_{40}$-aryl group, a $C_7$-$C_{40}$-arylalkyl group or a $C_7$-$C_{40}$-alkylaryl group
p is an integer from 1 to 3 and
k is an integer from 1 to 4.

**2.** A catalyst system as claimed in claim 1, wherein the Lewis base of the formula (I) is one in which $M^2$ is nitrogen or phosphorus.

**3.** A catalyst system as claimed in claim 2, wherein the Lewis base of the formula (I) is triethylamine, triisopropylamine, triisobutylamine, tri(n-butyl)amine, N,N-dimethylaniline, N,N-diethylaniline, N,N-2,4,6-pentamethylaniline, dicyclohexylamine, pyridine, pyrazine, triphenylphosphine, tri(methylphenyl)phosphine or tri(dimethylphenyl)phosphine.

**4.** A catalyst system as claimed in any of claims 1 to 3, wherein the support is a porous inorganic or organic solid.

**5.** A catalyst system as claimed in any of claims 1 to 4, wherein the organoboroaluminum is a compound of the formula (III) or (IV),

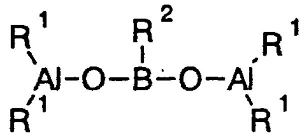

(III)

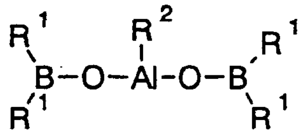

(IV)

where $R^1$ and $R^2$ are as defined under formula (II).

**6.** A catalyst system as claimed in claim 5, wherein the organoboroaluminum compound of the formula (III) or (IV) is

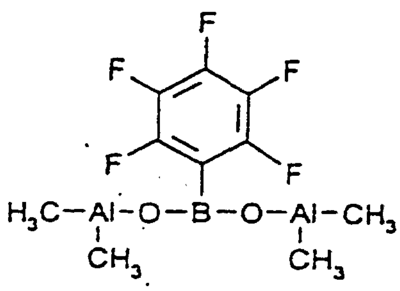

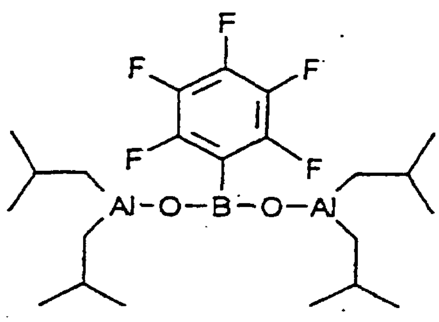

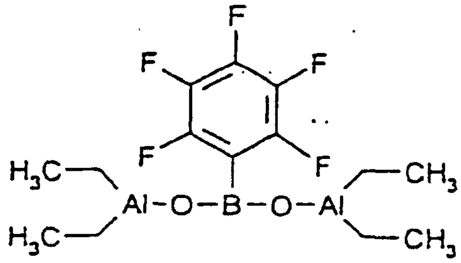

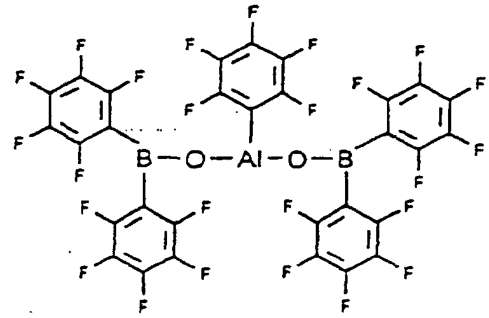

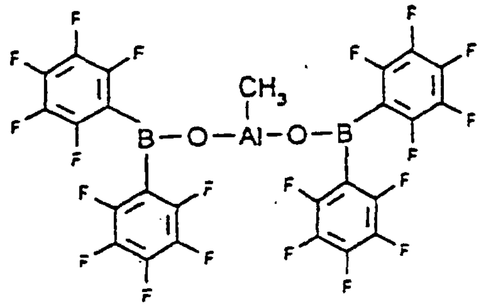

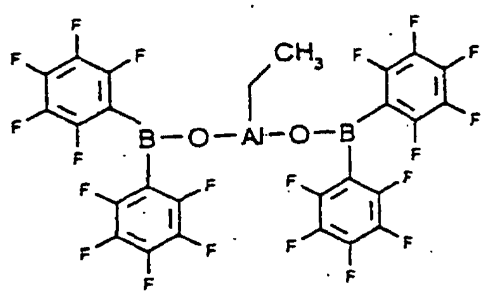

7. A catalyst system as claimed in any of claims 1 to 6, wherein the organometallic compound of the formula (V) is trimethylaluminum, triethylaluminum, triisopropylaluminum, trihexylaluminum, trioctylaluminum, tri-n-butylaluminum, tri-n-propylaluminum, triisoprenylaluminum, dimethylaluminum monochloride, diethylaluminum monochloride, diisobutylaluminum monochloride, methylaluminum sesquichloride, ethylaluminum sesquichloride, dimethylaluminum hydride, diethylaluminum hydride, diisopropylaluminum hydride, dimethylaluminum trimethylsiloxide, dimethylaluminum triethylsiloxide, phenylalane, pentafluorophenylalane or o-tolylalane.

8. A catalyst system as claimed in any of claims 1 to 7, wherein the metallocene is an unbridged or bridged metallocene of the formula (VI)

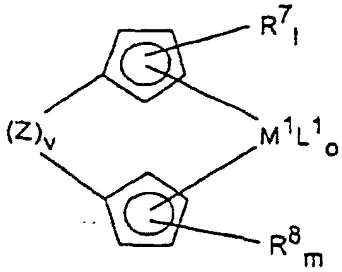

(VI)

where

$M^1$ is a metal of transition group III, IV, V or VI of the Periodic Table of the Elements, in particular Ti, Zr or Hf,

$R^7$ are identical or different and are each a hydrogen atom or $SiR_3^{12}$, where $R^{12}$ are identical or different and are each a hydrogen atom or a $C_1$-$C_{40}$ group such as $C_1$-$C_{20}$-alkyl, $C_1$-$C_{10}$-fluoroalkyl, $C_1$-$C_{10}$-alkoxy, $C_6$-$C_{20}$-aryl, $C_6$-$C_{10}$-fluoroaryl, $C_6$-$C_{10}$-aryloxy, $C_2$-$C_{10}$-alkenyl, $C_7$-$C_{40}$-arylalkyl, $C_7$-$C_{40}$-alkylaryl or $C_8$-$C_{40}$-arylalkenyl, or $R^7$ is a $C_1$-$C_{30}$ group such as $C_1$-$C_{25}$-alkyl, e.g. methyl, ethyl, tert-butyl, cyclohexyl or octyl, $C_2$-$C_{25}$-alkenyl, $C_3$-$C_{15}$-alkylalkenyl, $C_6$-$C_{24}$-aryl, $C_5$-$C_{24}$-heteroaryl such as pyridyl, furyl or quinolyl, $C_7$-$C_{30}$-arylalkyl, $C_7$-$C_{30}$-alkylaryl, fluorinated $C_1$-$C_{25}$-alkyl, fluorinated $C_6$-$C_{24}$-aryl, fluorinated $C_7$-$C_{30}$-arylalkyl, fluorinated $C_7$-$C_{30}$-alkylaryl or $C_1$-$C_{12}$-alkoxy, or two or more radicals $R^7$ may be joined to one another in such a way that the radicals $R^7$ and the atoms of the cyclopentadienyl ring which connect them form a carbocyclic or heterocyclic $C_4$-$C_{24}$ ring system which may in turn be substituted,

R8 are identical or different and are each a hydrogen atom or $SiR_3^{12}$, where $R^{12}$ are identical or different and are each a hydrogen atom or a $C_1$-$C_{40}$ group such as $C_1$-$C_{20}$-alkyl, $C_1$-$C_{10}$-fluoroalkyl, $C_1$-$C_{10}$-alkoxy, $C_6$-$C_{14}$-aryl, $C_6$-$C_{10}$-fluoroaryl, $C_6$-$C_{10}$-aryloxy, $C_2$-$C_{10}$-alkenyl, $C_7$-$C_{40}$-arylalkyl, $C_7$-$C_{40}$-alkylaryl or $C_8$-$C_{40}$-arylalkenyl, or $R^8$ is a $C_1$-$C_{30}$ group such as $C_1$-$C_{25}$-alkyl, e.g. methyl, ethyl, tert-butyl, cyclohexyl or octyl, $C_2$-$C_{25}$-alkenyl, $C_3$-$C_{15}$-alkylalkenyl, $C_6$-$C_{24}$-aryl, $C_5$-$C_{24}$-heteroaryl, e.g. pyridyl, furyl or quinolyl, $C_7$-$C_{30}$-arylalkyl, $C_7$-$C_{30}$-alkylaryl, fluorinated $C_1$-$C_{25}$-alkyl, fluorinated $C_6$-$C_{24}$-aryl, fluorinated $C_7$-$C_{30}$-arylalkyl, fluorinated $C_7$-$C_{30}$-alkylaryl or $C_1$-$C_{12}$-alkoxy, or two or more radicals R8 may be joined to one another in such a way that the radicals $R^8$ and the atoms of the cyclopentadienyl ring which connect them form a carbocyclic or heterocyclic $C_4$-$C_{24}$ ring system which may in turn be substituted,

l is 5 when v = 0, and l is 4 when v = 1,

m is 5 when v = 0, and m is 4 when v = 1,

$L^1$ may be identical or different and are each a hydrogen atom, a $C_1$-$C_{10}$-hydrocarbon group such as $C_1$-$C_{10}$-alkyl or $C_6$-$C_{10}$-aryl, a halogen atom or $OR^9$, $SR^9$, $OSiR_3^9$, $SiR_3^9$, $PR_2^9$ or $NR_2^9$, where $R^9$ is a halogen atom, a $C_1$-$C_{10}$-alkyl group, a halogenated $C_1$-$C_{10}$-alkyl group, a $C_6$-$C_{20}$-aryl group or a halogenated $C_6$-$C_{20}$-aryl group, or $L^1$ is a toluenesulfonyl, trifluoroacetyl, trifluoroacetoxyl, trifluoromethanesulfonyl, nonafluorobutanesulfonyl or 2,2,2-trifluoroethanesulfonyl group,

o is an integer from 1 to 4, preferably 2,

Z is a bridging structural element between the two cyclopentadienyl rings and v is 0 or 1.

**9.** A catalyst system as claimed in any of claims 1 to 6, wherein the metallocene of the formula (VI) is one in which Z is an $MR^{10}R^{11}$ group, where M is carbon, silicon, germanium or tin and $R^{10}$ and $R^{11}$ are identical or different and are each a $C_1$-$C_{20}$-hydrocarbon-containing group such as $C_1$-$C_{10}$-alkyl, $C_6$-$C_{14}$-aryl or trimethylsilyl.

**10.** A catalyst system as claimed in claim 9, wherein the metallocene of the formula (VI) is one in which Z is $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $(C_6H_5)_2Ge$, $(C_6H_5)_2Sn$, $(CH_2)_4Si$, $CH_2Si(CH_3)_2$, o-$C_6H_4$ or 2,2'-$(C_6H_4)_2$.

**11.** A catalyst system as claimed in claim 10, wherein the metallocene used is
dimethylsilanediylbis(indenyl)zirconium dichloride
dimethylsilanediylbis-(4-naphthylindenyl)zirconium dichloride
dimethylsilanediylbis-(2-methylbenzoindenyl)zirconium dichloride
dimethylsilanediylbis-(2-methylindenyl)zirconium dichloride
dimethylsilanediylbis-(2-methyl-4-(1-naphthyl)indenyl)zirconium dichloride
dimethylsilanediylbis-(2-methyl-4-(2-naphthyl)indenyl)zirconium dichloride
dimethylsilanediylbis-(2-methyl-4-phenylindenyl)zirconium dichloride
dimethylsilanediylbis-(2-methyl-4-t-butylindenyl)zirconium dichloride
dimethylsilanediylbis-(2-methyl-4-isopropylindenyl)zirconium dichloride
dimethylsilanediylbis-(2-methyl-4-ethylindenyl)zirconium dichloride
dimethylsilanediylbis-(2-methyl-4-a-acenaphthindenyl)zirconium dichloride

dimethylsilanediylbis-(2,4-dimethylindenyl)zirconium dichloride
dimethylsilanediylbis-(2-ethylindenyl)zirconium dichloride
dimethylsilanediylbis-(2-ethyl-4-ethylindenyl)zirconium dichloride
dimethylsilanediylbis-(2-ethyl-4-phenylindenyl)zirconium dichloride
dimethylsilanediylbis-(2-methyl-4,5-benzoindenyl)zirconium dichloride
dimethylsilanediylbis-(2-methyl-4,6-diisopropylindenyl)zirconium dichloride
dimethylsilanediylbis-(2-methyl-4,5-diisopropylindenyl)zirconium dichloride
dimethylsilanediylbis-(2,4,6-trimethylindenyl)zirconium dichloride
dimethylsilanediylbis-(2,5,6-trimethylindenyl)zirconium dichloride
dimethylsilanediylbis-(2,4,7-trimethylindenyl)zirconium dichloride
dimethylsilanediylbis- (2-methyl-5-isobutylindenyl)zirconium dichloride
dimethylsilanediylbis-(2-methyl-5-t-butylindenyl)zirconium dichloride
methyl(phenyl)silanediylbis-(2-methyl-4-phenylindenyl)zirconium dichloride
methyl(phenyl)silanediylbis-(2-methyl-4,6-diisopropylindenyl)zirconium dichloride
methyl(phenyl)silanediylbis-(2-methyl-4-isopropylindenyl)zirconium dichloride
methyl(phenyl)silanediylbis-(2-methyl-4,5-benzoindenyl)zirconium dichloride
methyl(phenyl)silanediylbis-(2-methyl-4,5-(methylbenzo)indenyl)zirconium dichloride
methyl(phenyl)silanediylbis-(2-methyl-4,5-(tetramethylbenzo)indenyl)zirconium dichloride
methyl(phenyl)silanediylbis-(2-methyl-4-a-acenaphthindenyl)zirconium dichloride
methyl(phenyl)silanediylbis-(2-methylindenyl)zirconium dichloride
methyl(phenyl)silanediylbis-(2-methyl-5-isobutylindenyl)zirconium dichloride
1,2-ethanediylbis-(2-methyl-4-phenylindenyl)zirconium dichloride
1,4-butanedlylbis-(2-methyl-4-phenylindenyl)zirconium dichloride
1,2-ethanediylbis-(2-methyl-4,6-diisopropylindenyl)zirconium dichloride
1,4-butanediylbis-(2-methyl-4-isopropylindenyl)zirconium dichloride
1,4-butanediylbis-(2-methyl-4,5-benzoindenyl)zirconium dichloride
1,2-ethanediylbis-(2-methyl-4,5-benzoindenyl)zirconium dichloride
1,2-ethanediylbis-(2,4,7-trimethylindenyl)zirconium dichloride
1,2-ethanediylbis-(2-methylindenyl)zirconium dichloride
1,4-butanediylbis-(2-methylindenyl)zirconium dichloride
[4-($0^5$-cyclopentadienyl)-4,6,6-trimethyl-($0^5$-4,5-tetrahydropentalene)]dichlorozirconium
[4-($0^5$-3'-trimethylsilylcyclopentadienyl)-4,6,6-trimethyl-($0^5$-4,5-tetrahydropentalene)]dichlorozirconium
[4-($0^5$-3'-isopropylcyclopentadienyl)-4,6,6-trimethyl-($0^5$-4,5-tetrahydropentalene)]dichlorozirconium
[4-($0^5$-cyclopentadienyl)-4,7,7-trimethyl-($0^5$-4,5,6,7-tetrahydroindenyl)]-dichlorotitanium
[4-($0^5$-cyclopentadienyl)-4,7,7-trimethyl-($0^5$-4,5,6,7-tetrahydroindenyl)]-dichlorozirconium
[4-($0^5$-cyclopentadienyl)-4,7,7-trimethyl-($0^5$-4,5,6,7-tetrahydroindenyl)]-dichlorohafnium
[4-($0^5$-3=-tert-butylcyclopentadienyl)-4,7,7-trimethyl-($0^5$-4,5,6,7-tetrahydroindenyl)]dichlorotitanium
4-($0^5$-3=-isopropylcyclopentadienyl)-4,7,7-trimethyl-($0^5$-4,5,6,7-tetrahydroindenyl)]dichlorotitanium
4-($0^5$-3=-methylcyclopentadienyl)-4,7,7-trimethyl-($0^5$-4,5,6,7-tetrahydroindenyl)]dichlorotitanium
4-($0^5$-3=-trimethylsilylcyclopentadienyl)-2-trimethylsilyl-4,7,7-trimethyl-($0^5$-4,5,6,7-tetrahydroindenyl)]dichlorotitanium
4-($0^5$-3=-tert-butylcyclopentadienyl)-4,7,7-trimethyl-($0^5$-4,5,6,7-tetrahydroindenyl)]dichlorozirconium
(tert-butylamido)(tetramethyl-$0^5$-cyclopentadienyl)-dimethylsilyldichlorotitanium
(tert-butylamido)(tetramethyl-$0^5$-cyclopentadienyl)-1,2-ethanediyldichlorotitanium
(methylamido)(tetramethyl-$0^5$-cyclopentadienyl)dimethylsilyldichlorotitanium
(methylamido) (tetramethyl-$0^5$-cyclopentadienyl)-1,2-ethanediyldichlorotitanium
(tert-butylamido)-(2,4-dimethyl-2,4-pentadien-1-yl)dimethylsilyldichlorotitanium
bis-(cyclopentadienyl)zirconium dichloride
bis-(n-butylcyclopentadienyl)zirconium dichloride
bis-(1,3-dimethylcyclopentadienyl)zirconium dichloride tetrachloro-[1-[bis-($0^5$-1H-inden-1-ylidene)methylsilyl]-3-$0^5$-cyclopenta-2,4-dien-1-ylidene)-3-$0^5$-9H-fluoren-9-ylidene)butane]dizirconium
tetrachloro-[2-[bis-($0^5$-2-methyl-1H-inden-1-ylidene)methoxysilyl]-5-($0^5$-2,3,4,5-tetramethylcyclopenta-2,4-dien-1-ylidene)-5-($0^5$-9H-fluoren-9-yl-idene)hexane]dizirconium
tetrachloro-[1-[bis-($0^5$-1H-inden-1-ylidene)methylsilyl]-6-($0^5$-cyclopenta-2,4-dien-1-ylidene)-6-($0^5$-9H-fluoren-9-ylidene)-3-oxaheptane]-dizirconium
dimethylsilanediylbis-(2-methyl-4-(4'-tert-butylphenylindenyl)zirconium dichloride
dimethylsilanediylbis-(2-methyl-4-(4'-methylphenylindenyl)zirconium dichloride
dimethylsilanediylbis-(2-methyl-4-(4'-ethylphenylindenyl)zirconium dichloride

dimethylsilanediylbis-(2-methyl-4-(4'-trifluoromethylphenylindenyl)zirconium dichloride
dimethylsilanediylbis-(2-methyl-4-(4'-methoxyphenylindenyl)zirconium dichloride
dimethylsilanediylbis-(2-ethyl-4-(4'-tert-butylphenylindenyl)zirconium dichloride
dimethylsilanediylbis-(2-ethyl-4-(4'-methylphenylindenyl)zirconium dichloride
dimethylsilanediylbis-(2-ethyl-4-(4'-ethylphenylindenyl)zirconium dichloride
dimethylsilanediylbis-(2-ethyl-4-(4'-trifluoromethylphenylindenyl)zirconium dichloride
dimethylsilanediylbis-(2-ethyl-4-(4'-methoxyphenylindenyl)zirconium dichloride
dimethylsilanediylbis-(2-methyl-4-(4'-tert-butylphenylindenyl)dimethylzirconium
dimethylsilanediylbis-(2-methyl-4-(4'-methylphenylindenyl)dimethylzirconium
dimethylsilanediylbis-(2-methyl-4-(4'-ethylphenylindenyl)dimethylzirconium
dimethylsilanediylbis-(2-methyl-4- (4'-trifluoromethylphenylindenyl)dimethylzirconium
dimethylsilanediylbis-(2-methyl-4-(4'-methoxyphenylindenyl)dimethylzirconium
dimethylsilanediylbis-(2-ethyl-4-(4'-tert-butylphenylindenyl)dimethylzirconium
dimethylsilanediylbis-(2-ethyl-4-(4'-methylphenylindenyl)dimethylzirconium
dimethylsilanediylbis-(2-ethyl-4-(4'-ethylphenylindenyl)dimethylzirconium
dimethylsilanediylbis-(2-ethyl-4-(4'-trifluoromethylphenylindenyl)dimethylzirconium
dimethylsilanediylbis-(2-ethyl-4-(4'-methoxyphenylindenyl)dimethylzirconium
dimethylsilanediylbis-(2-methyl-4-(4'-trimethylsilylphenylindenyl)zirconium dichloride
dimethylsilanediylbis-(2-methyl-4-(4'-trimethylsilylphenylindenyl)-dimethylzirconium
dimethylsilanediylbis-(2-ethyl-4-(4'-trimethylsilylphenylindenyl)zirconium dichloride
dimethylsilanediylbis-(2-ethyl-4-(4'-trimethylsilylphenylindenyl)-dimethylzirconium
dimethylsilanediylbis-(2-methyl-4-(4'-tert-butylphenyl)indenyl)hafnium dichloride
dimethylsilanediylbis-(2-methyl-4-(4'-tert-butylphenyl)indenyl)titanium dichloride
dimethylsilanediylbis-(2-methyl-4-(4'-methylphenyl)indenyl)zirconium dichloride dimethylsilanediylbis-(2-methyl-4-(4'-n-propylphenyl)indenyl)zirconium dichloride
dimethylsilanediylbis-(2-methyl-4-(4'-n-butylphenyl)indenyl)zirconium dichloride
dimethylsilanediylbis-(2-methyl-4-(4'-hexylphenyl)indenyl)zirconium dichloride dimethylsilanediylbis-(2-methyl-4-(4'-sec-butylphenyl)indenyl)zirconium dichloride
dimethylsilanediylbis-(2-ethyl-4-phenyl)indenyl)zirconium dichloride
dimethylsilanediylbis-(2-ethyl-4-(4'-methylphenyl)indenyl)zirconium dichloride
dimethylsilanediylbis-(2-ethyl-4-(4'-ethylphenyl)indenyl)zirconium dichloride
dimethylsilanediylbis-(2-ethyl-4-(4'-n-propylphenyl)indenyl)zirconium dichloride
dimethylsilanediylbis-(2-ethyl-4-(4'-n-butylphenyl)indenyl)zirconium dichloride
dimethylsilanediylbis-(2-ethyl-4-(4'-hexylphenyl)indenyl)zirconium dichloride
dimethylsilanediylbis-(2-ethyl-4-(4'-pentylphenyl)indenyl)zirconium dichloride
dimethylsilanediylbis-(2-ethyl-4-(4'-cyclohexylphenyl)indenyl)zirconium dichloride
dimethylsilanediylbis-(2-ethyl-4-(4'-sec-butylphenyl)indenyl)zirconium dichloride
dimethylsilanediylbis-(2-ethyl-4-(4'-tert-butylphenyl)indenyl)zirconium dichloride
dimethylsilanediylbis-(2-n-propyl-4-phenyl)indenyl)zirconium dichloride
dimethylsilanediylbis-(2-n-propyl-4-(4'-methylphenyl)indenyl)zirconium dichloride
dimethylsilanediylbis-(2-n-propyl-4-(4'-ethylphenyl)indenyl)zirconium dichloride
dimethylsilanediylbis-(2-n-propyl-4-(4'-isopropylphenyl)indenyl)zirconium dichloride
dimethylsilanediylbis-(2-n-propyl-4-(4'-n-butylphenyl)indenyl)zirconium dichloride
dimethylsilanediylbis-(2-n-propyl-4-(4'-hexylphenyl)indenyl)zirconium dichloride
dimethylsilanediylbis-(2-n-propyl-4-(4'-cyclohexylphenyl)indenyl)zirconium dichloride
dimethylsilanediylbis-(2-n-propyl-4-(4'-sec-butylphenyl)indenyl)zirconium dichloride
dimethylsilanediylbis-(2-n-propyl-4-(4'-tert-butylphenyl)indenyl)zirconium dichloride
dimethylsilanediylbis-(2-n-butyl-4-phenyl)indenyl)zirconium dichloride
dimethylsilanediylbis-(2-n-butyl-4-(4'-methylphenyl)indenyl)zirconium dichloride
dimethylsilanediylbis-(2-n-butyl-4-(4'-ethylphenyl)indenyl)zirconium dichloride
dimethylsilanediylbis-(2-n-butyl-4-(4'-n-propylphenyl)indenyl)zirconium dichloride
dimethylsilanediylbis-(2-n-butyl-4-(4'-isopropylphenyl)indenyl)zirconium dichloride
dimethylsilanediylbis-(2-n-butyl-4-(4'-n-butylphenyl)indenyl)zirconium dichloride
dimethylsilanediylbis-(2-n-butyl-4-(4'-hexylphenyl)indenyl)zirconium dichloride
dimethylsilanediylbis-(2-n-butyl-4-(4'-cyclohexylphenyl)indenyl)zirconium dichloride
dimethylsilanediylbis-(2-n-butyl-4-(4'-sec-butylphenyl)indenyl)zirconium dichloride
dimethylsilanediylbis-(2-n-butyl-4-(4'-tert-butylphenyl)indenyl)zirconium dichloride
dimethylsilanediylbis- (2-hexyl-4-phenyl)indenyl)zirconium dichloride

dimethylsilanediylbis-(2-hexyl-4-(4'-methylphenyl)indenyl)zirconium dichloride
dimethylsilanediylbis-(2-hexyl-4-(4'-ethylphenyl)indenyl)zirconium dichloride
dimethylsilanediylbis-(2-hexyl-4-(4'-n-propylphenyl)indenyl)zirconium dichloride
dimethylsilanediylbis-(2-hexyl-4-(4'-isopropylphenyl)indenyl)zirconium dichloride
dimethylsilanediylbis-(2-hexyl-4-(4'-n-butylphenyl)indenyl)zirconium dichloride
dimethylsilanediylbis-(2-hexyl-4-(4'-hexylphenyl)indenyl)zirconium dichloride
dimethylsilanediylbis-(2-hexyl-4-(4'-cyclohexylphenyl)indenyl)zirconium dichloride
dimethylsilanediylbis-(2-hexyl-4-(4'-sec-butylphenyl)indenyl)zirconium dichloride
dimethylsilanediylbis-(2-hexyl-4-(4'-tert-butylphenyl)indenyl)zirconium dichloride
dimethylsilanediylbis-(2-methyl-4-(4'-tert-butylphenyl)indenyl)zirconium bis(dimethylamide)
dimethylsilanediylbis-(2-ethyl-4-(4'-tert-butylphenyl)indenyl)dibenzylzirconium
dimethylsilanediylbis-(2-methyl-4-(4'-tert-butylphenyl)indenyl)dimethylzirconium
dimethylgermanediylbis-(2-ethyl-4-(4'-tert-butylphenyl)indenyl)zirconium dichloride
dimethylgermanediylbis-(2-ethyl-4-(4'-tert-butylphenyl)indenyl)hafnium dichloride
dimethylgermanediylbis-(2-propyl-4-(4'-tert-butylphenyl)indenyl)titanium dichloride
dimethylgermanediylbis-(2-methyl-4-(4'-tert-butylphenyl)indenyl)zirconium dichloride
ethylidenebis-(2-ethyl-4-phenyl)indenyl)zirconium dichloride
ethylidenebis-(2-ethyl-4-(4'-tert-butylphenyl)indenyl)zirconium dichloride
ethylidenebis-(2-n-propyl-4-(4'-tert-butylphenyl)indenyl)zirconium dichloride
ethylidenebis-(2-n-butyl-4-(4'-tert-butylphenyl)indenyl)titanium dichloride
ethylidenebis-(2-hexyl-4-(4'-tert-butylphenyl)indenyl)dibenzylzirconium
ethylidenebis-(2-ethyl-4-(4'-tert-butylphenyl)indenyl)hafnium dibenzyl
ethylidenebis-(2-methyl-4-(4'-tert-butylphenyl)indenyl)titanium dibenzyl
ethylidenebis-(2-methyl-4-(4'-tert-butylphenyl)indenyl)zirconium dichloride
ethylidenebis-(2-ethyl-4-(4'-tert-butylphenyl)indenyl)hafnium dimethyl
ethylidenebis-(2-n-propyl-4-a-phenyl)indenyl)titanium dimethyl
ethylidenebis-(2-ethyl-4-(4'-tert-butylphenyl)indenyl)zirconium bis-(dimethylamide)
ethylidenebis-(2-ethyl-4-(4'-tert-butylphenyl)indenyl)hafnium bis-(dimethylamide)
ethylidenebis-(2-ethyl-4-(4'-tert-butylphenyl)indenyl)titanium bis-(dimethylamide)
methylethylidenebis-(2-ethyl-4-(4'-tert-butylphenyl)indenyl)zirconium dichloride
methylethylidenebis- (2-ethyl-4-(4'-tert-butylphenyl)indenyl)hafnium dichloride
phenylphosphinediyl(2-ethyl-4-(4'-tert-butylphenyl)indenyl)zirconium dichloride
phenylphosphinediyl(2-methyl-4-(4'-tert-butylphenyl)indenyl)zirconium dichloride
phenylphosphinediyl(2-ethyl-4-(4'-tert-butylphenyl)indenyl)zirconium dichloride
dimethylsilanediyl(2-methyl-4-azapentalene)(2-methyl-4-(4'-methylphenylindenyl)zirconium dichloride
dimethylsilanediyl(2-methyl-5-azapentalene)(2-methyl-4-(4'-methylphenylindenyl)zirconium dichloride
dimethylsilanediyl(2-methyl-6-azapentalene)(2-methyl-4-(4'-methylphenylindenyl)zirconium dichloride
dimethylsilanediyl(2-methyl-N-phenyl-4-azapentalene)(2-methyl-4-(4'-methylphenylindenyl)zirconium dichloride
dimethylsilanediyl(2-methyl-N-phenyl-5-azapentalene) (2-methyl-4-(4'-methylphenylindenyl)zirconium dichloride
dimethylsilanediyl(2-methyl-N-phenyl-6-azapentalene)(2-methyl-4-(4'-methylphenylindenyl)zirconium dichloride
dimethylsilanediyl(2,5-dimethyl-4-azapentalene)(2-methyl-4-(4'-methylphenylindenyl)zirconium dichloride
dimethylsilanediyl(2,5-dimethyl-6-azapentalene)(2-methyl-4-(4'-methylphenylindenyl)zirconium dichloride
dimethylsilanediyl(2,5-dimethyl-N-phenyl-4-azapentalene)(2-methyl-4-(4'-methylphenylindenyl)zirconium dichloride
dimethylsilanediyl(2,5-dimethyl-N-phenyl-6-azapentalene) (2-methyl-4-(4'-methylphenylindenyl)zirconium dichloride
dimethylsilanediyl(2-methyl-4-thiapentalene)(2-methyl-4-(4'-methylphenylindenyl)zirconium dichloride
dimethylsilanediyl(2-methyl-5-thiapentalene)(2-methyl-4-(4'-methylphenylindenyl)zirconium dichloride
dimethylsilanediyl(2-methyl-6-thiapentalene)(2-methyl-4-(4'-methylphenylindenyl)zirconium dichloride
dimethylsilanediyl(2,5-dimethyl-4-thiapentalene) (2-methyl-4-(4'-methylphenylindenyl)zirconium dichloride
dimethylsilanediyl(2,5-dimethyl-6-thiapentalene) (2-methyl-4-(4'-methylphenylindenyl)zirconium dichloride
dimethylsilanediyl(2-methyl-4-oxapentalene)(2-methyl-4-(4'-methylphenylindenyl)zirconium dichloride
dimethylsilanediyl(2-methyl-5-oxapentalene)(2-methyl-4-(4'-methylphenylindenyl)zirconium dichloride
dimethylsilanediyl(2-methyl-6-oxapentalene) (2-methyl-4-(4'-methylphenylindenyl)zirconium dichloride
dimethylsilanediyl(2,5-dimethyl-4-oxapentalene)(2-methyl-4-(4'-methylphenylindenyl)zirconium dichloride
dimethylsilanediyl(2,5-dimethyl-6-oxapentalene) (2-methyl-4-(4'-methylphenylindenyl)zirconium dichloride
dimethylsilanediyl(2-methyl-4-azapentalene)(2-methyl-4-(4'-ethylphenylindenyl)zirconium dichloride
dimethylsilanediyl(2-methyl-5-azapentalene)(2-methyl-4-(4'-ethylphenylindenyl)zirconium dichloride

dimethylsilanediyl(2-methyl-6-azapentalene)(2-methyl-4-(4'-ethylphenylindenyl)zirconium dichloride
dimethylsilanediyl(2-methyl-N-phenyl-4-azapentalene)(2-methyl-4-(4'-ethylphenylindenyl)zirconium dichloride
dimethylsilanediyl(2-methyl-N-phenyl-5-azapentalene)(2-methyl-4-(4'-ethylphenylindenyl)zirconium dichloride
dimethylsilanediyl(2-methyl-N-phenyl-6-azapentalene) (2-methyl-4-(4'-ethylphenylindenyl)zirconium dichloride
dimethylsilanediyl(2,5-dimethyl-4-azapentalene)(2-methyl-4-(4'-ethylphenylindenyl)zirconium dichloride
dimethylsilanediyl(2,5-dimethyl-6-azapentalene)(2-methyl-4-(4'-ethylphenylindenyl)zirconium dichloride
dimethylsilanediyl(2,5-dimethyl-N-phenyl-4-azapentalene)(2-methyl-4-(4'-ethylphenylindenyl)zirconium dichloride
dimethylsilanediyl(2,5-dimethyl-N-phenyl-6-azapentalene)(2-methyl-4-(4'-ethylphenylindenyl)zirconium dichloride
dimethylsilanediyl(2-methyl-4-thiapentalene)(2-methyl-4-(4'-ethylphenylindenyl)zirconium dichloride
dimethylsilanediyl(2-methyl-5-thiapentalene)(2-methyl-4-(4'-ethylphenylindenyl)zirconium dichloride
dimethylsilanediyl(2-methyl-6-thiapentalene) (2-methyl-4-(4'-ethylphenylindenyl)zirconium dichloride
dimethylsilanediyl(2,5-dimethyl-4-thiapentalene)(2-methyl-4-(4'-ethylphenylindenyl)zirconium dichloride
dimethylsilanediyl(2,5-dimethyl-6-thiapentalene) (2-methyl-4-(4'-ethylphenylindenyl)zirconium dichloride
dimethylsilanediyl (2-methyl-4-oxapentalene)(2-methyl-4-(4'-ethylphenylindenyl)zirconium dichloride
dimethylsilanediyl(2-methyl-5-oxapentalene)(2-methyl-4-(4'-ethylphenylindenyl)zirconium dichloride
dimethylsilanediyl(2-methyl-6-oxapentalene)(2-methyl-4-(4'-ethylphenylindenyl)zirconium dichloride
dimethylsilanediyl(2,5-dimethyl-4-oxapentalene)(2-methyl-4-(4'-ethylphenylindenyl)zirconium dichloride
dimethylsilanediyl(2,5-dimethyl-6-oxapentalene)(2-methyl-4-(4'-ethylphenylindenyl)zirconium dichloride
dimethylsilanediyl(2-methyl-4-azapentalene)(2-methyl-4-(4'-n-propylphenylindenyl)zirconium dichloride
dimethylsilanediyl(2-methyl-5-azapentalene)(2-methyl-4-(4'-n-propylphenylindenyl)zirconium dichloride
dimethylsilanediyl(2-methyl-6-azapentalene)(2-methyl-4-(4'-n-propylphenylindenyl)zirconium dichloride
dimethylsilanediyl(2-methyl-N-phenyl-4-azapentalene)(2-methyl-4-(4'-n-propylphenylindenyl)zirconium dichloride
dimethylsilanediyl(2-methyl-N-phenyl-5-azapentalene)(2-methyl-4-(4'-n-propylphenylindenyl)zirconium dichloride
dimethylsilanediyl(2-methyl-N-phenyl-6-azapentalene)(2-methyl-4-(4'-n-propylphenylindenyl)zirconium dichloride
dimethylsilanediyl(2,5-dimethyl-4-azapentalene)(2-methyl-4-(4'-n-propylphenylindenyl)zirconium dichloride
dimethylsilanediyl(2,5-dimethyl-6-azapentalene)(2-methyl-4-(4'-n-propylphenylindenyl)zirconium dichloride
dimethylsilanediyl(2,5-dimethyl-N-phenyl-4-azapentalene)(2-methyl-4-(4'-n-propylphenylindenyl)zirconium dichloride
dimethylsilanediyl(2,5-dimethyl-N-phenyl-6-azapentalene) (2-methyl-4-(4'-n-propylphenylindenyl)zirconium dichloride
dimethylsilanediyl(2-methyl-4-thiapentalene)(2-methyl-4-(4'-n-propylphenylindenyl)zirconium dichloride
dimethylsilanediyl(2-methyl-5-thiapentalene)(2-methyl-4-(4'-n-propylphenylindenyl)zirconium dichloride
dimethylsilanediyl(2-methyl-6-thiapentalene)(2-methyl-4- (4'-n-propylphenylindenyl)zirconium dichloride
dimethylsilanediyl(2,5-dimethyl-4-thiapentalene)(2-methyl-4-(4'-n-propylphenylindenyl)zirconium dichloride
dimethylsilanediyl(2,5-dimethyl-6-thiapentalene) (2-methyl-4-(4'-n-propylphenylindenyl)zirconium dichloride
dimethylsilanediyl(2-methyl-4-oxapentalene)(2-methyl-4-(4'-n-propylphenylindenyl)zirconium dichloride
dimethylsilanediyl(2-methyl-5-oxapentalene) (2-methyl-4-(4'-n-propylphenylindenyl)zirconium dichloride
dimethylsilanediyl(2-methyl-6-oxapentalene)(2-methyl-4- (4'-n-propylphenyl; indenyl)zirconium dichloride
dimethylsilanediyl(2,5-dimethyl-4-oxapentalene) (2-methyl-4-(4'-n-propylphenylindenyl)zirconium dichloride
dimethylsilanediyl(2,5-dimethyl-6-oxapentalene)(2-methyl-4-(4'-n-propylphenylindenyl)zirconium dichloride
dimethylsilanediyl(2-methyl-4-azapentalene)(2-methyl-4-(4'-isopropylphenylindenyl)zirconium dichloride
dimethylsilanediyl(2-methyl-5-azapentalene) (2-methyl-4-(4'-isopropylphenylindenyl)zirconium dichloride
dimethylsilanediyl(2-methyl-6-azapentalene)(2-methyl-4-(4'-isopropylphenylindenyl)zirconium dichloride
dimethylsilanediyl(2-methyl-N-phenyl-4-azapentalene) (2-methyl-4-(4'-iso-propylphenylindenyl)zirconium dichloride
dimethylsilanediyl(2-methyl-N-phenyl-5-azapentalene)(2-methyl-4-(4'-iso-propylphenylindenyl)zirconium dichloride
dimethylsilanediyl(2-methyl-N-phenyl-6-azapentalene)(2-methyl-4-(4'-iso-propylphenylindenyl)zirconium dichloride
dimethylsilanediyl(2,5-dimethyl-4-azapentalene)(2-methyl-4-(4'-isopropylphenylindenyl)zirconium dichloride
dimethylsilanediyl(2,5-dimethyl-6-azapentalene)(2-methyl-4-(4'-isopropylphenylindenyl)zirconium dichloride
dimethylsilanediyl(2,5-dimethyl-N-phenyl-4-azapentalene)(2-methyl-4-(4'-isopropylphenylindenyl)zirconium dichloride dimethylsilanediyl(2,5-dimethyl-N-phenyl-6-azapentalene)(2-methyl-4-(4'-isopropylphenylindenyl)zirconium dichloride
dimethylsilanediyl(2-methyl-4-thiapentalene)(2-methyl-4-(4'-isopropylphenylindenyl)zirconium dichloride
dimethylsilanediyl(2-methyl-5-thiapentalene)(2-methyl-4-(4'-isopropylphenylindenyl)zirconium dichloride

dimethylsilanediyl(2-methyl-6-thiapentalene)(2-methyl-4-(4'-isopropylphenylindenyl)zirconium dichloride
dimethylsilanediyl(2,5-dimethyl-4-thiapentalene)(2-methyl-4-(4'-isopropylphenylindenyl)zirconium dichloride
dimethylsilanediyl(2,5-dimethyl-6-thiapentalene)(2-methyl-4-(4'-isopropylphenylindenyl)zirconium dichloride
dimethylsilanediyl(2-methyl-4-oxapentalene)(2-methyl-4-(4'-isopropylphenylindenyl)zirconium dichloride
dimethylsilanediyl(2-methyl-5-oxapentalene)(2-methyl-4-(4'-isopropylphenylindenyl)zirconium dichloride
dimethylsilanediyl(2-methyl-6-oxapentalene) (2-methyl-4-(4'-isopropylphenylindenyl)zirconium dichloride
dimethylsilanediyl(2,5-dimethyl-4-oxapentalene)(2-methyl-4-(4'-isopropylphenylindenyl)zirconium dichloride
dimethylsilanediyl(2,5-dimethyl-6-oxapentalene)(2-methyl-4-(4'-isopropylphenylindenyl)zirconium dichloride
dimethylsilanediyl(2-methyl-4-azapentalene) (2-methyl-4-(4'-n-butylphenylindenyl)zirconium dichloride
dimethylsilanediyl(2-methyl-5-azapentalene)(2-methyl-4-(4'-n-butylphenylindenyl)zirconium dichloride
dimethylsilanediyl(2-methyl-6-azapentalene)(2-methyl-4-(4'-n-butylphenylindenyl)zirconium dichloride
dimethylsilanediyl(2-methyl-N-phenyl-4-azapentalene) (2-methyl-4-(4'-n-butylphenylindenyl)zirconium dichloride
dimethylsilanediyl(2-methyl-N-phenyl-5-azapentalene) (2-methyl-4-(4'-n-butylphenylindenyl)zirconium dichloride
dimethylsilanediyl(2-methyl-N-phenyl-6-azapentalene)(2-methyl-4-(4'-n-butylphenylindenyl)zirconium dichloride
dimethylsilanediyl(2,5-dimethyl-4-azapentalene)(2-methyl-4-(4'-n-butyl-phenylindenyl)zirconium dichloride
dimethylsilanediyl(2,5-dimethyl-6-azapentalene)(2-methyl-4-(4'-n-butyl-phenylindenyl)zirconium dichloride
dimethylsilanediyl(2,5-dimethyl-N-phenyl-4-azapentalene)(2-methyl-4-(4'-n-butylphenylindenyl)zirconium dichloride
dimethylsilanediyl(2,5-dimethyl-N-phenyl-6-azapentalene)(2-methyl-4-(4'-n-butylphenylindenyl)zirconium dichloride
dimethylsilanediyl(2-methyl-4-thiapentalene)(2-methyl-4-(4'-n-butylphenylindenyl)zirconium dichloride
dimethylsilanediyl(2-methyl-5-thiapentalene)(2-methyl-4-(4'-n-butylphenylindenyl)zirconium dichloride
dimethylsilanediyl(2-methyl-6-thiapentalene)(2-methyl-4-(4'-n-butylphenylindenyl)zirconium dichloride
dimethylsilanediyl(2,5-dimethyl-4-thiapentalene)(2-methyl-4-(4'-n-butylphenylindenyl)zirconium dichloride
dimethylsilanediyl(2,5-dimethyl-6-thiapentalene)(2-methyl-4-(4'-n-butylphenylindenyl)zirconium dichloride
dimethylsilanediyl(2-methyl-4-oxapentalene)(2-methyl-4-(4'-n-butylphenylindenyl)zirconium dichloride
dimethylsilanediyl(2-methyl-5-oxapentalene)(2-methyl-4-(4'-n-butylphenylindenyl)zirconium dichloride
dimethylsilanediyl (2-methyl-6-oxapentalene)(2-methyl-4-(4'-n-butylphenylindenyl)zirconium dichloride
dimethylsilanediyl(2,5-dimethyl-4-oxapentalene)(2-methyl-4-(4'-n-butylphenylindenyl)zirconium dichloride
dimethylsilanediyl(2,5-dimethyl-6-oxapentalene)(2-methyl-4-(4'-n-butylphenylindenyl)zirconium dichloride
dimethylsilanediyl(2-methyl-4-azapentalene)(2-methyl-4-(4'-s-butylphenylindenyl)zirconium dichloride
dimethylsilanediyl(2-methyl-5-azapentalene)(2-methyl-4-(4'-s-butylphenylindenyl)zirconium dichloride
dimethylsilanediyl(2-methyl-6-azapentalene)(2-methyl-4-(4'-s-butylphenylindenyl)zirconium dichloride
dimethylsilanediyl(2-methyl-N-phenyl-4-azapentalene)(2-methyl-4-(4'-s-butylphenylindenyl)zirconium dichloride
dimethylsilanediyl(2-methyl-N-phenyl-5-azapentalene)(2-methyl-4-(4'-s-butylphenylindenyl)zirconium dichloride
dimethylsilanediyl(2-methyl-N-phenyl-6-azapentalene) (2-methyl-4-(4'-s-butylphenylindenyl)zirconium dichloride
dimethylsilanediyl(2,5-dimethyl-4-azapentalene) (2-methyl-4-(4'-s-butylphenylindenyl)zirconium dichloride
dimethylsilanediyl(2,5-dimethyl-6-azapentalene)(2-methyl-4-(4'-s-butylphenylindenyl)zirconium dichloride
dimethylsilanediyl(2,5-dimethyl-N-phenyl-4-azapentalene)(2-methyl-4-(4'-s-butylphenylindenyl)zirconium dichloride
dimethylsilanediyl(2,5-dimethyl-N-phenyl-6-azapentalene)(2-methyl-4-(4'-s-butylphenylindenyl)zirconium dichloride
dimethylsilanediyl(2-methyl-4-thiapentalene)(2-methyl-4-(4'-s-butylphenylindenyl)zirconium dichloride
dimethylsilanediyl(2-methyl-5-thiapentalene)(2-methyl-4- (4'-s-butylphenylindenyl)zirconium dichloride
dimethylsilanediyl(2-methyl-6-thiapentalene)(2-methyl-4-(4'-s-butylphenylindenyl)zirconium dichloride
dimethylsilanediyl(2,5-dimethyl-4-thiapentalene)(2-methyl-4-(4'-s-butylphenylindenyl)zirconium dichloride
dimethylsilanediyl(2,5-dimethyl-6-thiapentalene)(2-methyl-4-(4'-s-butylphenylindenyl)zirconium dichloride
dimethylsilanediyl(2-methyl-4-oxapentalene) (2-methyl-4-(4'-s-butylphenylindenyl)zirconium dichloride
dimethylsilanediyl(2-methyl-5-oxapentalene)(2-methyl-4-(4'-s-butylphenylindenyl)zirconium dichloride
dimethylsilanediyl(2-methyl-6-oxapentalene)(2-methyl-4-(4'-s-butylphenylindenyl)zirconium dichloride
dimethylsilanediyl(2,5-dimethyl-4-oxapentalene)(2-methyl-4-(4'-s-butylphenylindenyl)zirconium dichloride
dimethylsilanediyl(2,5-dimethyl-6-oxapentalene)(2-methyl-4-(4'-s-butylphenylindenyl)zirconium dichloride
dimethylsilanediyl(2-methyl-4-azapentalene)(2-methyl-4-(4'-tert-butylphenylindenyl)zirconium dichloride
dimethylsilanediyl(2-methyl-5-azapentalene) (2-methyl-4-(4'-tert-butylphenylindenyl)zirconium dichloride
dimethylsilanediyl(2-methyl-6-azapentalene)(2-methyl-4-(4'-tert-butylphenylindenyl)zirconium dichloride
dimethylsilanediyl(2-methyl-N-phenyl-4-azapentalene)(2-methyl-4-(4'-tert-butylphenylindenyl)zirconium dichloride
dimethylsilanediyl(2-methyl-N-phenyl-5-azapentalene)(2-methyl-4-(4'-tert-butylphenylindenyl)zirconium dichloride
dimethylsilanediyl(2-methyl-N-phenyl-6-azapentalene)(2-methyl-4-(4'-tert-butylphenylindenyl)zirconium dichloride
dimethylsilanediyl(2,5-dimethyl-4-azapentalene)(2-methyl-4-(4'-tert-butylphenylindenyl)zirconium dichloride
dimethylsilanediyl(2,5-dimethyl-6-azapentalene) (2-methyl-4-(4'-tert-butylphenylindenyl)zirconium dichloride
dimethylsilanediyl(2,5-dimethyl-N-phenyl-4-azapentalene)(2-methyl-4-(4'-tert-butylphenylindenyl)zirconium dichloride
dimethylsilanediyl(2,5-dimethyl-N-phenyl-6-azapentalene)(2-methyl-4-(4'-tert-butylphenylindenyl)zirconium dichloride
dimethylsllanediyl(2-methyl-4-thiapentalene)(2-methyl-4-(4'-tert-butylphenylindenyl)zirconium dichloride
dimethylsilanediyl(2-methyl-5-thiapentalene)(2-methyl-4-(4'-tert-butylphenylindenyl)zirconium dichloride
dimethylsilanediyl(2-methyl-6-thiapentalene) (2-methyl-4-(4'-tert-butylphenylindenyl)zirconium dichloride
dimethylsilanediyl(2,5-dimethyl-4-thiapentalene)(2-methyl-4-(4'-tert-butylphenylindenyl)zirconium dichloride
dimethylsilanediyl(2,5-dimethyl-6-thiapentalene)(2-methyl-4-(4'-tert-butylphenylindenyl)zirconium dichloride
dimethylsilanediyl(2-methyl-4-oxapentalene)(2-methyl-4-(4'-tert-butylphenylindenyl)zirconium dichloride
dimethylsilanediyl(2-methyl-5-oxapentalene)(2-methyl-4-(4'-tert-butylphenylindenyl)zirconium dichloride
dimethylsilanediyl(2-methyl-6-oxapentalene)(2-methyl-4-(4'-tert-butylphenylindenyl)zirconium dichloride
dimethylsilanediyl(2,5-dimethyl-4-oxapentalene)(2-methyl-4-(4'-tert-butylphenylindenyl)zirconium dichloride
dimethylsilanediyl(2,5-dimethyl-6-oxapentalene) (2-methyl-4-(4'-tert-butylphenylindenyl)zirconium dichloride
dimethylsilanediyl(2-methyl-4-azapentalene)(2-methyl-4-(4'-n-pentylphenylindenyl)zirconium dichloride
dimethylsilanediyl(2-methyl-5-azapentalene)(2-methyl-4-(4'-n-pentylphenylindenyl)zirconium dichloride
dimethylsilanediyl(2-methyl-6-azapentalene) (2-methyl-4-(4'-n-pentylphenylindenyl)zirconium dichloride
dimethylsilanediyl(2-methyl-N-phenyl-4-azapentalene)(2-methyl-4-(4'-n-pentylphenylindenyl)zirconium dichloride
dimethylsilanediyl(2-methyl-N-phenyl-5-azapentalene)(2-methyl-4-(4'-n-pentylphenylindenyl)zirconium dichloride
dimethylsilanediyl(2-methyl-N-phenyl-6-azapentalene)(2-methyl-4-(4'-n-pentylphenylindenyl)zirconium dichloride
dimethylsilanediyl(2,5-dimethyl-4-azapentalene)(2-methyl-4-(4'-n-pentylphenylindenyl)zirconium dichloride
dimethylsilanediyl(2,5-dimethyl-6-azapentalene)(2-methyl-4-(4'-n-pentylphenylindenyl)zirconium dichloride
dimethylsilanediyl(2,5-dimethyl-N-phenyl-4-azapentalene) (2-methyl-4-(4'-n-pentylphenylindenyl)zirconium dichloride
dimethylsilanediyl(2,5-dimethyl-N-phenyl-6-azapentalene)(2-methyl-4-(4'-n-pentylphenylindenyl)zirconium dichloride
dimethylsilanediyl(2-methyl-4-thiapentalene)(2-methyl-4-(4'-n-pentylphenylindenyl)zirconium dichloride
dimethylsilanediyl(2-methyl-5-thiapentalene)(2-methyl-4-(4'-n-pentylphenylindenyl)zirconium dichloride
dimethylsilanediyl(2-methyl-6-thiapentalene) (2-methyl-4-(4'-n-pentylphenylindenyl)zirconium dichloride
dimethylsilanediyl(2,5-dimethyl-4-thiapentalene)(2-methyl-4-(4'-n-pentylphenylindenyl)zirconium dichloride
dimethylsilanediyl(2,5-dimethyl-6-thiapentalene) (2-methyl-4-(4'-n-pentylphenylindenyl)zirconium dichloride
dimethylsilanediyl(2-methyl-4-oxapentalene) (2-methyl-4-(4'-n-pentylphenylindenyl)zirconium dichloride
dimethylsilanediyl(2-methyl-5-oxapentalene) (2-methyl-4-(4'-n-pentylphenylindenyl)zirconium dichloride
dimethylsilanediyl(2-methyl-6-oxapentalene)(2-methyl-4-(4'-n-pentylphenylindenyl)zirconium dichloride
dimethylsilanediyl(2,5-dimethyl-4-oxapentalene)(2-methyl-4-(4'-n-pentylphenylindenyl)zirconium dichloride
dimethylsilanediyl(2,5-dimethyl-6-oxapentalene)(2-methyl-4-(4'-n-pentylphenylindenyl)zirconium dichloride
dimethylsilanediyl(2-methyl-4-azapentalene) (2-methyl-4-(4'-n-hexylphenylindenyl)zirconium dichloride
dimethylsilanediyl(2-methyl-5-azapentalene)(2-methyl-4-(4'-n-hexylphenylindenyl)zirconium dichloride
dimethylsilanediyl(2-methyl-6-azapentalene)(2-methyl-4-(4'-n-hexylphenylindenyl)zirconium dichloride
dimethylsilanediyl(2-methyl-N-phenyl-4-azapentalene)(2-methyl-4-(4'-n-hexylphenylindenyl)zirconium dichloride
dimethylsilanediyl(2-methyl-N-phenyl-5-azapentalene)(2-methyl-4-(4'-n-hexylphenylindenyl)zirconium dichloride
dimethylsilanediyl(2-methyl-N-phenyl-6-azapentalene)(2-methyl-4-(4'-n-hexylphenylindenyl)zirconium dichloride
dimethylsilanediyl(2,5-dimethyl-4-azapentalene)(2-methyl-4-(4'-n-hexylphenylindenyl)zirconium dichloride
dimethylsilanediyl(2,5-dimethyl-6-azapentalene)(2-methyl-4-(4'-n-hexylphenylindenyl)zirconium dichloride
dimethylsilanediyl(2,5-dimethyl-N-phenyl-4-azapentalene)(2-methyl-4-(4'-n-hexylphenylindenyl)zirconium dichloride
dimethylsilanediyl(2,5-dimethyl-N-phenyl-6-azapentalene) (2-methyl-4-(4'-n-hexylphenylindenyl)zirconium dichloride
dimethylsilanediyl(2-methyl-4-thiapentalene)(2-methyl-4-(4'-n-hexylphenylindenyl)zirconium dichloride
dimethylsilanediyl(2-methyl-5-thiapentalene)(2-methyl-4-(4'-n-hexylphenylindenyl)zirconium dichloride
dimethylsilanediyl(2-methyl-6-thiapentalene)(2-methyl-4-(4'-n-hexylphenylindenyl)zirconium dichloride
dimethylsllanediyl(2,5-dimethyl-4-thiapentalene) (2-methyl-4-(4'-n-hexylphenylindenyl)zirconium dichloride
dimethylsilanediyl(2,5-dimethyl-6-thiapentalene)(2-methyl-4-(4'-n-hexylphenylindenyl)zirconium dichloride

dimethylsilanediyl(2-methyl-4-oxapentalene) (2-methyl-4-(4'-n-hexylphenylindenyl)zirconium dichloride
dimethylsilanediyl(2-methyl-5-oxapentalene) (2-methyl-4-(4'-n-hexylphenylindenyl)zirconium dichloride
dimethylsilanediyl(2-methyl-6-oxapentalene)(2-methyl-4-(4'-n-hexylphenylindenyl)zirconium dichloride
dimethylsilanediyl(2,5-dimethyl-4-oxapentalene)(2-methyl-4-(4'-n-hexylphenylindenyl)zirconium dichloride
dimethylsilanediyl(2,5-dimethyl-6-oxapentalene)(2-methyl-4-(4'-n-hexylphenylindenyl)zirconium dichloride
dimethylsilanediyl(2-methyl-4-azapentalene)(2-methyl-4-(4'-cyclohexylphenylindenyl)zirconium dichloride
dimethylsilanediyl(2-methyl-5-azapentalene) (2-methyl-4-(4'-cyclohexylphenylindenyl)zirconium dichloride
dimethylsilanediyl(2-methyl-6-azapentalene)(2-methyl-4-(4'-cyclohexylphenylindenyl)zirconium dichloride
dimethylsilanediyl(2-methyl-N-phenyl-4-azapentalene)(2-methyl-4-(4'-cyclohexylphenylindenyl)zirconium dichloride
dimethylsilanediyl(2-methyl-N-phenyl-5-azapentalene)(2-methyl-4-(4'-cyclohexylphenylindenyl)zirconium dichloride
dimethylsilanediyl(2-methyl-N-phenyl-6-azapentalene)(2-methyl-4-(4'-cyclohexylphenylindenyl)zirconium dichloride
dimethylsilanediyl(2,5-dimethyl-4-azapentalene)(2-methyl-4-(4'-cyclohexylphenylindenyl)zirconium dichloride
dimethylsilanediyl(2,5-dimethyl-6-azapentalene)(2-methyl-4-(4'-cyclohexylphenylindenyl)zirconium dichloride
dimethylsilanediyl(2,5-dimethyl-N-phenyl-4-azapentalene)(2-methyl-4-(4'-cyclohexylphenylindenyl)zirconium dichloride
dimethylsilanediyl(2,5-dimethyl-N-phenyl-6-azapentalene)(2-methyl-4-(4'-cyclohexylphenylindenyl)zirconium dichloride
dimethylsilanediyl(2-methyl-4-thiapentalene)(2-methyl-4-(4'-cyclohexylphenylindenyl)zirconium dichloride
dimethylsilanediyl(2-methyl-5-thiapentalene)(2-methyl-4-(4'-cyclohexylphenylindenyl)zirconium dichloride
dimethylsilanediyl(2-methyl-6-thiapentalene)(2-methyl-4-(4'-cyclohexylphenylindenyl)zirconium dichloride
dimethylsilanediyl(2,5-dimethyl-4-thiapentalene)(2-methyl-4-(4'-cyclohexylphenylindenyl)zirconium dichloride
dimethylsilanediyl(2,5-dimethyl-6-thiapentalene)(2-methyl-4-(4'-cyclohexylphenylindenyl)zirconium dichloride
dimethylsilanediyl(2-methyl-4-oxapentalene)(2-methyl-4-(4'-cyclohexylphenylindenyl)zirconium dichloride
dimethylsilanediyl(2-methyl-5-oxapentalene)(2-methyl-4-(4'-cyclohexylphenylindenyl)zirconium dichloride
dimethylsilanediyl(2-methyl-6-oxapentalene)(2-methyl-4-(4'-cyclohexylphenylindenyl)zirconium dichloride
dimethylsilanediyl(2,5-dimethyl-4-oxapentalene)(2-methyl-4-(4'-cyclohexylphenylindenyl)zirconium dichloride
dimethylsilanediyl(2,5-dimethyl-6-oxapentalene)(2-methyl-4-(4'-cyclohexylphenylindenyl)zirconium dichloride
dimethylsilanediyl(2-methyl-4-azapentalene)(2-methyl-4-(4'-trimethylsilylphenylindenyl)zirconium dichloride
dimethylsilanediyl(2-methyl-5-azapentalene)(2-methyl-4-(4'-trimethylsilylphenylindenyl)zirconium dichloride
dimethylsilanediyl(2-methyl-6-azapentalene)(2-methyl-4-(4'-trimethylsilylphenylindenyl)zirconium dichloride
dimethylsilanediyl(2-methyl-N-phenyl-4-azapentalene)(2-methyl-4-(4'-trimethylsilylphenylindenyl)zirconium dichloride
dimethylsilanediyl(2-methyl-N-phenyl-5-azapentalene)(2-methyl-4-(4'-trimethylsilylphenylindenyl)zirconium dichloride
dimethylsilanediyl(2-methyl-N-phenyl-6-azapentalene)(2-methyl-4-(4'-trimethylsilylphenylindenyl)zirconium dichloride dimethylsilanediyl(2,5-dimethyl-4-azapentalene)(2-methyl-4-(4'-trimethylsilylphenylindenyl)zirconium dichloride
dimethylsilanediyl(2,5-dimethyl-6-azapentalene)(2-methyl-4-(4'-trimethylsilylphenylindenyl)zirconium dichloride
dimethylsilanediyl(2,5-dimethyl-N-phenyl-4-azapentalene) (2-methyl-4-(4'-trimethylsilylphenylindenyl)zirconium dichloride
dimethylsilanediyl(2,5-dimethyl-N-phenyl-6-azapentalene) (2-methyl-4-(4'-trimethylsilylphenylindenyl)zirconium dichloride
dimethylsilanediyl(2-methyl-4-thiapentalene)(2-methyl-4-(4'-trimethylsilylphenylindenyl)zirconium dichloride
dimethylsilanediyl(2-methyl-5-thiapentalene) (2-methyl-4-(4'-trimethylsilylphenylindenyl)zirconium dichloride
dimethylsilanediyl(2-methyl-6-thiapentalene)(2-methyl-4-(4'-trimethylsilylphenylindenyl)zirconium dichloride
dimethylsilanediyl(2,5-dimethyl-4-thiapentalene)(2-methyl-4-(4'-trimethylsilylphenylindenyl)zirconium dichloride
dimethylsilanediyl(2,5-dimethyl-6-thiapentalene)(2-methyl-4-(4'-trimethylsilylphenylindenyl)zirconium dichloride
dimethylsilanediyl(2-methyl-4-oxapentalene) (2-methyl-4-(4'-trimethylsilylphenylindenyl)zirconium dichloride
dimethylsilanediyl(2-methyl-5-oxapentalene)(2-methyl-4-(4'-trimethylsilylphenylindenyl)zirconium dichloride
dimethylsilanediyl(2-methyl-6-oxapentalene)(2-methyl-4-(4'-trimethylsilylphenylindenyl)zirconium dichloride
dimethylsilanediyl(2,5-dimethyl-4-oxapentalene)(2-methyl-4-(4'-trimethylsilylphenylindenyl)zirconium dichloride
dimethylsilanediyl(2,5-dimethyl-6-oxapentalene)(2-methyl-4-(4'-trimethylsilylphenylindenyl)zirconium dichloride
dimethylsilanediyl(2-methyl-4-azapentalene)(2-methyl-4-(4'-adamantylphenylindenyl)zirconium dichloride
dimethylsilanediyl(2-methyl-5-azapentalene)(2-methyl-4-(4'-adamantylphenylindenyl)zirconium dichloride
dimethylsilanediyl(2-methyl-6-azapentalene)(2-methyl-4-(4'-adamantylphenylindenyl)zirconium dichloride

dimethylsilanediyl(2-methyl-N-phenyl-4-azapentalene)(2-methyl-4-(4'-adamantylphenylindenyl)zirconium dichloride
dimethylsilanediyl(2-methyl-N-phenyl-5-azapentalene) (2-methyl-4-(4'-adamantylphenylindenyl)zirconium dichloride
dimethylsilanediyl(2-methyl-N-phenyl-6-azapentalene) (2-methyl-4-(4'-adamantylphenylindenyl)zirconium dichloride
dimethylsilanediyl(2,5-dimethyl-4-azapentalene)(2-methyl-4-(4'-adamantylphenylindenyl)zirconium dichloride
dimethylsilanediyl(2,5-dimethyl-6-azapentalene) (2-methyl-4-(4'-adamantylphenylindenyl)zirconium dichloride
dimethylsilanediyl(2,5-dimethyl-4-azapentalene) (2-methyl-4-(4'-adamantylphenylindenyl)zirconium dichloride
dimethylsilanediyl(2,5-dimethyl-N-phenyl-4-azapentalene)(2-methyl-4-(4'-adamantylphenylindenyl)zirconium dichloride
dimethylsilanediyl(2,5-dimethyl-N-phenyl-6-azapentalene)(2-methyl-4-(4'-adamantylphenylindenyl)zirconium dichloride
dimethylsilanediyl(2-methyl-4-thiapentalene)(2-methyl-4-(4'-adamantylphenylindenyl)zirconium dichloride
dimethylsilanediyl(2-methyl-5-thiapentalene)(2-methyl-4-(4'-adamantylphenylindenyl)zirconium dichloride
dimethylsilanediyl(2-methyl-6-thiapentalene)(2-methyl-4-(4'-adamantylphenylindenyl)zirconium dichloride
dimethylsilanediyl(2,5-dimethyl-4-thiapentalene)(2-methyl-4-(4'-adamantylphenylindenyl)zirconium dichloride
dimethylsilanediyl(2,5-dimethyl-6-thiapentalene)(2-methyl-4-(4'-adamantylphenylindenyl)zirconium dichloride
dimethylsilanediyl(2-methyl-4-oxapentalene)(2-methyl-4-(4'-adamantylphenylindenyl)zirconium dichloride
dimethylsilanediyl(2-methyl-5-oxapentalene)(2-methyl-4-(4'-adamantylphenylindenyl)zirconium dichloride
dimethylsilanediyl(2-methyl-6-oxapentalene)(2-methyl-4-(4'-adamantylphenylindenyl)zirconium dichloride
dimethylsilanediyl(2,5-dimethyl-4-oxapentalene)(2-methyl-4-(4'-adamantylphenylindenyl)zirconium dichloride
dimethylsilanediyl(2,5-dimethyl-6-oxapentalene)(2-methyl-4-(4'-adamantylphenylindenyl)zirconium dichloride
dimethylsilanediyl(2-methyl-4-azapentalene)(2-methyl-4-(4'-tris (trifluoromethyl)methylphenylindenyl)zirconium dichloride
dimethylsilanediyl(2-methyl-5-azapentalene)(2-methyl-4-(4'-tris (trifluoromethyl)methylphenylindenyl)zirconium dichloride
dimethylsilanediyl(2-methyl-6-azapentalene)(2-methyl-4-(4'-tris (trifluoromethyl)methylphenylindenyl)zirconium dichloride
dimethylsilanediyl(2-methyl-N-phenyl-4-azapentalene) (2-methyl-4-(4'-tris-(trifluoromethyl)methylphenylindenyl) zirconium dichloride
dimethylsilanediyl(2-methyl-N-phenyl-5-azapentalene) (2-methyl-4-(4'-tris-(trifluoromethyl)methylphenylindenyl) zirconium dichloride
dimethylsilanediyl(2-methyl-N-phenyl-6-azapentalene)(2-methyl-4-(4'-tris-(trifluoromethyl)methylphenylindenyl) zirconium dichloride
dimethylsilanediyl(2,5-dimethyl-4-azapentalene)(2-methyl-4-(4'-tris(trifluoromethyl)methylphenylindenyl)zirconium dichloride
dimethylsilanediyl(2,5-dimethyl-6-azapentalene)(2-methyl-4-(4'-tris(trifluoromethyl)methylphenylindenyl)zirconium dichloride
dimethylsilanediyl(2,5-dimethyl-N-phenyl-4-azapentalene)(2-methyl-4-(4'-tris(trifluoromethyl)methylphenylindenyl)zirconium dichloride
dimethylsilanediyl(2,5-dimethyl-N-phenyl-6-azapentalene)(2-methyl-4-(4'-tris(trifluoromethyl)methylphenylindenyl)zirconium dichloride
dimethylsilanediyl(2-methyl-4-thiapentalene) (2-methyl-4-(4'-tris (trifluoromethyl)methylphenylindenyl)zirconium dichloride
dimethylsilanediyl(2-methyl-5-thiapentalene) (2-methyl-4-(4'-tris (trifluoromethyl)methylphenylindenyl)zirconium dichloride
dimethylsilanediyl(2-methyl-6-thiapentalene)(2-methyl-4-(4'-tris (trifluoromethyl)methylphenylindenyl)zirconium dichloride
dimethylsilanediyl(2,5-dimethyl-4-thiapentalene)(2-methyl-4-(4'-tris(trifluoromethyl)methylphenylindenyl)zirconium dichloride
dimethylsilanediyl(2,5-dimethyl-6-thiapentalene)(2-methyl-4-(4'-tris(trifluoromethyl)methylphenylindenyl)zirconium dichloride
dimethylsilanediyl(2-methyl-4-oxapentalene)(2-methyl-4-(4'-tris (trifluoromethyl)methylphenylindenyl)zirconium dichloride
dimethylsilanediyl(2-methyl-5-oxapentalene)(2-methyl-4-(4'-tris (trifluoromethyl)methylphenylindenyl)zirconium dichloride
dimethylsilanediyl(2-methyl-6-oxapentalene)(2-methyl-4-(4'-tris (trifluoromethyl)methylphenylindenyl)zirconium

dichloride
dimethylsilanediyl(2,5-dimethyl-4-oxapentalene)(2-methyl-4-(4'-tris(trifluoromethyl)methylphenylindenyl)zirconium dichloride
dimethylsilanediyl(2,5-dimethyl-6-oxapentalene)(2-methyl-4-(4'-tris(trifluoromethyl)methylphenylindenyl)zirconium dichloride
dimethylsilanediyl(2-methyl-4-azapentalene)(2-ethyl-4-(4'-tert-butylphenylindenyl)zirconium dichloride
dimethylsilanediyl(2-methyl-5,6-dihydro-4-azapentalene)(2-ethyl-4-(4'-tert-butylphenylindenyl)zirconium dichloride
dimethylsilanediyl(2-methyl-4-azapentalene)(2-ethyl-4-(4'-tert-butylphenyltetrahydroindenyl)zirconium dichloride
dimethylsilanediyl(2-methyl-5-azapentalene)(2-n-butyl-4-(4'-tert-butylphenylindenyl)zirconium dichloride
ethylidene(2-methyl-6-azapentalene) (2-methyl-4-(4'-tert-butylphenylindenyl)-zirconium dichloride
dimethylsilanediyl (2-methyl-N-trimethylsilyl-4-azapentalene) (2-methyl-4-(4'-tert-butylphenylindenyl)zirconium dichloride
dimethylsilanediyl(2-methyl-N-tolyl-5-azapentalene)(2-n-propyl-4-(4'-tert-butylphenylindenyl)zirconium dichloride
dimethylgermyldiyl(2-methyl-N-phenyl-6-azapentalene) (2-methyl-4-(4'-tert-butylphenylindenyl)zirconium dichloride
methylethylidene(2,5-dimethyl-4-azapentalene)(2-methyl-4-(4'-tert-butylphenylindenyl)zirconium dichloride
dimethylsilanediyl(2,5-diisopropyl-6-azapentalene)(2-methyl-4-(4'-tert-butylphenylindenyl)zirconium dichloride
dimethylsilanediyl(2,5-dimethyl-N-phenyl-4-azapentalene)(2,6-dimethyl-4-(4'-tert-butylphenylindenyl)zirconium dichloride
dimethylsilanediyl(2,5-dimethyl-N-phenyl-6-azapentalene) (2-methyl-4-(6'-tert-butylnaphthylindenyl)zirconium dichloride
dimethylsilanediyl(2,5-dimethyl-N-phenyl-6-azapentalene) (2-methyl-4-(6'-tert-butyianthracenylindenyl)zirconium dichloride
dimethylsilanediyl(2-methyl-4-phosphapentalene) (2-methyl-4-(4'-tert-butylphenylindenyl)zirconium dichloride
diphenylsilanediyl(2-methyl-5-thiapentalene)(2-methyl-4-(4'-tert-butylphenylindenyl)zirconium dichloride
methylphenylsilanediyl(2-methyl-6-thiapentalene) (2-methyl-4-(4'-tert-butylphenylindenyl)zirconium dichloride
methylidene(2,5-dimethyl-4-thiapentalene)(2-methyl-4-(4'-tert-butylphenylindenyl)zirconium dichloride
dimethylmethylidene(2,5-dimethyl-6-thiapentalene)(2-methyl-4-(4'-tert-butylphenylindenyl)zirconium dichloride
diphenylsilanediyl(2,5-dimethyl-4-oxapentalene) (2-methyl-4-(4'-tert-butylphenylindenyl)zirconium dichloride
diphenylsilanediyl(2,5-dimethyl-6-oxapentalene)(2-methyl-4-(4'-tert-butylphenylindenyl)zirconium dichloride
dimethylsilanediyl(2-methyl-4-azapentalene) (2-methylindenyl)zirconium dichloride
dimethylsilanediyl(2-methyl-5-azapentalene) (2-methylindenyl)zirconium dichloride
dimethylsilanediyl(2-methyl-6-azapentalene)(2-methylindenyl)zirconium dichloride
dimethylsilanediyl(2-methyl-N-phenyl-4-azapentalene)(2-methylindenyl)-zirconium dichloride
dimethylsilanediyl(2-methyl-N-phenyl-5-azapentalene) (2-methylindenyl)-zirconium dichloride
dimethylsilanediyl(2-methyl-N-phenyl-6-azapentalene) (2-methylindenyl)-zirconium dichloride
dimethylsilanediyl(2,5-dimethyl-4-azapentalene)(2-methylindenyl)zirconium dichloride
dimethylsilanediyl(2,5-dimethyl-6-azapentalene) (2-methylindenyl)zirconium dichloride
dimethylsilanediyl(2,5-dimethyl-N-phenyl-4-azapentalene)(2-methylindenyl)-zirconium dichloride
dimethylsilanediyl(2,5-dimethyl-N-phenyl-6-azapentalene)(2-methylindenyl)-zirconium dichloride
dimethylsilanediyl(2-methyl-4-thiapentalene)(2-methylindenyl)zirconium dichloride
dimethylsilanediyl(2-methyl-5-thiapentalene)(2-methylindenyl)zirconium dichloride
dimethylsilanediyl(2-methyl-6-thiapentalene)(2-methylindenyl)zirconium dichloride
dimethylsilanediyl(2,5-dimethyl-4-thiapentalene)(2-methylindenyl)zirconium dichloride
dimethylsilanediyl(2,5-dimethyl-6-thiapentalene) (2-methylindenyl)zirconium dichloride
dimethylsilanediyl(2-methyl-4-oxapentalene)(2-methylindenyl)zirconium dichloride
dimethylsilanediyl(2-methyl-5-oxapentalene)(2-methylindenyl)zirconium dichloride
dimethylsilanediyl(2-methyl-6-oxapentalene)(2-methylindenyl)zirconium dichloride
dimethylsilanediyl(2,5-dimethyl-4-oxapentalene)(2-methylindenyl)zirconium dichloride
dimethylsilanediyl(2,5-dimethyl-6-oxapentalene)(2-methylindenyl)zirconium dichloride
dimethylsilanediyl(2-methyl-4-azapentalene)(indenyl)zirconium dichloride
dimethylsilanediyl(2-methyl-5-azapentalene)(indenyl)zirconium dichloride
dimethylsilanediyl(2-methyl-6-azapentalene)(indenyl)zirconium dichloride
dimethylsilanediyl(2-methyl-N-phenyl-4-azapentalene)(indenyl)zirconium dichloride
dimethylsilanediyl(2-methyl-N-phenyl-5-azapentalene)(indenyl)zirconium dichloride
dimethylsilanediyl(2-methyl-N-phenyl-6-azapentalene)(indenyl)zirconium dichloride
dimethylsilanediyl(2,5-dimethyl-4-azapentalene)(indenyl)zirconium dichloride

dimethylsilanediyl(2,5-dimethyl-6-azapentalene)(indenyl)zirconium dichloride
dimethylsilanediyl(2,5-dimethyl-N-phenyl-4-azapentalene)(indenyl)zirconium dichloride
dimethylsilanediyl(2,5-dimethyl-N-phenyl-6-azapentalene)(indenyl)zirconium dichloride
dimethylsilanediyl(2-methyl-4-thiapentalene)(indenyl)zirconium dichloride
dimethylsilanediyl(2-methyl-5-thiapentalene)(indenyl)zirconium dichloride
dimethylsilanediyl(2-methyl-6-thiapentalene)(indenyl)zirconium dichloride
dimethylsilanediyl(2,5-dimethyl-4-thiapentalene)(indenyl)zirconium dichloride
dimethylsilanediyl(2,5-dimethyl-6-thiapentalene)(indenyl)zirconium dichloride
dimethylsilanediyl(2-methyl-4-oxapentalene)(indenyl)zirconium dichloride
dimethylsilanediyl(2-methyl-5-oxapentalene)(indenyl)zirconium dichloride
dimethylsilanediyl(2-methyl-6-oxapentalene)(indenyl)zirconium dichloride
dimethylsilanediyl(2,5-dimethyl-4-oxapentalene)(indenyl)zirconium dichloride
dimethylsilanediyl(2,5-dimethyl-6-oxapentalene)(indenyl)zirconium dichloride
dimethylsilanediyl(2-methyl-4-azapentalene) (2-methyl-4-phenylindenyl)-zirconium dichloride
dimethylsilanediyl(2-methyl-5-azapentalene)(2-methyl-4-phenylindenyl)-zirconium dichloride
dimethylsilanediyl(2-methyl-6-azapentalene)(2-methyl-4-phenylindenyl)-zirconium dichloride
dimethylsilanediyl(2-methyl-N-phenyl-4-azapentalene)(2-methyl-4-phenylindenyl)zirconium dichloride
dimethylsilanediyl(2-methyl-N-phenyl-5-azapentalene)(2-methyl-4-phenylindenyl)zirconium dichloride
dimethylsilanediyl(2-methyl-N-phenyl-6-azapentalene)(2-methyl-4-phenylindenyl)zirconium dichloride
dimethylsilanediyl(2,5-dimethyl-4-azapentalene)(2-methyl-4-phenylindenyl)-zirconium dichloride
dimethylsilanediyl(2,5-dimethyl-6-azapentalene)(2-methyl-4-phenylindenyl)-zirconium dichloride
dimethylsilanediyl(2,5-dimethyl-N-phenyl-4-azapentalene)(2-methyl-4-phenylindenyl)zirconium dichloride
dimethylsilanediyl(2,5-dimethyl-N-phenyl-6-azapentalene)(2-methyl-4-phenylindenyl)zirconium dichloride
dimethylsilanediyl(2-methyl-4-thiapentalene)(2-methyl-4-phenylindenyl)-zirconium dichloride
dimethylsilanediyl(2-methyl-5-thiapentalene) (2-methyl-4-phenylindenyl)-zirconium dichloride
dimethylsilanediyl(2-methyl-6-thiapentalene)(2-methyl-4-phenylindenyl)-zirconium dichloride
dimethylsilanediyl(2,5-dimethyl-4-thiapentalene)(2-methyl-4-phenylindenyl)-zirconium dichloride
dimethylsilanediyl(2,5-dimethyl-6-thiapentalene)(2-methyl-4-phenylindenyl)-zirconium dichloride
dimethylsilanediyl(2-methyl-4-oxapentalene)(2-methyl-4-phenylindenyl)-zirconium dichloride
dimethylsilanediyl(2-methyl-5-oxapentalene)(2-methyl-4-phenylindenyl)-zirconium dichloride
dimethylsilanediyl(2-methyl-6-oxapentalene)(2-methyl-4-phenylindenyl)-zirconium dichloride
dimethylsilanediyl(2,5-dimethyl-4-oxapentalene)(2-methyl-4-phenylindenyl)-zirconium dichloride
dimethylsilanediyl(2,5-dimethyl-6-oxapentalene)(2-methyl-4-phenylindenyl)-zirconium dichloride
dimethylsilanediyl(2-methyl-4-azapentalene)(2-methyl-4,5-benzoindenyl)-zirconium dichloride
dimethylsilanediyl(2-methyl-5-azapentalene)(2-methyl-4,5-benzoindenyl)-zirconium dichloride
dimethylsilanediyl(2-methyl-6-azapentalene)(2-methyl-4,5-benzoindenyl)-zirconium dichloride
dimethylsilanediyl(2-methyl-N-phenyl-4-azapentalene)(2-methyl-4,5-benzoindenyl)zirconium dichloride
dimethylsilanediyl(2-methyl-N-phenyl-5-azapentalene) (2-methyl-4,5-benzoindenyl)zirconium dichloride
dimethylsilanediyl(2-methyl-N-phenyl-6-azapentalene)(2-methyl-4,5-benzoindenyl)zirconium dichloride
dimethylsilanediyl(2,5-dimethyl-4-azapentalene)(2-methyl-4,5-benzoindenyl)zirconium dichloride
dimethylsilanediyl(2,5-dimethyl-6-azapentalene) (2-methyl-4,5-benzoindenyl)zirconium dichloride
dimethylsilanediyl(2,5-dimethyl-N-phenyl-4-azapentalene)(2-methyl-4,5-benzoindenyl)zirconium dichloride
dimethylsilanediyl(2,5-dimethyl-N-phenyl-6-azapentalene)(2-methyl-4,5-benzoindenyl)zirconium dichloride
dimethylsilanediyl(2-methyl-4-thiapentalene)(2-methyl-4,5-benzoindenyl)-zirconium dichloride
dimethylsilanediyl(2-methyl-5-thiapentalene)(2-methyl-4,5-benzoindenyl)-zirconium dichloride
dimethylsilanediyl(2-methyl-6-thiapentalene)(2-methyl-4,5-benzoindenyl)-zirconium dichloride
dimethylsilanediyl(2,5-dimethyl-4-thiapentalene) (2-methyl-4,5-benzoindenyl)zirconium dichloride
dimethylsilanediyl(2,5-dimethyl-6-thiapentalene)(2-methyl-4,5-benzoindenyl)zirconium dichloride
dimethylsilanediyl(2-methyl-4-oxapentalene)(2-methyl-4,5-benzoindenyl)-zirconium dichloride
dimethylsilanediyl(2-methyl-5-oxapentalene)(2-methyl-4,5-benzoindenyl)-zirconium dichloride
dimethylsilanediyl(2-methyl-6-oxapentalene)(2-methyl-4,5-benzoindenyl)-zirconium dichloride
dimethylsilanediyl(2,5-dimethyl-4-oxapentalene) (2-methyl-4,5-benzoindenyl)zirconium dichloride
dimethylsilanediyl(2,5-dimethyl-6-oxapentalene)(2-methyl-4,5-benzoindenyl)zirconium dichloride
dimethylsilanediylbis(2-methyl-4-azapentalene)zirconium dichloride
dimethylsilanediylbis(2-methyl-5-azapentalene)zirconium dichloride
dimethylsilanediylbis(2-methyl-6-azapentalene)zirconium dichloride
dimethylsilanediylbis(2-methyl-N-phenyl-4-azapentalene)zirconium dichloride
dimethylsilanediylbis(2-methyl-N-phenyl-5-azapentalene)zirconium dichloride

dimethylsilanediylbis(2-methyl-N-phenyl-6-azapentalene)zirconium dichloride
dimethylsilanediylbis(2,5-dimethyl-4-azapentalene)zirconium dichloride
dimethylsilanediylbis(2,5-dimethyl-6-azapentalene)zirconium dichloride
dimethylsilanediylbis(2,5-dimethyl-N-phenyl-4-azapentalene)zirconium dichloride
dimethylsilanediylbis(2,5-dimethyl-N-phenyl-6-azapentalene)zirconium dichloride
dimethylsilanediylbis(2-methyl-4-thiapentalene)zirconium dichloride
dimethylsilanediylbis(2-methyl-5-thiapentalene)zirconium dichloride
dimethylsilanediylbis(2-methyl-6-thiapentalene)zirconium dichloride
dimethylsilanediylbis(2,5-dimethyl-4-thiapentalene)zirconium dichloride
dimethylsilanediylbis(2,5-dimethyl-6-thiapentalene)zirconium dichloride
dimethylsilanediylbis(2-methyl-4-oxapentalene)zirconium dichloride
dimethylsilanediylbis(2-methyl-5-oxapentalene)zirconium dichloride
dimethylsilanediylbis(2-methyl-6-oxapentalene)zirconium dichloride
dimethylsilanediylbis(2,5-dimethyl-4-oxapentalene)zirconium dichloride
dimethylsilanediylbis(2,5-dimethyl-6-oxapentalene)zirconium dichloride
or a mixture thereof.

**12.** A process for preparing a polyolefin by polymerization of one or more olefins in the presence of a catalyst system as claimed in any of claims 1 to 11.

**13.** The use of a catalyst system as claimed in any of claims 1 to 11 for preparing a polyolefin.

**Revendications**

**1.** Système de catalyseur comprenant

a) au moins un métallocène,
b) au moins une base lewis de formule I

$$M^2R^3R^4R^5 \qquad (I)$$

dans laquelle $R^3$, $R^4$ et $R^5$ sont identiques ou différents et représentent un atome d'hydrogène, un groupe alkyle en $C_1$-$C_{20}$, halogénalkyle en $C_1$-$C_{20,}$ alkyle en $C_6$-$C_{40,}$ halogénaryle en $C_6$-$C_{40,}$ alkylaryle en $C_7$-$C_{40,}$ ou arylalkyle en $C_7$-$C_{40,}$ deux résidus ou l'ensemble des trois résidus $R^3$, $R^4$ et $R^5$ pouvant être liés les uns aux autres le cas échéant au moyen d'un élément carbone en $C_2$-$C_{20}$ et $M^2$ représentant un élément du Vième groupe principal du système périodique des éléments.
c) un entraîneur,
d) au moins un composé organo-bore-aluminium, qui se compose d'élément de formule II

$$R_1\text{-}^1M^3\text{-O-}M^3R^2 \qquad (II)$$

dans laquelle $R^1$ et $R^2$ sont identiques ou différents et représentent un atome d'halogène, un groupe contenant du carbone en $C_1$-$C_{40}$, et notamment un alkyle en $C_1$-$C_{20}$, un halogénalkyle en $C_1$-$C_{20}$, un alcoxy en $C_1$-$C_{10}$, un aryle en $C_6$-$C_{20}$, un halogénaryle en $C_6$-$C_{20}$, un aryloxy en $C_6$-$C_{20}$, un arylalkyle en $C_7$-$C_{40}$, un halogénarylalkyle en $C_7$-$C_{40}$, un alkylaryle en $C_7$-$C_{40}$, un halogénalkylaryle en $C_7$-$C_{40}$ ou $R^1$ peut être un groupe $OsiR_3$ dans lequel R sont identiques ou différents et ont la même signification que $R^1$, $M^3$ est identique ou différent et représente du bore ou de l'aluminium et
i et j représentent un nombre entier 0, 1 ou 2, sont structurés et la covalence est liée à l'entraîneur, ainsi que le cas échéant
e) un composé organométallique de formule V

$$[M^4R^6_p]_k \qquad (V)$$

dans laquelle $M^4$ est un élément du Iier, IIième et IIIième groupe principale du système périodique des éléments, $R^6$ est identique ou différent et désigne un atome d'hydrogène, un atome d'halogène un groupe présentant une teneur en carbone en $C_1$-$C_{40}$ et notamment un groupe alkyle en $C_1$-$C_{20}$, un groupe aryle en $C_6$-$C_{40}$, un groupe aryle-alkyle en $C_7$-$C_{40}$ ou un groupe alkyle-aryle en $C_7$-$C_{40}$,
p est un nombre entier de 1 à 3 et
k est un nombre entier de 1 à 4.

**2.** Système de catalyseur selon la revendication 1, **caractérisé en ce qu'**il s'agit pour les bases Lewis de formules (I) desdites bases, dans lesquelles $M^2$ représente de l'azote ou du phosphore.

**3.** Système de catalyseur selon la revendication 2 **caractérisé en ce qu'**il s'agit pour les bases de Lewis de formule (I) de triéthylamine, de triisopropylamine, de triisobutylamine, de tri(n-butyl)amine, de N,N-diméthylaniline, de N, N-diéthylaniline, de N,N-2,4,6-pentaméthylaniline, de dicyclohexylamine, de pyridine, de pyrazine, de triphénylphosphine, de tri(méthylphényl)phosphine et de tri(diméthylphényl)phosphine.

**4.** Système de catalyseur selon l'une quelconque des revendications 1 à 3 **caractérisé en ce que** l'entraîneur est un extrait sec poreux inorganique ou organique.

**5.** Système de catalyseur selon l'une quelconque des revendications 1 à 4 **caractérisé en ce qu'**il s'agit de composés dans le cas du composé organo-bore-aluminium de formules (III) et (IV)

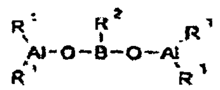

(III)

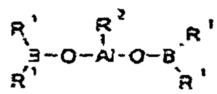

(IV)

dans lesquelles $R^1$ et $R^2$ ont la même signification que dans la formule (II).

**6.** Système de catalyseur selon la revendications 1 à 4 **caractérisé en ce qu'**il s'agit de composés dans le cas du composé organo-bore-aluminium de formules (III) et (IV)

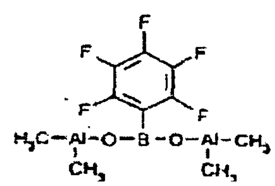

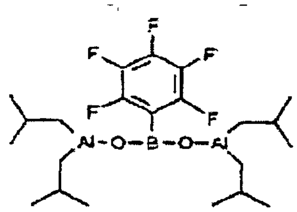

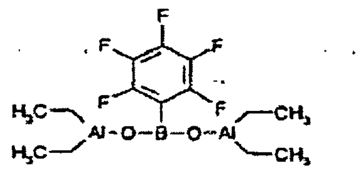

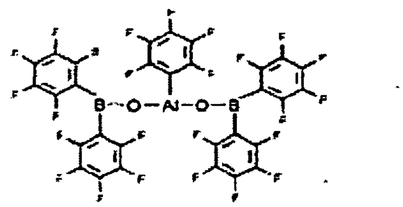

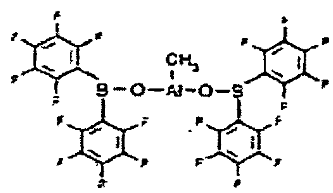

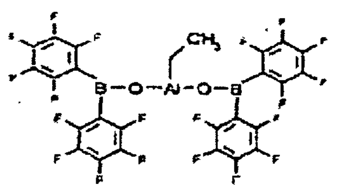

7. Système de catalyseur selon l'une quelconque des revendications 1 à 6 **caractérisé en ce qu'**il s'agit pour les composés organo-bore-aluminium de formules (V) de triméthylaluminium, triéthylaluminium, tri-isopropylaluminium, trihexylaluminium, trioctylaluminium, tri-n-butylaluminium, tri-n-propylaluminium, triisoprenaluminium, monochlorure de diméthylaluminium, monochlorure de diéthylaluminium, monochlorure de diisobutylaluminium, sesquichlorure de méthylaluminium, sesquichlorure d'éthylaluminium, d'hydrure de diméthytaluminium, d'hydrure de diéthylaluminium, d'hydrure de diisopropylaluminium, de diméthylaluminium(triméthylsiloxyde), diméthylaluminium(triéthylsiloxyde), de phénylalan, pentafluoro-phénylalan et de o-tolylalan.

8. Système de catalyseur selon l'une quelconque des revendications 1 à 7 **caractérisé en ce qu'**il s'agit pour les métallocènes de métallocènes non liés et liés de formules (VI).

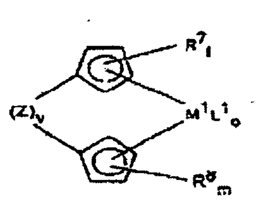

(VI).

dans lesquelles
$M^1$ est un métal du IIIième, IVième, ou Vième- ou VIième groupe secondaire du système périodique des éléments et en particulier du Ti, Zr ou Hf,
$R^7$ : sont identiques ou différents et sont un atome d'hydrogène ou de $SiR_3^{12}$, où $R^{12}$ sont identiques ou différents

et représentent un atome d'hydrogène ou un groupe présentant une teneur en carbone en $C_1$-$C_{40}$, tel que de l'alkyle en $C_1$-$C_{20}$, du fluoralkyle en $C_1$-$C_{10}$, de l'alcoxy en $C_1$-$C_{10}$, de l'aryle en $C_6$-$C_{20}$, du fluoraryle en $C_6$-$C_{10}$, de l'aryloxy en $C_6$-$C_{10}$, de l'alcényle en $C_2$-$C_{10}$, de l'arylalkyle en $C_7$-$C_{40}$ de l'alkylaryle en $C_7$-$C_{40}$ ou de l'arylalcényle en $C_8$-$C_{40}$ ou $R^7$ sont un groupe présentant une teneur en carbone en $C_1$-$C_{30}$, tel que de l'alkyle en $C_1$-$C_{25}$, comme le méthyle, l'éthyle, du tert.-butyle, du cyclohexyle ou de l'octyle, de l'alcényle en $C_2$-$C_{25}$, de l'alkylalcényle en $C_3$-$C_{15}$, de l'aryle en $C_6$-$C_{24}$, de l'hétéroaryle en $C_5$-$C_{24}$, tel que le pyridyle, le furyle ou le quinolyle, de l'arylalkyle en $C_7$-$C_{30}$, de l'alkylaryle en $C_7$-$C_{30}$, de l'alkyle en $C_1$-$C_{25}$ présentant une teneur en fluor, l'aryle en $C_6$-$C_{24}$ présentant une teneur en fluor, l'arylalkyle en $C_7$-$C_{30}$ présentant une teneur en fluor, l'alkylaryle en $C_7$-$C_{30}$ présentant une teneur en fluor ou l'alcoxy, ou deux ou plusieurs résidus $R^7$ peuvent être liés les uns aux autres de telle sorte que les résidus $R^7$ et les atomes de l'anneau de cyclopentadiényle s'y liant forment un système annulaire en $C_4$-$C_{24}$ contenant des hétéroatomes, lequel système peut être remplacé de son côté,

$R^8$ : sont identiques ou différents et sont un atome d'hydrogène ou de $SiR_3^{12}$, où $R^{12}$ sont identiques ou différents et représentent un atome d'hydrogène ou un groupe présentant une teneur en carbone en $C_1$-$C_{40}$, tel que de l'alkyle en $C_1$-$C_{20}$, du fluoralkyle en $C_1$-$C_{10}$, de l'alcoxy en $C_1$-$C_{10}$, de l'aryle en $C_6$-$C_{20}$, du fluoraryle en $C_6$-$C_{10}$, de l'aryloxy en $C_6$-$C_{10}$, de l'alcényle en $C_2$-$C_{10}$, de l'arylalkyle en $C_7$-$C_{40}$ de l'alkylaryle en $C_7$-$C_{40}$ ou de l'arylalcényle en $C_8$-$C_{40}$ ou $R^8$ sont un groupe présentant une teneur en carbone en $C_1$-$C_{30}$, tel que de l'alkyle en $C_1$-$C_{25}$, comme le méthyle, l'éthyle, du tert.-butyle, du cyclohexyle ou de l'octyle, de l'alcényle en $C_2$-$C_{25}$, de l'alkylalcényle en $C_3$-$C_{15}$, de l'aryle en $C_6$-$C_{24}$, de l'hétéroaryle en $C_5$-$C_{24}$, tel que le pyridyle, le furyle ou le quinolyle, de l'arylalkyle en $C_7$-$C_{30}$, de l'alkylaryle en $C_7$-$C_{30}$, de l'alkyle en $C_1$-$C_{25}$ présentant une teneur en fluor, l'aryle en $C_6$-$C_{24}$ présentant une teneur en fluor, l'arylalkyle en $C_7$-$C_{30}$ présentant une teneur en fluor, l'alkylaryle en $C_7$-$C_{30}$ présentant une teneur en fluor ou l'alcoxy, ou deux ou plusieurs résidus $R^8$ peuvent être liés les uns aux autres de telle sorte que les résidus $R^8$ et les atomes de l'anneau de cyclopentadiényle s'y liant forment un système annulaire en $C_4$-$C_{24}$ contenant des hétéroatomes, lequel système peut être remplacé de son côté,

l est égal à 5 pour v = 0 et l est égal à 4 pour v = 1,

m est égal à 5 pour v = 0 et m est égal à 4 pour v = 1,

$L^1$ peuvent être identiques ou différents et désigne un atome d'hydrogène, un groupe d'hydrocarbure en $C_1$-$C_{10}$ tel que de l'alkyle en $C_1$-$C_{10}$ ou un aryle en $C_6$-$C_{10,}$ un atome d'halogène, ou $OR^9$, $SR^9$, $OSiR_3^9$, $SiR_3^9$, $PR_2^9$ ou $NR_2^9$.

où $R^9$ sont un atome d'halogène, un groupe alkyle en $C_1$-$C_{10,}$ un groupe alkyle halogéné en $C_1$-$C_{10,}$ un groupe aryle en $C_6$-$C_{20,}$ un groupe aryle halogéné en $C_6$-$C_{20,}$ ou $L^1$ sont un groupe de toluolsulfonyle, de trifluoracétyle, de Trifluoracétoxyle, de Trifluorométhansulfonyle, de nonafluorobutansulfonyle ou de 2,2,2-trifluoroéthansulfonyle.

o est un nombre entier de 1 à 4, de préférence 2,

Z symbolise un élément structurel formant un pont entre les deux anneaux de cyclopentadiènyle et v est 0 ou 1,

**9.** Système de catalyseur selon l'une quelconque des revendications 1 à 6, **caractérisé en ce qu'**il s'agit pour les métallocènes de métallocènes de formule (VI) où Z représente un groupe $MR^{10}R^{11}$, où M désigne du carbone, du silicium, du germanium ou de l'étain et $R^{10}$ et $R^{11}$ identiques ou différents désignent un groupe présentant une teneur en hydrocarbure en $C_1$-$C_{20,}$ tel que l'alkyle en $C_1$-$C_{10,}$ l'aryle en $C_6$-$C_{14,}$ ou le triméthylsilyle.

**10.** Système de catalyseur selon la revendication 9, **caractérisé en ce que** qu'il s'agit pour les métallocènes de métallocènes de formule (VI) où Z représente $CH_2$,-$CH_2CH_{2,}$ $CH(CH_3)CH_2$, $CH(C_4H_9)C(CH_3)_2$, $C(CH_3)_2$, $(CH_3)_2Si$, $(CH_3)_2Si$, $(CH_3)_2Ge$, $(CH_3)_2Sn$, $(C_5H_5)_2Si$, $(C_6H_5)(CH_3)Si$, $(C_6H_5)_2Ge$, $(C_6H_5)_2Sn$, $(CH_2)_4Si$, $CH_2Si(CH_3)_2$, o-$C_6H_4$ ou 2,2'-$(C_6H_4)_2$.

**11.** Système de catalyseur selon la revendication 10, caractérisé en que sont utilisés comme métallocènes le dichlorure de zirconium de diméthylsilandiylbis(indényl), le dichlorure de zirconium de di méthylsilandiylbis(4-naphthyl-indényl), le dichlorure de zirconium de diméthylsilandiylbis(2-méthyl-benzo-indényl), le dichlorure de zirconium de diméthylsilandiylbis(2-méthylindényl), le dichlorure de zirconium de diméthylsilandiylbis(2-méthyl-4-(1-naphthyl)-indényl), le dichlorure de zirconium de diméthylsilandiylbis(2-méthyl-4-(2-naphthyl)-indényl), le dichlorure de zirconium de diméthylsilandiylbis(2-méthyl-4-phényl-indényl)le dichlorure de zirconium de diméthylsilandiylbis(2-méthyl-4-t-butyl-indényl), le dichlorure de zirconium de diméthylsilandiylbis(2-méthyl-4-isopropyl-indényl), le dichlorure de zirconium de diméthylsilandiylbis(2-méthyl-4-éthyl-indényl), le dichlorure de zirconium de diméthylsilandiylbis(2-méthyl-4-acénaphth-indényl), le dichlorure de zirconium de diméthylsilandiylbis (2,4-diméthyl-indényl), le dichlorure de zirconium de diméthylsilandiylbis(2-éthyl-indényl), le dichlorure de zirconium de diméthylsilandiylbis(2-éthyl-4-éthylindényl), le dichlorure de zirconium de diméthylsilandiylbis(2-éthyl-4-phényl-indényl), le dichlorure de zirconium de diméthylsilandiylbis(2-méthyl-4,5-benzo-indényl), le dichlorure de zirconium de diméthylsilandiylbis(2-méthyl-4,6 diisopropyl-indényl), le dichlorure de zirconium de diméthylsilandiylbis(2-méthyl-4,5 diisopropyl-indényl), le dichlorure de zirconium de diméthylsilandiylbis(2,4,6-triméthyl-indényl), le dichlorure de zirconium de diméthylsilandiylbis{2,5,6-triméthyl-indényl), le dichlorure de zirconium de diméthylsilandiylbis(2,4,7-triméthyl-indényl), le dichlorure de zirconium de diméthylsilandiylbis(2-méthyl-5-isobutyl-indényl)le dichlorure de zirconium de diméthylsilandiylbis(2-méthyl-5-t-butyl- indényl), le dichlorure de zirconium de méthyl(phényl)silandiylbis( 2-méthyl-4-phenyl-indényl), le dichlorure de zirconium de méthyl(phényl)silandiylbis(2-méthyl-4,6 diisopropylindényl)le dichlorure de zirconium de méthyl(phényl)silandiylbis(2-méthyl-4,5-benzo-indényl), le dichlorure de zirconium de méthyl(phényl)silandiylbis(2-méthyl-4,5-(méthylbenzo)-indényl), le dichlorure de zirconium de méthyl (phényl)silandiylbis(2-méthyl-4,5-(tetraméthylbenzo), le dichlorure de zirconium de méthyl(phényl)silandiylbis (2-méthyl-4--acenaphthindényl), le dichlorure de zirconium de méthyl(phényl)silandiylbis(2- méthyl-indényl), le dichlorure de zirconium de méthyl(phényl)silandiylbis(2-méthyl-5-isobutyl-indényl), le dichlorure de zirconium de 1,2 -éthandiylbis(2-méthyl-4-phényl-indényl), le dichlorure de zirconium de 1,4-Butandiylbis{2-méthyl-4-phényl-indényl), le dichlorure de zirconium de 1,2-Ethandiylbis(2-méthyl-4,6 diisopropyl-indényl), le dichlorure de zirconium de 1,4-butandiylbis(2-méthyl-4-isopropyl-indényl), le dichlorure de zirconium de 1 4-Butandiylbis(méthyl-4,5-benzo-indényl), le dichlorure de zirconium de 1,2-éthandiylbis(2-méthyl-4,5-benzoindényl), le dichlorure de zirconium de 1,2-éthandiylbis(2,4,7-triméthyl-indényl), le dichlorure de zirconium de 1,2-éthandiylbis(2-méthyl-indényl), le dichlorure de zirconium de 1,4-butandiylbis(2-méthylindényl), le dichloro-zirconium [4-($O^5$-Cyclopentadiényl)-4,6,6-triméthyl-($O^5$-4,5-térahydropentalen), le dichloro-zirconium [4-($O^5$-3'-triméthylsilylcyclopentadiényl)-4,6,6-triméthyl-($O^5$-4,5-tetrahydropentalen)], le dichloro-titane de [4-($O^5$-Cyclopentadiényl)4,7,7-triméthyl-($O^5$-4,5,6,7-tétrahydroindényl)], le dichloro-zirconium de [4-($O^5$-Cyclopentadiényl)4,7,7-triméthyl-($O^5$-4,5,6,7-tétrahydroindényl)], le dichloro-hafnium de [4-($O^5$-Cyclopentadiényl)4,7,7-triméthyl-($O^5$-4,5,6,7-tétrahydroindényl)], le dichloro-titane [4-($0^5$-3=-tert.butyl-cyclopentadiényl)-4,7,7-triméthyl-($0^5$-4,5,6,7-tétrahydroinényl)], le dichloro-titane [4-($0^5$-3=-isopropylcyclopentadiényl)-4,7,7-triméthyl-($0^5$-4,5,6,7-tétrahydroinényl)], le dichloro-titane [4-($0^5$-3=-méthyl-cyctopentadiényl)-4,7,7-triméthyl-($0^5$-4,5,6,7-tétrahydroinényl)], le dichloro-titane [4-($0^5$-3=-triméthylsilyl--cyctopentadiényl)-2-triméthylsilyl-4,7,7-triméthyl-($0^5$-4,5,6,7-tétrahydroinényl)], le dichloro-zirconium [4-($0^5$-3=-tert.butyl-cyclopentadiényl)-4,7,7-triméthyl-($0^5$-4,5,6,7-tétrahydroinényl)], le dichlorotitane diméthylsilyle de (tertbutylamido)-(tetraméthyl-$O^5$-cyclopentadiényl), le dichloro-titane de (tertbutylamido)-{tetraméthyl-$O^5$-cyclopentadiényl)-1,2-éthandiyl-dichlorotitane, le dichlorotitane diméthylsilyle de (Méthylamido)-(tetraméthyl-$O^5$-cyclopentadiényl),le dichlorotitane de 1,2-éthandiyldiméthylsilyle de (Méthylamido)-(tétraméthyl-$O^5$-cyclopentadiényl, le dichlorotitane diméthylsilyle de (tertbutylamido)-(2,4-diméthyl-2,4-pentadien-1-yl), le dichlorure de zirconium de bis-(cyclopentadiényl), le dichlorure de zirconium de bis-(n-butylcyclopentadiényl), le dichlorure de zirconium de bis-(1,3-diméthylcyclopentadiényl), le dizirconium de tetrachloro-[1-[bis($O^5$-1H-inden-1-yliden)méthylsilyl]-3-$O^5$-cyclopenta-2,4-dien-ly-liden)-3-$0^5$-9H-fluoren-9-yliden)bulan, le dizirconium de tetrachloro-[2-[bis($O^5$-2-méthyl-1H-inden-1-yliden)méthoxysilyl]-5-($0^5$-2,3,4,5-tetraméthylcyclopenta-2,4-dien-1-yliden)-5-($O^5$-9H-fluoren-9-yliden )hexan], le dizirconium de tetrachloro-[1-{bis($O^5$-1H-inden-1-yliden )méthylsilyl-6-($0^5$-cyclopenta-2,4-dien-1-yliden)-6-($0^5$-9H-1H-fluoren-9-yliden)-3-oxaheptan], le dichlorure de zirconium de diméthylsilandiylbis (2-méthyl-4-(4'-tert-butyl-phényl-indényl), le dichlorure de zirconium de diméthylsilandiylbis(2-méthyl-4-(4'-méthyl-phényl-indényl), le dichlorure de zirconium de diméthylsilandiylbis(2-méthyl-4-(4'-éthyl-phényl-indényl), le dichlorure de zirconium de diméthylsilandiylbis(2-méthyl-4-(4'-trifluorométhylphényl-indényl), le dichlorure de zirconium de diméthylsilandiylbis(2-méthyl-4-(4'-méthoxy-phényl-indényl), le dichlorure de zirconium de diméthylsilandiylbis (2-éthyl-4-(4'-tert-butyl-phényl-indényl), le dichlorure de zirconium de diméthylsilandiylbis(2-éthyl-4-(4'-méthyl-phényl-indényl), le dichlorure de zirconium de diméthylsilandiylbis(2-éthyl-4-(4'-éthyl-phényl-indényl), le dichlorure de zirconium de diméthylsilandiylbis(2-éthyl-4-(4'-trifluorométhyl-phényl-indényl), le dichlorure de zirconium de diméthylsilandiylbis(2-éthyl-4-(4'-méthoxy-phényl-indényl),le diméthyle de zirconium de diméthylsilandiylbis (2-méthyl-4-(4'-tert-butyl-phényl-indényl), le diméthyle de zirconium de diméthylsilandiylbis(2-méthyl-4-(4'-méthyl-phényl-indényl), le diméthyle de zirconium de diméthylsilandiylbis(2-méthyl-4-(4'-éthyl-phényl-indényl), le diméthyle de zirconium de diméthylsilandiylbis(2-méthyl-4-(4'-trifluorométhylphényl-indényl), le diméthyle de zirconium de diméthylsilandiylbis(2-méthyl-4-(4'-méthoxy-phényl-indényl), le diméthyle de zirconium de diméthylsilandiylbis (2-éthyl-4-(4'-tert-butyl-phényl-indényl), le diméthyle de zirconium de diméthylsilandiylbis(2-éthyl-4-(4'-méthyl-phényl-indényl), le diméthyle de zirconium de diméthylsilandiylbis(2-éthyl-4-(4'-éthyl-phényl-indényl), le diméthyle de zirconium de diméthylsilandiylbis(2-éthyl-4-(4'-trifluorométhyl-phényl-indényl), le dichlorure de diméthyle de diméthylsilandiylbis(2-éthyl-4-(4'-méthoxy-phényl-indényl), le dichlorure de zirconium de diméthylsilandiylbis (2-méthyl-4-(4'-triméthylsilylphényl-indényl), le diméthyle de zirconium de diméthylsilandiylbis(2-méthyl-4-(4'-triméthylsilylphényl-indényl), le dichlorure de zirconium de diméthylsilandiylbis(2-éthyl-4-(4'-triméthylsilyl-phényl-indényl), le diméthyle de zirconium de diméthylsilandiylbis(2-éthyl-4-(4'-triméthylsilyl-phényl-indényl), le dichlorure d'hafnium de diméthylsilandiylbis(2-méthyl-4-(4'-tert-butyl-phényl-indényl), le dichlorure de titane de diméthylsilandiylbis(2-méthyl-4-(4'-tert-butyl-phényl-indényl), le dichlorure de zirconium de diméthylsilandiylbis (2-méthyl-4-(4'-méthyl-phényl-indényl), le dichlorure de zirconium de diméthylsilandiylbis(2-méthyl-4-(4'-n-propyl-phényl-indényl), le dichlorure de zirconium de diméthylsilandiylbis(2-méthyl-4-(4'-n-butyl-phényl-indényl), le dichlorure de zirconium de diméthylsilandiylbis(2-méthyl-4-(4'-(hexy-phényl)-indényl), le dichlorure de zirconium de diméthylsilandiylbis(2-méthyl-4-(4'-(sec-butyl-phényl)-indényl), le dichlorure de zirconium de diméthylsilandiylbis(2-éthyl-4-phényl)-indényl), le dichlorure de zirconium de diméthylsilandiylbis(2-éthyl-4-(4'-(méthyl-phényl)-indényl), le dichlorure de zirconium de diméthylsilandiylbis(2-éthyl-4-(4'-(éthyl-phényl)-indényl), le dichlorure de zirconium de diméthylsilandiylbis(2-éthyl-4-(-n-propyl-4-phényl}-indényl), le dichlorure de zirconium de diméthylsilandiylbis (2-éthyl-4-(4'-n-butyl-4-phényl)-indényl), le dichlorure de zirconium de diméthylsilandiylbis(2-éthyl-4-(4'-hexyl-4-phényl)-indényl), le dichlorure de zirconium de diméthylsilandiylbis(2-éthyl-4-(4'-pentyl-4-phényl)-indényl), le dichlorure de zirconium de diméthylsilandiylbis(2-éthyl-4-(4'-cyclohexyl-phényl)-indényl), le dichlorure de zirconium de diméthylsilandiylbis(2-éthyl-4-(4'-sec-butyl-phényl)-indényl), le dichlorure de zirconium de diméthylsilandiylbis (2-éthyl-4-(4'-tert-butyl-phenyl)-indényl), le dichlorure de zirconium de diméthylsilandiylbis(2-n-propyl-4-phényl)-indényl), le dichlorure de zirconium de diméthylsilandiylbis(2-n-propyl-4-(4'-méthyl-phényl)-indényl), le dichlorure de zirconium de diméthylsilandiylbis(2-n-propyl-4-(4'-éthyl-phényl)-indényl), le dichlorure de zirconium de diméthylsilandiylbis(2-n-propyl-4-(4'-iso-propyl-phényl)-indényl), le dichlorure de zirconium de diméthylsilandiylbis(2-n-propyl-4-(4'-n-butyl-phényl)-indényl), le dichlorure de zirconium de diméthylsilandiylbis(2-n-propyl-4-(4'-hexyl-phényl)-indényl), le dichlorure de zirconium de diméthylsilandiylbis(2-n-propyl-4-(4'-cyclohexyl-phényl)-indényl), le dichlorure de zirconium de diméthylsilandiylbis(2-n-propyl-4-(4'-sec-butyl-phényl)-indényl), le dichlorure de zirconium de diméthylsilandiylbis(2-n-propyl-4-(4'-tert.-butyl-phényl)-indényl), le dichlorure de zirconium de diméthylsilandiylbis(2-n-butyl-4-phényl)-indényl), le dichlorure de zirconium de diméthylsilandiylbis(2-n-butyl-4-(4'-méthyl-phényl)-indényl), le dichlorure de zirconium de diméthylsilandiylbis(2-n-butyl-4-(4'-éthyl-phényl)-indényl), le dichlorure de zirconium de diméthylsilandiylbis(2-n-butyl-4-(4'-n-propyl-phényl)-indényl), le dichlorure de zirconium de diméthylsilandiylbis(2-n-butyl-4-(4'-iso-propyl-phényl)-indényl), le dichlorure de zirconium de diméthylsilandiylbis (2-n-butyl-4-(4'-n-butyl-phényl)-indényl), le dichlorure de zirconium de diméthylsilandiylbis(2-n-butyl-4-(4'-hexyl-phényl)-indényl), le dichlorure de zirconium de diméthylsilandiylbis(2-n-butyl-4-(4'-cyclohexyl-phényl)-indényl), le dichlorure de zirconium de diméthylsilandiylbis(2-n-butyl-4-(4'-sec-butyl-phényl)-indényl), le dichlorure de zirconium de diméthylsilandiylbis(2-n-butyl-4-(4'-tert-butyl-phényl)-indényl), le dichlorure de zirconium de diméthylsilandiylbis(2-hexyl-4-phényl)-indényl), le dichlorure de zirconium de diméthylsilandiylbis(2-hexyl-4-(4'-méthyl-phényl)-indényl), le dichlorure de zirconium de diméthylsilandiylbis(2-hexyl-4-(4'-éthyl-phényl)-indényl), le dichlorure de zirconium de diméthylsilandiylbis(2-hexyl-4-(4'-n-propyl-phényl)-indényl), le dichlorure de zirconium de diméthylsilandiylbis(2-hexyl-4-(4'-iso-propyl-phényl)-indényl), le dichlorure de zirconium de diméthylsilandiylbis (2-hexyl-4-(4'-n-butyl-phényl)-indényl), le dichlorure de zirconium de diméthylsilandiylbis(2-hexyl-4-(4'-hexyl-phényl)-indényl), le dichlorure de zirconium de diméthylsilandiylbis(2-hexyl-4-(4'-cyclohexyl-phényl)-indényl), le dichlorure de zirconium de diméthylsilandiylbis(2-hexyl-4-(4'-sec-butyl-phényl)-indényl), le dichlorure de zirconium de diméthylsilandiylbis(2-hexyl-4-(4'-tert.-butyl-phényl)-indényl), le diméthylsilandiylbis(2-méthyl-4-(4'-tert.-butyl-phényl)-indényl)zirconiumbis(dimétylamide), le dibenzyle de zirconium de diméthylsilandiylbis(2-éthyl-4-(4'-tert.-butyl-phényl)-indényl), le diméthyle de zirconium de diméthylsilandiylbis(2-méthyl-4-(4'-tert.-butyl-phényl)-indényl), le dichlorure de zirconium de diméthylsilandiylbis(2-éthyl-4-(4'-tert.-butyl-phényl)-indényl), le dichlorure de hafnium de diméthylsilandiylbis(2-éthyl-4-(4'-tert.-butyl-phényl)-indényl), le dichlorure de titane de diméthylsilandiylbis(2-méthyl-4-(4'-tert.-butyl-phényl)-indényl), le dichlorure de zirconium d'éthylidenbis(2-éthyl-4-phényl)-indényl), le dichlorure de zirconium d'éthylidenbis(2-éthyl-4-(4'-tert.-butyl-phényl)-indényl), le dichlorure de zirconium d'éthylidenbis(2-n-propyl-4-(4'-tert.-butyl-phényl)-indényl), le chlorure de titane d'éthylidenbis(2-n-butyl-4-(4'-tert.-butyl-phényl)-indényl), le dibenzyle de zirconium d'éthylidenbis(2-hexyl-4-(4'-tert.-butyl-phényl)-indényl), le dibenzyl d'hafnium d'éthylidenbis(2-éthyl-4-(4'-tert.-butyl-phényl)-indényl), le dibenzyle de titane d'éthylidenbis(2-méthyl-4-(4'-tert.-butyl-phényl)-indényl), le dichlorure de zirconium d'éthylidenbis(2-méthyl-4-(4'-tert.-butyl-phényl)-indényl), le diméthyle d'hafnium d'éthylidenbis(2-éthyl-4-(4'-tert.-butyl-phényl)-indényl), le diméthyle titane d'éthylidenbis(2-n-propyl-4-phényl)-indényl), l'éthylidenbis(2-méthyl-4-(4'-tert.-butyl-phényl)-indényl)zirconiumbis(diméthylamide), l'éthylidenbis(2-méthyl-4-(4'-tert.-butyl-phényl)-indényl)hafniumbis(diméthylamide), l'éthylidenbis (2-méthyl-4-(4'-tert.-butyl-phényl)-indényl)titanbis(diméthylamide), le dichlorure de zirconium de méthyléthylidenbis{2-éthyl-4-(4'-tert-butylphényl)-indenyl, le dichlorure d'hafnium de méthyléthylidenbis{2-éthyl-4-(4'-tert-butyl-phényl)-indenyl), le dichlorure de zirconium de phénylphosphandiyl(2-éthyl-4-(4'-tert.-butyl-phényl)indényl), le dichlorure de zirconium de phénylphosphandiyl{2-éthyl-4-(4'-tert.-butyl-phényl)-indényl), le dichlorure de zirconium de diméthylsilandiyl(2-méthyl-4-azapentalen)(2-méthyl-4-(4-méthylphényl-indényl), le dichlorure de zirconium de diméthylsilandiyl(2-méthyl-5-azapentalen)(2-méthyl-4-(4-méthylphényl-indényl), le dichlorure de zirconium de diméthylsilandiyl(2-méthyl-6-azapentalen)(2-méthyl-4-(4-méthylphényl-indényl), le dichlorure de zirconium de diméthylsilandiyl(2-méthyl-N-phényl-4-azapentalen)(2-méthyl-4-4'-méthylphényl-indényl), le dichlorure de zirconium de diméthylsilandiyl(2-méthyl-N-phényl-5-azapentalen)(2-méthyl-4-4'-méthylphényl-indényl), le dichlorure de zirconium de diméthylsilandiyl(2-méthyl-N-phényl-6-azapentalen)(2-méthyl-4-4'-méthylphényl-indényl), le dichlorure de zirconium de diméthylsilandiyl(2,5-diméthyl-4-azapentalen)(2-méthyl-4-4'-méthylphényl-indényl), le dichlorure de zirconium de diméthylsilandiyl(2,5-diméthyl-6-azapentalen)(2-méthyl-4-4'-méthylphényl-indényl), le dichlorure de zirconium de diméthylsilandiyl(2,5-diméthyl-N-phényl-4-azapentalen)(2-méthyl-4-4'-méthylphényl-indényl), le

dichlorure de zirconium de diméthylsilandiyl(2,5-diméthyl-N-phényl-6-azapentalen)(2-méthyl-4-4'-méthylphényl-indényl), le dichlorure de zirconium de diméthylsilandiyl(2-méthyl-4-thiapentalen)(2-méthyl-4-4'-méthylphényl-indényl), le dichlorure de zirconium de diméthylsilandiyl(2-méthyl-5-thiapentalen)(2-méthyl-4-4'-méthylphényl-indényl), le dichlorure de zirconium de diméthylsilandiyl(2-méthyl-6-thiapentalen)(2-méthyl-4-4'-méthylphényl-indényl), le dichlorure de zirconium de diméthylsilandiyl(2,5-diméthyl-4-thiapentalen)(2-méthyl-4-4'-méthylphényl-indényl), le dichlorure de zirconium de diméthylsilandiyl(2,5-diméthyl-6-thiapentalen)(2-méthyl-4-4'-méthylphényl-indényl), le dichlorure de zirconium de diméthylsilandiyl(2-méthyl-4-oxapentalen)(2-méthyl-4-4'-méthylphényl-indényl), le dichlorure de zirconium de diméthylsilandiyl(2-méthyl-5-oxapentalen)(2-méthyl-4-4'-méthylphényl-indényl), le dichlorure de zirconium de diméthylsilandiyl(2-méthyl-6-oxapentalen)(2-méthyl-4-4'-méthylphényl-indényl), le dichlorure de zirconium de diméthylsilandiyl(2,5-diméthyl-4-oxapentalen)(2-méthyl-4-4'-méthylphényl-indényl), le dichlorure de zirconium de diméthylsilandiyl(2,5-diméthyl-6-oxapentalen)(2-méthyl-4-4'-méthylphényl-indényl), le dichlorure de zirconium de diméthylsilandiyl(2-méthyl-4-azapentalen)(2-méthyl-4-(4'-éthylphényl-indényl), le dichlorure de zirconium de diméthylsilandiyl(2-méthyl-5-azapentalen)(2-méthyl-4-(4'-éthylphényl-indényl), le dichlorure de zirconium de diméthylsilandiyl(2-méthyl-6-azapentalen)(2-méthyl-4-(4'-éthylphényl-indényl) le dichlorure de zirconium de diméthylsilandiyl(2-méthyl-N-phényl-4-azapentalen)(2-méthyl-4-(4'-éthylphényl-indényl), le dichlorure de zirconium de diméthylsilandiyl(2-méthyl-N-phényl-5-azapentalen)(2-méthyl-4-(4'-éthylphényl-indényl), le dichlorure de zirconium de diméthylsilandiyl(2-méthyl-N-phényl-6-azapentalen)(2-méthyl-4-(4'-éthylphénylindényl), le dichlorure de zirconium de diméthylsilandiyl(2,5-diméthyl-4-azapentalen)(2-méthyl-4-(4'-éthylphényl-indényl), le dichlorure de zirconium de diméthylsilandiyl(2,5-diméthyl-6-azapentalen)(2-méthyl-4-(4'-éthylphényl-indényl), le dichlorure de zirconium de diméthylsilandiyl(2,5-diméthyl-N-phényl-4-azapentalen)(2-méthyl-4-(4'éthylphényl-indényl), le dichlorure de zirconium de diméthylsilandiyl(2,5-diméthyl-N-phényl-6-azapentalen)(2-méthyl-4-(4'éthylphényl-indényl), le dichlorure de zirconium de diméthylsilandiyl(2-méthyl-4-thiapentalen)(2-méthyl-4-(4'-éthylphényl-indényl), le dichlorure de zirconium de diméthylsilandiyl(2-méthyl-5-thiapentalen)(2-méthyl-4-(4'-éthylphényl-indényl), le dichlorure de zirconium de diméthylsilandiyl(2-méthyl-6-thiapentalen)(2-méthyl-4-(4'-éthylphényl-indényl), le dichlorure de zirconium de diméthylsilandiyl(2,5-diméthyl-4-thiapentalen)(2-méthyl-4-(4'-éthylphényl-indényl), le dichlorure de zirconium de diméthylsilandiyl(2,5-diméthyl-6-thiapentalen)(2-méthyl-4-(4'-éthylphényl-indényl), le dichlorure de zirconium de diméthylsilandiyl(2-méthyl-4-oxapentalen)(2-méthyl-4-(4'-éthylphényl-indényl), le dichlorure de zirconium de diméthylsilandiyl(2-méthyl-5-oxapentalen)(2-méthyl-4-(4'-éthylphényl-indényl), le dichlorure de zirconium de diméthylsilandiyl(2-méthyl-6-oxapentalen)(2-méthyl-4-(4'-éthylphényl-indényl), le dichlorure de zirconium de diméthylsilandiyl(2,5-diméthyl-4-oxapentalen)(2-méthyl-4-(4'-éthylphényl-indényl), le dichlorure de zirconium de diméthylsilandiyl(2,5-diméthyl-6-oxapentalen)(2-méthyl-4-(4'-éthylphényl-indényl), le dichlorure de zirconium de diméthylsilandiyl(2-méthyl-4-azapentalen)(2-méthyl-4-(4'-n-propylphényl-indényl), le dichlorure de zirconium de diméthylsilandiyl(2-méthyl-5-azapentalen)(2-méthyl-4-(4'-n-propylphényl-indényl), le dichlorure de zirconium de diméthylsilandiyl(2-méthyl-6-azapentalen)(2-méthyl-4-(4'-n-propylphényl-indényl) le dichlorure de zirconium de diméthylsilandiyl(2-méthyl-N-phényl-4-azapentalen)(2-méthyl-4-(4'-n-propylphényl-indényl), le dichlorure de zirconium de diméthylsilandiyl(2-méthyl-N-phényl-5-azapentalen)(2-méthyl-4-(4'-n-propylphényl-indényl), le dichlorure de zirconium de diméthylsilandiyl(2-méthyl-N-phényl-6-azapentalen)(2-méthyl-4-(4'-n-propylphényl-indényl), le dichlorure de zirconium de diméthylsilandiyl(2,5-diméthyl-4-azapentalen)(2-méthyl-4-(4'-n-propylphényl-indényl), le dichlorure de zirconium de diméthylsilandiyl(2,5-diméthyl-6-azapentalen)(2-méthyl-4-(4'-n-propylphényl-indényl), le dichlorure de zirconium de diméthylsilandiyl(2,5-diméthyl-N-phényl-4-azapentalen)(2-méthyl-4-(4'-n-propylphényl-indényl), le dichlorure de zirconium de diméthylsilandiyl(2,5-diméthyl-N-phényl-6-azapentalen)(2-méthyl-4-(4'n-propylphényl-indényl), le dichlorure de zirconium de diméthylsilandiyl(2-méthyl-4-thiapentalen)(2-méthyl-4-(4'-n-propylphényl-indényl), le dichlorure de zirconium de diméthylsilandiyl(2-méthyl-5-thiapentalen)(2-méthyl-4-(4'-n-propylphényl-indényl), le dichlorure de zirconium de diméthylsilandiyl(2-méthyl-6-thiapentalen)(2-méthyl-4-(4'-n-propylphényl-indényl), le dichlorure de zirconium de diméthylsilandiyl(2,5-diméthyl-4-thiapentalen)(2-méthyl-4-(4'-n-propylphényl-indényl), le dichlorure de zirconium de diméthylsilandiyl(2,5-diméthyl-6-thiapentalen)(2-méthyl-4-(4'-n-propylphényl-indényl), le dichlorure de zirconium de diméthylsilandiyl(2-méthyl-4-oxapentalen)(2-méthyl-4-(4'-n-propylphényl-indényl), le dichlorure de zirconium de diméthylsilandiyl(2-méthyl-5-oxapentalen)(2-méthyl-4-(4'-n-propylphényl-indényl), le dichlorure de zirconium de diméthylsilandiyl(2-méthyl-6-oxapentalen)(2-méthyl-4-(4'-n-propylphényl-indényl), le dichlorure de zirconium de diméthylsilandiyl(2,5-diméthyl-4-oxapentalen)(2-méthyl-4-(4'-n-propylphényl-indényl), le dichlorure de zirconium de diméthylsilandiyl(2,5-diméthyl-6-oxapentalen)(2-méthyl-4-(4'-n-propylphényl-indényl), le dichlorure de zirconium de diméthylsilandiyl(2-méthyl-4-azapentalen)(2-méthyl-4-(4'-isopropylphényl-indényl), le dichlorure de zirconium de diméthylsilandiyl(2-méthyl-5-azapentalen)(2-méthyl-4-(4'-isopropylphényl-indényl), le dichlorure de zirconium de diméthylsilandiyl(2-méthyl-6-azapentalen)(2-méthyl-4-(4'-isopropylphényl-indényl) le dichlorure de zirconium de diméthylsilandiyl(2-méthyl-N-phényl-4-azapentalen)(2-méthyl-4-(4'-isopropylphényl-indényl), le dichlorure de zirconium de diméthylsilandiyl(2-méthyl-N-phényl-5-azapentalen)(2-méthyl-4-(4'-isopropylphényl-indényl), le dichlorure de zirconium de diméthylsilandiyl(2-méthyl-N-phényl-6-azapentalen)(2-méthyl-4-(4'-

isopropylphényl-indényl), le dichlorure de zirconium de diméthylsilandiyl(2,5-diméthyl-4-azapentalen)(2-méthyl-4-(4'-isopropylphényl-indényl), le dichlorure de zirconium de diméthylsilandiyl(2,5-diméthyl-6-azapentalen)(2-méthyl-4-(4'-isopropylphényl-indényl), le dichlorure de zirconium de diméthylsilandiyl(2,5-diméthyl-N-phényl-4-azapentalen)(2-méthyl-4-(4'isopropylphényl-indényl), le dichlorure de zirconium de diméthylsilandiyl(2,5-diméthyl-N-phényl-6-azapentalen)(2-méthyl-4-(4'isopropylphényl-indényl), le dichlorure de zirconium de diméthylsilandiyl (2-méthyl-4-thiapentalen)(2-méthyl-4-(4'-isopropylphényl-indényl), le dichlorure de zirconium de diméthylsilandiyl (2-méthyl-5-thiapentalen)(2-méthyl-4-(4'-isopropylphényl-indényl), le dichlorure de zirconium de diméthylsilandiyl (2-méthyl-6-thiapentalen)(2-méthyl-4-(4'-isopropylphényl-indényl), le dichlorure de zirconium de diméthylsilandiyl (2,5-diméthyl-4-thiapentalen)(2-méthyl-4-(4'-isopropylphényl-indényl), le dichlorure de zirconium de diméthylsilandiyl(2,5-diméthyl-6-thiapentalen)(2-méthyl-4-(4'-isopropylphényl-indényl), le dichlorure de zirconium de diméthylsilandiyl(2-méthyl-4-oxapentalen)(2-méthyl-4-(4'-isopropylphényl-indényl), le dichlorure de zirconium de diméthylsilandiyl(2-méthyl-5-oxapentalen)(2-méthyl-4-(4'-isopropylphényl-indényl), le dichlorure de zirconium de diméthylsilandiyl(2-méthyl-6-oxapentalen)(2-méthyl-4-(4'-isopropylphényl-indényl), le dichlorure de zirconium de diméthylsilandiyl(2,5-diméthyl-4-oxapentalen)(2-méthyl-4-(4'-isopropylphényl-indényl), le dichlorure de zirconium de diméthylsilandiyl(2,5-diméthyl-6-oxapentalen)(2-méthyl-4-(4'-isopropylphényl-indényl), le dichlorure de zirconium de diméthylsilandiyl(2-méthyl-4-azapentalen)(2-méthyl-4-(4'-n-butylphényl-indényl), le dichlorure de zirconium de diméthylsilandiyl(2-méthyl-5-azapentalen)(2-méthyl-4-(4'-n-butylphényl-indényl), le dichlorure de zirconium de diméthylsilandiyl(2-méthyl-6-azapentalen)(2-méthyl-4-(4'-n-butylphényl-indényl) le dichlorure de zirconium de diméthylsilandiyl(2-méthyl-N-phényl-4-azapentalen)(2-méthyl-4-(4'-n-butylphényl-indényl), le dichlorure de zirconium de diméthylsilandiyl(2-méthyl-N-phényl-5-azapentalen)(2-méthyl-4-(4'-n-butylphényl-indényl), le dichlorure de zirconium de diméthylsilandiyl(2-méthyl-N-phényl-6-azapentalen)(2-méthyl-4-(4'-n-butylphényl-indényl), le dichlorure de zirconium de diméthylsilandiyl(2,5-diméthyl-4-azapentalen)(2-méthyl-4-(4'-n-butylphényl-indényl), le dichlorure de zirconium de diméthylsilandiyl(2,5-diméthyl-6-azapentalen)(2-méthyl-4-(4'-n-butylphényl-indényl), le dichlorure de zirconium de diméthylsilandiyl(2,5-diméthyl-N-phényl-4-azapentalen)(2-méthyl-4-(4'-n-butylphényl-indényl), le dichlorure de zirconium de diméthylsilandiyl(2,5-diméthyl-N-phényl-6-azapentalen)(2-méthyl-4-(4'-n-butylphényl-indényl), le dichlorure de zirconium de diméthylsilandiyl(2-méthyl-4-thiapentalen)(2-méthyl-4-(4'-n-butylphényl-indényl), le dichlorure de zirconium de diméthylsilandiyl(2-méthyl-5-thiapentalen)(2-méthyl-4-(4'-n-butylphényl-indényl), le dichlorure de zirconium de diméthylsilandiyl(2-méthyl-6-thiapentalen)(2-méthyl-4-(4'-n-butylphényl-indényl), le dichlorure de zirconium de diméthylsilandiyl(2,5-diméthyl-4-thiapentalen)(2-méthyl-4-(4'-n-butylphényl-indényl), le dichlorure de zirconium de diméthylsilandiyl(2,5-diméthyl-6-thiapentalen)(2-méthyl-4-(4'-n-butylphényl-indényl), le dichlorure de zirconium de diméthylsilandiyl(2-méthyl-4-oxapentalen)(2-méthyl-4-(4'-n-butylphényl-indényl), le dichlorure de zirconium de diméthylsilandiyl(2-méthyl-5-oxapentalen)(2-méthyl-4-(4'-n-butylphényl-indényl), le dichlorure de zirconium de diméthylsilandiyl(2-méthyl-6-oxapentalen)(2-méthyl-4-(4'-n-butylphényl-indényl), le dichlorure de zirconium de diméthylsilandiyl(2,5-diméthyl-4-oxapentalen)(2-méthyl-4-(4'-n-butylphényl-indényl), le dichlorure de zirconium de diméthylsilandiyl(2,5-diméthyl-6-oxapentalen)(2-méthyl-4-(4'-n-butylphényl-indényl), le dichlorure de zirconium de diméthylsilandiyl(2-méthyl-4-azapentalen) (2-méthyl-4-(4'-s-butylphényl-indényl), le dichlorure de zirconium de diméthylsilandiyl(2-méthyl-5-azapentalen)(2-méthyl-4-(4'-s-butylphényl-indényl), le dichlorure de zirconium de diméthylsilandiyl(2-méthyl-6-azapentalen)(2-méthyl-4-(4'-s-butylphényl-indényl) le dichlorure de zirconium de diméthylsilandiyl(2-méthyl-N-phényl-4-azapentalen)(2-méthyl-4-(4'-s-butylphényl-indényl), le dichlorure de zirconium de diméthylsilandiyl(2-méthyl-N-phényl-5-azapentalen)(2-méthyl-4-(4'-s-butylphényl-indényl), le dichlorure de zirconium de diméthylsilandiyl(2-méthyl-N-phényl-6-azapentalen)(2-méthyl-4-(4'-s-butylphényl-indényl), le dichlorure de zirconium de diméthylsilandiyl(2,5-diméthyl-4-azapentalen)(2-méthyl-4-(4'-s-butylphényl-indényl), le dichlorure de zirconium de diméthylsilandiyl(2,5-diméthyl-6-azapentalen)(2-méthyl-4-(4'-s-butylphényl-indényl), le dichlorure de zirconium de diméthylsilandiyl(2,5-diméthyl-N-phényl-4-azapentalen)(2-méthyl-4-(4's-butylphényl-indényl), le dichlorure de zirconium de diméthylsilandiyl (2,5-diméthyl-N-phényl-6-azapentalen)(2-méthyl-4-(4's-butylphényl-indényl), le dichlorure de zirconium de diméthylsilandiyl(2-méthyl-4-thiapentalen)(2-méthyl-4-(4'-s-butylphényl-indényl), le dichlorure de zirconium de diméthylsilandiyl(2-méthyl-5-thiapentalen)(2-méthyl-4-(4'-s-butylphényl-indényl), le dichlorure de zirconium de diméthylsilandiyl(2-méthyl-6-thiapentalen)(2-méthyl-4-(4'-s-butylphényl-indényl), le dichlorure de zirconium de diméthylsilandiyl(2,5-diméthyl-4-thiapentalen)(2-méthyl-4-(4'-s-butylphényl-indényl), le dichlorure de zirconium de diméthylsilandiyl(2,5-diméthyl-6-thiapentalen)(2-méthyl-4-(4'-s-butylphényl-indényl), le dichlorure de zirconium de diméthylsilandiyl(2-méthyl-4-oxapentalen)(2-méthyl-4-(4'-s-butylphényl-indényl), le dichlorure de zirconium de diméthylsilandiyl(2-méthyl-5-oxapentalen)(2-méthyl-4-(4'-s-butylphényl-indényl), le dichlorure de zirconium de diméthylsilandiyl(2-méthyl-6-oxapentalen)(2-méthyl-4-(4'-s-butylphényl-indényl), le dichlorure de zirconium de diméthylsilandiyl(2,5-diméthyl-4-oxapentalen)(2-méthyl-4-(4'-s-butylphényl-indényl), le dichlorure de zirconium de diméthylsilandiyl (2,5-diméthyl-6-oxapentalen)(2-méthyl-4-(4'-s-butylphényl-indényl), le dichlorure de zirconium de diméthylsilandiyl(2-méthyl-4-azapentalen)(2-méthyl-4-(4'-tert-butylphényl-indényl), le dichlorure de zirconium de diméthylsilandiyl(2-méthyl-5-azapentalen)(2-méthyl-4-(4'-tert-butylphényl-indényl), le dichlorure de zirconium

de diméthylsilandiyl(2-méthyl-6-azapentalen)(2-méthyl-4-(4'-tert-butylphényl-indényl) le dichlorure de zirconium de diméthylsilandiyl(2-méthyl-N-phényl-4-azapentalen)(2-méthyl-4-(4'tert-butylphényl-indényl), le dichlorure de zirconium de diméthylsilandiyl(2-méthyl-N-phényl-5-azapentalen)(2-méthyl-4-(4'tert-butylphényl-indényl), le dichlorure de zirconium de diméthylsilandiyl(2-méthyl-N-phényl-6-azapentalen)(2-méthyl-4-(4'-tert-butylphényl-indényl), le dichlorure de zirconium de diméthylsilandiyl(2,5-diméthyl-4-azapentalen)(2-méthyl-4-(4'-tert-butylphényl-indényl), le dichlorure de zirconium de diméthylsilandiyl(2,5-diméthyl-6-azapentalen)(2-méthyl-4-(4'-tert-butylphényl-indényl), le dichlorure de zirconium de diméthylsilandiyl(2,5-diméthyl-N-phényl-4-azapentalen)(2-méthyl-4-(4'-tert-butylphényl-indényl), le dichlorure de zirconium de diméthylsilandiyl(2,5-diméthyl-N-phényl-6-azapentalen)(2-méthyl-4-(4'-tert-butylphényl-indényl), le dichlorure de zirconium de diméthylsilandiyl(2-méthyl-4-thiapentalen)(2-méthyl-4-(4'-tert-butylphényl-indényl), le dichlorure de zirconium de diméthylsilandiyl(2-méthyl-5-thiapentalen)(2-méthyl-4-(4'-tert-butylphényl-indényl), le dichlorure de zirconium de diméthylsilandiyl(2-méthyl-6-thiapentalen)(2-méthyl-4-(4'-tert-butylphényl-indényl), le dichlorure de zirconium de diméthylsilandiyl(2,5-diméthyl-4-thiapentalen)(2-méthyl-4-(4'-tert-butylphényl-indényl), le dichlorure de zirconium de diméthylsilandiyl(2,5-diméthyl-6-thiapentalen)(2-méthyl-4-(4'-tert-butylphényl-indényl), le dichlorure de zirconium de diméthylsilandiyl(2-méthyl-4-oxapentalen)(2-méthyl-4-(4'-tert-butylphényl-indényl), le dichlorure de zirconium de diméthylsilandiyl(2-méthyl-5-oxapentalen)(2-méthyl-4-(4'-tert-butylphényl-indényl), le dichlorure de zirconium de diméthylsilandiyl(2-méthyl-6-oxapentalen)(2-méthyl-4-(4'-tert-butylphényl-indényl), le dichlorure de zirconium de diméthylsilandiyl(2,5-diméthyl-4-oxapentalen)(2-méthyl-4-(4'-tert-butylphényl-indényl), le dichlorure de zirconium de diméthylsilandiyl (2,5-diméthyl-6-oxapentalen)(2-méthyl-4-(4'-tert-butylphényl-indényl), le dichlorure de zirconium de diméthylsilandiyl(2-méthyl-4-azapentalen)(2-méthyl-4-(4'-n-hexylphényl-indényl), le dichlorure de zirconium de diméthylsilandiyl(2-méthyl-5-azapentalen)(2-méthyl-4-(4'-n-hexylphényl-indényl), le dichlorure de zirconium de diméthylsilandiyl(2-méthyl-6-azapentalen)(2-méthyl-4-(4'-n-hexylphényl-indényl) le dichlorure de zirconium de diméthylsilandiyl (2-méthyl-N-phényl-4-azapentalen)(2-méthyl-4-(4'-n-hexylphényl-indényl), le dichlorure de zirconium de diméthylsilandiyl(2-méthyl-N-phényl-5-azapentalen)(2-méthyl-4-(4'-n-hexylphényl-indényl), le dichlorure de zirconium de diméthylsilandiyl(2-méthyl-N-phényl-6-azapentalen)(2-méthyl-4-(4'-n-hexylphényl-indényl), le dichlorure de zirconium de diméthylsilandiyl(2,5-diméthyl-4-azapentalen)(2-méthyl-4-(4'-n-hexylphényl-indényl), le dichlorure de zirconium de diméthylsilandiyl(2,5-diméthyl-6-azapentalen)(2-méthyl-4-(4'-n-hexylphényl-indényl), le dichlorure de zirconium de diméthylsilandiyl(2,5-diméthyl-N-phényl-4-azapentalen)(2-méthyl-4-(4'-n-hexylphényl-indényl), le dichlorure de zirconium de diméthylsilandiyl(2,5-diméthyl-N-phényl-6-azapentalen)(2-méthyl-4-(4'-n-hexylphényl-indényl), le dichlorure de zirconium de diméthylsilandiyl(2-méthyl-4-thiapentalen)(2-méthyl-4-(4'-n-hexylphényl-indényl), le dichlorure de zirconium de diméthylsilandiyl(2-méthyl-5-thiapentalen)(2-méthyl-4-(4'-n-hexylphényl-indényl), le dichlorure de zirconium de diméthylsilandiyl(2-méthyl-6-thiapentalen)(2-méthyl-4-(4'-n-hexylphényl-indényl), le dichlorure de zirconium de diméthylsilandiyl(2,5-diméthyl-4-thiapentalen)(2-méthyl-4-(4'-n-hexylphényl-indényl), le dichlorure de zirconium de diméthylsilandiyl(2,5-diméthyl-6-thiapentalen)(2-méthyl-4-(4'-n-hexylphényl-indényl), le dichlorure de zirconium de diméthylsilandiyl(2-méthyl-4-oxapentalen)(2-méthyl-4-(4'-n-hexylphényl-indényl), le dichlorure de zirconium de diméthylsilandiyl(2-méthyl-5-oxapentalen)(2-méthyl-4-(4'-n-hexylphényl-indényl), le dichlorure de zirconium de diméthylsilandiyl(2-méthyl-6-oxapentalen)(2-méthyl-4-(4'-n-hexylphényl-indényl), le dichlorure de zirconium de diméthylsilandiyl(2,5-diméthyl-4-oxapentalen)(2-méthyl-4-(4'-n-hexylphényl-indényl), le dichlorure de zirconium de diméthylsilandiyl(2,5-diméthyl-6-oxapentalen)(2-méthyl-4-(4'-n-hexylphényl-indényl), le dichlorure de zirconium de diméthylsilandiyl(2-méthyl-4-azapentalen)(2-méthyl-4-(4'-cyclohexylphényl-indényl), le dichlorure de zirconium de diméthylsilandiyl(2-méthyl-5-azapentalen)(2-méthyl-4-(4'-cyclohexylphényl-indényl), le dichlorure de zirconium de diméthylsilandiyl(2-méthyl-6-azapentalen)(2-méthyl-4-(4'-cyclohexylphényl-indényl) le dichlorure de zirconium de diméthylsilandiyl(2-méthyl-N-phényl-4-azapentalen)(2-méthyl-4-(4'-cyclohexylphényl-indényl), le dichlorure de zirconium de diméthylsilandiyl(2-méthyl-N-phényl-5-azapentalen)(2-méthyl-4-(4'-cyclohexylphényl-indényl), le dichlorure de zirconium de diméthylsilandiyl (2-méthyl-N-phényl-6-azapentalen)(2-méthyl-4-(4'-cyclohexylphényl-indényl), le dichlorure de zirconium de diméthylsilandiyl(2,5-diméthyl-4-azapentalen)(2-méthyl-4-(4'-cyclohexylphényl-indényl), le dichlorure de zirconium de diméthylsilandiyl(2,5-diméthyl-6-azapentalen)(2-méthyl-4-(4'-cyclohexylphényl-indényl), le dichlorure de zirconium de diméthylsilandiyl(2,5-diméthyl-N-phényl-4-azapentalen)(2-méthyl-4-(4'-cyclohexylphényl-indényl), le dichlorure de zirconium de diméthylsilandiyl(2,5-diméthyl-N-phényl-6-azapentalen)(2-méthyl-4-(4'-cyclohexylphényl-indényl), le dichlorure de zirconium de diméthylsilandiyl(2-méthyl-4-thiapentalen)(2-méthyl-4-(4'-cyclohexylphényl-indényl), le dichlorure de zirconium de diméthylsilandiyl(2-méthyl-5-thiapentalen) (2-méthyl-4-(4'-cyclohexylphényl-indényl), le dichlorure de zirconium de diméthylsilandiyl(2-méthyl-6-thiapentalen)(2-méthyl-4-(4'-cyclohexylphényl-indényl), le dichlorure de zirconium de diméthylsilandiyl(2,5-diméthyl-4-thiapentalen)(2-méthyl-4-(4'-cyclohexylphényl-indényl), le dichlorure de zirconium de diméthylsilandiyl(2,5-diméthyl-6-thiapentalen) (2-méthyl-4-(4'-cyclohexylphényl-indényl), le dichlorure de zirconium de diméthylsilandiyl(2-méthyl-4-oxapentalen)(2-méthyl-4-(4'-cyclohexylphényl-indényl), le dichlorure de zirconium de diméthylsilandiyl(2-méthyl-5-oxapentalen)(2-méthyl-4-(4'-cyclohexylphényl-indényl), le dichlorure de zirconium de diméthylsilandiyl(2-méthyl-6-oxapentalen)(2-méthyl-4-(4'-cyclohexylphényl-indényl), le dichlorure de zirconium de diméthylsilandiyl(2,5-diméthyl-4-oxapentalen)(2-méthyl-4-(4'-cyclohexylphényl-indényl), le dichlorure de zirconium de diméthylsilandiyl(2,5-diméthyl-6-oxapentalen)(2-méthyl-4-(4'-cyclohexylphényl-indényl), le dichlorure de zirconium de diméthylsilandiyl (2-méthyl-4-azapentalen)(2-méthyl-4-(4'-triméthylsilylphényl-indényl), le dichlorure de zirconium de diméthylsilandiyl(2-méthyl-5-azapentalen)(2-méthyl-4-(4'-triméthylsilylphényl-indényl), le dichlorure de zirconium de diméthylsilandiyl(2-méthyl-6-azapentalen)(2-méthyl-4-(4'-triméthylsilylphényl-indényl) le dichlorure de zirconium de diméthylsilandiyl(2-méthyl-N-phényl-4-azapentalen)(2-méthyl-4-(4'-triméthylsilylphényl-indényl), le dichlorure de zirconium de diméthylsilandiyl(2-méthyl-N-phényl-5-azapentalen)(2-méthyl-4-(4'-triméthylsilylphényl-indényl), le dichlorure de zirconium de diméthylsilandiyl(2-méthyl-N-phényl-6-azapentalen)(2-méthyl-4-(4'-triméthylsilylphényl-indényl), le dichlorure de zirconium de diméthylsilandiyl(2,5-diméthyl-4-azapentalen)(2-méthyl-4-(4'-triméthylsilylphényl-indényl), le dichlorure de zirconium de diméthylsilandiyl(2,5-diméthyl-6-azapentalen)(2-méthyl-4-(4'-triméthylsilylphényl-indényl), le dichlorure de zirconium de diméthylsilandiyl(2,5-diméthyl-N-phényl-4-azapentalen) (2-méthyl-4-(4'-triméthylsilylphényl-indényl), le dichlorure de zirconium de diméthylsilandiyl(2,5-diméthyl-N-phényl-6-azapentalen)(2-méthyl-4-(4'-triméthylsilylphényl-indényl), le dichlorure de zirconium de diméthylsilandiyl (2-méthyl-4-thiapentalen)(2-méthyl-4-(4'-triméthylsilylphényl-indényl), le dichlorure de zirconium de diméthylsilandiyl(2-méthyl-5-thiapentalen)(2-méthyl-4-(4'-triméthylsilylphényl-indényl), le dichlorure de zirconium de diméthylsilandiyl(2-méthyl-6-thiapentalen)(2-méthyl-4-(4'-triméthylsilylphényl-indényl), le dichlorure de zirconium de diméthylsilandiyl(2,5-diméthyl-4-thiapentalen)(2-méthyl-4-(4'-triméthylsilylphényl-indényl), le dichlorure de zirconium de diméthylsilandiyl(2,5-diméthyl-6-thiapentalen)(2-méthyl-4-(4'-triméthylsilylphényl-indényl), le dichlorure de zirconium de diméthylsilandiyl(2-méthyl-4-oxapentalen)(2-méthyl-4-(4'-triméthylsilylphényl-indényl), le dichlorure de zirconium de diméthylsilandiyl(2-méthyl-5-oxapentalen)(2-méthyl-4-(4'-triméthylsilylphényl-indényl), le dichlorure de zirconium de diméthylsilandiyl(2-méthyl-6-oxapentalen)(2-méthyl-4-(4'-triméthylsilylphényl-indényl), le dichlorure de zirconium de diméthylsilandiyl(2,5-diméthyl-4-oxapentalen)(2-méthyl-4-(4'-triméthylsilylphényl-indényl), le dichlorure de zirconium de diméthylsilandiyl(2,5-diméthyl-6-oxapentalen)(2-méthyl-4-(4'-triméthylsilylphényl-indényl), le dichlorure de zirconium de diméthylsilandiyl(2-méthyl-4-azapentalen)(2-méthyl-4-(4'-adamantylphényl-indényl), le dichlorure de zirconium de diméthylsilandiyl(2-méthyl-5-azapentalen)(2-méthyl-4-(4'-adamantylphényl-indényl), le dichlorure de zirconium de diméthylsilandiyl(2-méthyl-6-azapentalen)(2-méthyl-4-(4'-adamantylphényl-indényl) le dichlorure de zirconium de diméthylsilandiyl(2-méthyl-N-phényl-4-azapentalen)(2-méthyl-4-(4'-adamantylphényl-indényl), le dichlorure de zirconium de diméthylsilandiyl(2-méthyl-N-phényl-5-azapentalen)(2-méthyl-4-(4'-adamantylphényl-indényl), le dichlorure de zirconium de diméthylsilandiyl(2-méthyl-N-phényl-6-azapentalen)(2-méthyl-4-(4'-adamantylphényl-indényl), le dichlorure de zirconium de diméthylsilandiyl(2,5-diméthyl-4-azapentalen)(2-méthyl-4-(4'-adamantylphényl-indényl), le dichlorure de zirconium de diméthylsilandiyl(2,5-diméthyl-6-azapentalen)(2-méthyl-4-(4'-adamantylphényl-indényl), le dichlorure de zirconium de diméthylsilandiyl (2,5-diméthyl-N-phényl-4-azapentalen)(2-méthyl-4-(4'-adamantylphényl-indényl), le dichlorure de zirconium de diméthylsilandiyl(2,5-diméthyl-N-phényl-6-azapentalen)(2-méthyl-4-(4'-adamantylphényl-indényl), le dichlorure de zirconium de diméthylsilandiyl(2-méthyl-4-thiapentalen)(2-méthyl-4-(4'-adamantylphényl-indényl), le dichlorure de zirconium de diméthylsilandiyl(2-méthyl-5-thiapentalen)(2-méthyl-4-(4'-adamantylphényl-indényl), le dichlorure de zirconium de diméthylsilandiyl(2-méthyl-6-thiapentalen)(2-méthyl-4-(4'-adamantylphényl-indényl), le dichlorure de zirconium de diméthylsilandiyl(2,5-diméthyl-4-thiapentalen)(2-méthyl-4-(4'-adamantylphényl-indényl), le dichlorure de zirconium de diméthylsilandiyl(2,5-diméthyl-6-thiapentalen)(2-méthyl-4-(4'-adamantylphényl-indényl), le dichlorure de zirconium de diméthylsilandiyl(2-méthyl-4-oxapentalen)(2-méthyl-4-(4'-adamantylphényl-indényl), le dichlorure de zirconium de diméthylsilandiyl(2-méthyl-5-oxapentalen)(2-méthyl-4-(4'-adamantylphényl-indényl), le dichlorure de zirconium de diméthylsilandiyl(2-méthyl-6-oxapentalen)(2-méthyl-4-(4'-adamantylphényl-indényl), le dichlorure de zirconium de diméthylsilandiyl(2,5-diméthyl-4-oxapentalen)(2-méthyl-4-(4'-adamantylphényl-indényl), le dichlorure de zirconium de diméthylsilandiyl(2,5-diméthyl-6-oxapentalen)(2-méthyl-4-(4'-adamantylphényl-indényl), le dichlorure de zirconium de diméthylsilandiyl(2-méthyl-4-azapentalen)(2-méthyl-4-(4'-tris(trifluorméthyl) méthylphényl-indényl), le dichlorure de zirconium de diméthylsilandiyl(2-méthyl-5-azapentalen)(2-méthyl-4-(4'-tris (trifluorméthyl)méthylphényl-indényl), le dichlorure de zirconium de diméthylsilandiyl(2-méthyl-6-azapentalen) (2-méthyl-4-(4'-tris(trifluorméthyl)méthylphényl-indényl) le dichlorure de zirconium de diméthylsilandiyl(2-méthyl-N-phényl-4-azapentalen)(2-méthyl-4-(4'-tris(trifluorméthyl)méthylphényl-indényl), le dichlorure de zirconium de diméthylsilandiyl(2-méthyl-N-phényl-5-azapentalen)(2-méthyl-4-(4'-tris(trifluorméthyl)méthylphényl-indényl), le dichlorure de zirconium de diméthylsilandiyl(2-méthyl-N-phényl-6-azapentalen)(2-méthyl-4-(4'-tris (trifluorméthyl)méthylphényl-indényl), le dichlorure de zirconium de diméthylsilandiyl(2,5-diméthyl-4-azapentalen)(2-méthyl-4-(4'-tris(trifluorméthyl)méthylphényl-indényl), le dichlorure de zirconium de diméthylsilandiyl(2,5-diméthyl-6-azapentalen)(2-méthyl-4-(4'-tris(trifluorméthyl)méthylphényl-indényl), le dichlorure de zirconium de diméthylsilandiyl (2,5-diméthyl-N-phényl-4-azapentalen)(2-méthyl-4-(4'-tris(trifluorméthyl)méthylphényl-indényl), le dichlorure de zirconium de diméthylsilandiyl(2,5-diméthyl-N-phényl-6-azapentalen)(2-méthyl-4-(4'-tris(trifluorméthyl)méthylphényl-indényl), le dichlorure de zirconium de diméthylsilandiyl(2-méthyl-4-thiapentalen)(2-méthyl-4-(4'-tris(trifluorméthyl)méthylphényl-indényl), le dichlorure de zirconium de diméthylsilandiyl(2-méthyl-5-thiapentalen)(2-méthyl-4-(4'-tris(trifluorméthyl)méthylphényl-indényl), le dichlorure de zirconium de diméthylsilandiyl(2-méthyl-6-thiapentalen)(2-méthyl-4-(4'-tris(trifluorméthyl)méthylphényl-indényl), le dichlorure de zirconium de diméthylsilandiyl(2,5-diméthyl-4-thiapentalen)(2-méthyl-4-(4'-tris(trifluorméthyl)méthylphényl-indényl), le dichlorure de zirconium de diméthylsilandiyl(2,5-diméthyl-6-thiapentalen)(2-méthyl-4-(4'-tris(trifluorméthyl)méthylphényl-indényl), le dichlorure de zirconium de diméthylsilandiyl(2-méthyl-4-oxapentalen) (2-méthyl-4-(4'-tris(trifluorméthyl)méthylphényl-indényl), le dichlorure de zirconium de diméthylsilandiyl(2-méthyl-5-oxapentalen)(2-méthyl-4-(4'-tris (trifluorméthyl)méthylphényl-indényl), le dichlorure de zirconium de diméthylsilandiyl(2-méthyl-6-oxapentalen)(2-méthyl-4-(4'-tris(trifluorméthyl)méthylphényl-indényl), le dichlorure de zirconium de diméthylsilandiyl(2,5-diméthyl-4-oxapentalen)(2-méthyl-4-(4'-tris(trifluorméthyl)méthylphényl-indényl), le dichlorure de zirconium de diméthylsilandiyl(2,5-diméthyl-6-oxapentalen)(2-méthyl-4-(4'-tris(trifluorméthyl)méthylphényl-indényl), le dichlorure de zirconium de diméthylsilandiyl(2-méthyl-5,6-di-hydro-4-azapentalen)(2-éthyl-4-(4'-tert-butylphényl-indényl), le dichlorure de zirconium de diméthylsilandiyl(2-méthyl-4-azapentalen)(2-éthyl-4-(4'-tert-butylphényl-tétrahydroindényl), le dichlorure de zirconium de diméthylsilandiyl(2-méthyl-5-azapentalen)(2-n-butyl-4-(4'-tert-butylphényl-tétrahydroindényl), le dichlorure de zirconium de éthyliden(2-méthyl-6-azapentalen)(2-méthyl-4-(4'-tert-butylphényl-indényl), le dichlorure de zirconium de diméthylsilandiyl(2-méthyl-N-triméthylsilyl-4-azapentalen)(2-méthyl-4-(4'-tert-butylphényl-indényl), le dichlorure de zirconium de diméthylsilandiyl(2-méthyl-N-tolyl-5-azapentalen)(2-n-propyl-4-(4'-tert-butylphényl-indényl), le dichlorure de zirconium de diméthylgermyldiyl(2-méthyl-N-phényl-6-azapentalen)(2-méthyl-4-(4'-tert-butylphényl-indényl), le dichlorure de zirconium de méthyléthyliden(2,5-diméthyl-4-azapentalen)(2-méthyl-4-(4'-tert-butylphényl-indényl), le dichlorure de zirconium de diméthylsilandiyl(2,5-di-iso-propyl-6-azapentalen) (2-méthyl-4-(4'-tert-butylphényl-indényl), le dichlorure de zirconium de diméthylsilandiyl(2,5-diméthyl-N-phényl-4-azapentalen)(2,6-diméthyl-4-(4'-tert-butylphényl-indényl), le dichlorure de zirconium de diméthylsilandiyl(2,5-diméthyl-N-phényl-4-azapentalen)(2,6-diméthyl-4-(4'-tert-butylphényl-indényl), le dichlorure de zirconium de diméthylsilandiyl(2,5-diméthyl-N-phényl-6-azapentalen)(2-méthyl-4-(6'-tert-butylnapthyl-indényl), le dichlorure de zirconium de diméthylsilandiyl(2,5-diméthyl-N-phényl-6-azapentalen)(2-méthyl-4-(6'-tert-butylanthracényl-indényl), ), le dichlorure de zirconium de diméthylsilandiyl(2-métyl-4-phosphapentalen)(2-méthyl-4-(4'-tert-butylphényl-indényl), ), le dichlorure de zirconium de diméthylsilandiyl(2-méthyl-5-thiapentalen)(2-méthyl-4-(4'-tert-butylphényl-indényl), le dichlorure de zirconium de méthylphénylsilandiyl(2-méthyl-6-thiapentalen)(2-méthyl-4-(4'-tert-butylphényl-indényl), le dichlorure de zirconium de méthyliden(2,5-diméthyl-4-thiapentalen)(2-méthyl-4-(4'-tert-butylphényl-indényl), le dichlorure de zirconium de diméthylméthyliden(2,5-diméthyl-6-thiapentalen) (2-méthyl-4-(4'-tert-butylphényl-indényl), le dichlorure de zirconium de diphénylsilandiyl(2,5-diméthyl-4-oxapentalen)(2-méthyl-4-(4'-tert-butylphényl-indényl), le dichlorure de zirconium de diphénylsilandiyl(2,5-diméthyl-6-oxapentalen)(2-méthyl-4-(4'-tert-butylphényl-indényl), le dichlorure de zirconium de diméthylsilandiyl(2-méthyl-4-azapentalen)(2-méthylindényl), le dichlorure de zirconium de diméthylsilandiyl(2-méthyl-5-azapentalen)(2-méthylindényl), le dichlorure de zirconium de diméthylsilandiyl(2-méthyl-6-azapentalen)(2-méthylindényl), le dichlorure de zirconium de diméthylsilandiyl(2-méthyl-N-phényl-4-azapentalen)(2-méthylindényl), le dichlorure de zirconium de diméthylsilandiyl(2-méthyl-N-phényl-5-azapentalen)(2-méthylindényl), le dichlorure de zirconium de diméthylsilandiyl(2-méthyl-N-phényl-6-azapentalen)(2-méthylindényl), le dichlorure de zirconium de diméthylsilandiyl(2,5-diméthyl-4-azapentalen)(2-méthylindényl), le dichlorure de zirconium de diméthylsilandiyl(2,5-diméthyl-5-azapentalen)(2-méthylindényl), le dichlorure de zirconium de diméthylsilandiyl(2,5-diméthyl-6-azapentalen)(2-méthylindényl), le dichlorure de zirconium de diméthylsilandiyl(2,5-diméthyl-N-phényl-4-azapentalen)(2-méthylindényl), le dichlorure de zirconium de diméthylsilandiyl(2,5-diméthyl-N-phényl-6-azapentalen)(2-méthylindényl), le dichlorure de zirconium de diméthylsilandiyl(2-méthyl-4-thiapentalen)(2-méthylindényl), le dichlorure de zirconium de diméthylsilandiyl(2-méthyl-5-thiapentalen)(2-méthylindényl), le dichlorure de zirconium de diméthylsilandiyl(2-méthyl-6-thiapentalen)(2-méthylindényl), le dichlorure de zirconium de diméthylsilandiyl(2,5-diméthyl-4-thiapentalen) (2-méthylindényl), le dichlorure de zirconium de diméthylsilandiyl(2,5-diméthyl-6-thiapentalen)(2-méthylindényl), le dichlorure de zirconium de diméthylsilandiyl(2-méthyl-4-oxapentalen)(2-méthylindényl), le dichlorure de zirconium de diméthylsilandiyl(2-méthyl-5-oxapentalen)(2-méthylindényl), le dichlorure de zirconium de diméthylsilandiyl(2-méthyl-6-oxapentalen)(2-méthylindényl), le dichlorure de zirconium de diméthylsilandiyl(2,5-diméthyl-4-oxapentalen)(2-méthylindényl), le dichlorure de zirconium de diméthylsilandiyl(2,5-diméthyl-6-oxapentalen) (2-méthylindényl), le dichlorure de zirconium de diméthylsilandiyl(2-méthyl-4-azapentalen)(indényl), le dichlorure de zirconium de diméthylsilandiyl(2-méthyl-5-azapentalen)(indényl), le dichlorure de zirconium de diméthylsilandiyl(2-méthyl-6-azapentalen)(indényl), le dichlorure de zirconium de diméthylsilandiyl(2-méthyl-N-phényl-4-azapentalen)(indényl), le dichlorure de zirconium de diméthylsilandiyl(2-méthyl-N-phényl-5-azapentalen)(indényl), le dichlorure de zirconium de diméthylsilandiyl(2-méthyl-N-phényl-6-azapentalen)(indényl), le dichlorure de zirconium de diméthylsilandiyl(2,5-diméthyl-4-azapentalen)(indényl), le dichlorure de zirconium de diméthylsilandiyl (2,5-diméthyl-6-azapentalen)(indényl), le dichlorure de zirconium de diméthylsilandiyl(2,5-diméthyl-N-phényl-4-azapentalen)(indényl), le dichlorure de zirconium de diméthylsilandiyl(2,5-diméthyl-N-phényl-5-azapentalen)(indényl), le dichlorure de zirconium de diméthylsilandiyl(2-méthyl-4-thiapentalen)(indényl), le dichlorure de zirconium de diméthylsilandiyl(2-méthyl-5-thiapentalen)(indényl), le dichlorure de zirconium de diméthylsilandiyl(2-méthyl-6-thiapentalen)(indényl), le dichlorure de zirconium de diméthylsilandiyl(2,5-diméthyl-4-thiapentalen)(indényl), le dichlorure de zirconium de diméthylsilandiyl(2,5-diméthyl-6-thiapentalen)(indényl), le dichlorure de zirconium de diméthylsilandiyl(2-méthyl-4-oxapentalen)(indényl), le dichlorure de zirconium de diméthylsilandiyl(2-méthyl-5-oxapentalen)(indényl), le dichlorure de zirconium de diméthylsilandiyl(2-méthyl-6-oxapentalen)(indényl), le dichlorure de zirconium de diméthylsilandiyl (2,5-diméthyl-4-oxapentalen)(indényl), le dichlorure de zirconium de diméthylsilandiyl(2,5-diméthyl-6-oxapentalen)(indényl), le dichlorure de zirconium de diméthylsilandiyl(2-méthyl-4-azapentalen)(2-méthyl-4-phényl-indényl), le dichlorure de zirconium de diméthylsilandiyl(2-méthyl-5-azapentalen)(2-méthyl-4-phényl-indényl), le dichlorure de zirconium de diméthylsilandiyl(2-méthyl-6-azapentalen)(2-méthyl-4-phényl-indényl), le dichlorure de zirconium de diméthylsilandiyl(2-méthyl-N-phényl-4-azapentalen)(2-méthyl-4-phényl-indényl), le dichlorure de zirconium de diméthylsilandiyl(2-méthyl-N-phényl-5-azapentalen)(2-méthyl-4-phényl-indényl), le dichlorure de zirconium de diméthylsilandiyl(2-méthyl-N-phényl-6-azapentalen)(2-méthyl-4-phényl-indényl), le dichlorure de zirconium de diméthylsilandiyl(2,5-diméthyl-4-azapentalen)(2-méthyl-4-phényl-indényl), le dichlorure de zirconium de diméthylsilandiyl (2,5-diméthyl-6-azapentalen) (2-méthyl-4-phényl-indényl), le dichlorure de zirconium de diméthylsilandiyl(2,5-diméthyl-N-phényl-4-azapentalen)(2-méthyl-4-phényl-indényl), le dichlorure de zirconium de diméthylsilandiyl(2,5-diméthyl-N-phényl-5-azapentalen)(2-méthyl-4-phényl-indényl), le dichlorure de zirconium de diméthylsilandiyl(2-méthyl-4-thiapentalen)(2-méthyl-4-phényl-indényl), le dichlorure de zirconium de diméthylsilandiyl(2-méthyl-5-thiapentalen)(2-méthyl-4-phényl-indényl), le dichlorure de zirconium de diméthylsilandiyl(2-méthyl-6-thiapentalen)(2-méthyl-4-phényl-indényl), le dichlorure de zirconium de diméthylsilandiyl(2,5-diméthyl-4-thiapentalen)(2-méthyl-4-phényl-indényl), le dichlorure de zirconium de diméthylsilandiyl(2,5-diméthyl-6-thiapentalen)(2-méthyl-4-phényl-indényl), le dichlorure de zirconium de diméthylsilandiyl(2-méthyl-4-oxapentalen)(2-méthyl-4-phényl-indényl), le dichlorure de zirconium de diméthylsilandiyl(2-méthyl-5-oxapentalen)(2-méthyl-4-phényl-indényl), le dichlorure de zirconium de diméthylsilandiyl(2-méthyl-6-oxapentalen)(2-méthyl-4-phényl-indényl), le dichlorure de zirconium de diméthylsilandiyl(2,5-diméthyl-4-oxapentalen)(2-méthyl-4-phényl-indényl), le dichlorure de zirconium de diméthylsilandiyl(2,5-diméthyl-6-oxapentalen)(2-méthyl-4-phényl-indényl), le dichlorure de zirconium de diméthylsilandiyl(2-méthyl-4-azapentalen) (2-méthyl-4,5-benzo-indényl), le dichlorure de zirconium de diméthylsilandiyl(2-méthyl-5-azapentalen)(2-méthyl-4,5-benzo-indényl), le dichlorure de zirconium de diméthylsilandiyl(2-méthyl-6-azapentalen)(2-méthyl-4,5-benzo-indényl), le dichlorure de zirconium de diméthylsilandiyl(2-méthyl-N-phényl-4-azapentalen)(2-méthyl-4,5-benzo-indényl), le dichlorure de zirconium de diméthylsilandiyl(2-méthyl-N-phényl-5-azapentalen)(2-méthyl-4,5-benzo-indényl), le dichlorure de zirconium de diméthylsilandiyl(2-méthyl-N-phényl-6-azapentalen)(2-méthyl-4,5-benzo-indényl), le dichlorure de zirconium de diméthylsilandiyl(2,5-diméthyl-4-azapentalen)(2-méthyl-4,5-benzo-indényl), le dichlorure de zirconium de diméthylsilandiyl(2,5-diméthyl-6-azapentalen)(2-méthyl-4,5-benzo-indényl), le dichlorure de zirconium de diméthylsilandiyl(2,5-diméthyl-N-phényl-4-azapentalen)(2-méthyl-4,5-benzo-indényl), le dichlorure de zirconium de diméthylsilandiyl(2,5-diméthyl-N-phényl-5-azapentalen)(2-méthyl-4,5-benzo-indényl), le dichlorure de zirconium de diméthylsilandiyl(2-méthyl-4-thiapentalen)(2-méthyl-4,5-benzo-indényl), le dichlorure de zirconium de diméthylsilandiyl(2-méthyl-5-thiapentalen)(2-méthyl-4,5-benzo-indényl), le dichlorure de zirconium de diméthylsilandiyl(2-méthyl-6-thiapentalen)(2-méthyl-4,5-benzo-indényl), le dichlorure de zirconium de diméthylsilandiyl(2,5-diméthyl-4-thiapentalen)(2-méthyl-4,5-benzo-indényl), le dichlorure de zirconium de diméthylsilandiyl(2,5-diméthyl-6-thiapentalen)(2-méthyl-4,5-benzo-indényl), le dichlorure de zirconium de diméthylsilandiyl(2-méthyl-4-oxapentalen)(2-méthyl-4,5-benzo-indényl), le dichlorure de zirconium de diméthylsilandiyl (2-méthyl-5-oxapentalen)(2-méthyl-4,5-benzo-indényl), le dichlorure de zirconium de diméthylsilandiyl(2-méthyl-6-oxapentalen)(2-méthyl-4,5-benzo-indényl), le dichlorure de zirconium de diméthylsilandiyl(2,5-diméthyl-4-oxapentalen)(2-méthyl-4,5-benzo-indényl), le dichlorure de zirconium de diméthylsilandiyl(2,5-diméthyl-6-oxapentalen)(2-méthyl-4,5-benzo-indényl), le dichlorure de zirconium de diméthylsilandiyl(2-méthyl-4-azapentalen), le dichlorure de zirconium de diméthylsilandiyl(2-méthyl-5-azapentalen), le dichlorure de zirconium de diméthylsilandiyl (2-méthyl-6-azapentalen), le dichlorure de zirconium de diméthylsilandiyl(2-méthyl-N-phényl-4-azapentalen), le dichlorure de zirconium de diméthylsilandiyl(2-méthyl-N-phényl-5-azapentalen), le dichlorure de zirconium de diméthylsilandiyl(2-méthyl-N-phényl-6-azapentalen), le dichlorure de zirconium de diméthylsilandiyl(2,5-diméthyl-4-azapentalen), le dichlorure de zirconium de diméthylsilandiyl(2,5-diméthyl-6-azapentalen), le dichlorure de zirconium de diméthylsilandiyl(2,5-diméthyl-N-phényl-4-azapentalen), le dichlorure de zirconium de diméthylsilandiyl (2,5-diméthyl-N-phényl-5-azapentalen), le dichlorure de zirconium de diméthylsilandiyl(2-méthyl-4-thiapentalen), le dichlorure de zirconium de diméthylsilandiyl(2-méthyl-5-thiapentalen), le dichlorure de zirconium de diméthylsilandiyl(2-méthyl-6-thiapentalen), le dichlorure de zirconium de diméthylsilandiyl(2,5-diméthyl-4-thiapentalen), le dichlorure de zirconium de diméthylsilandiyl(2,5-diméthyl-6-thiapentalen), le dichlorure de zirconium de diméthylsilandiyl(2-méthyl-4-oxapentalen), le dichlorure de zirconium de diméthylsilandiyl(2-méthyl-5-oxapentalen), le dichlorure de zirconium de diméthylsilandiyl(2-méthyl-6-oxapentalen), le dichlorure de zirconium de diméthylsilandiyl

(2,5-diméthyl-4-oxapentalen), le dichlorure de zirconium de diméthylsilandiyl(2,5-diméthyl-6-oxapentalen), ou un mélange de ceux-ci.

**12.** Procédé permettant la fabrication d'une polyoléfine par le biais de la polymérisation d'une ou de plusieurs oléfines en présence d'un système de catalyseur selon l'une quelconque des revendications 1 à 11.

**13.** Utilisation d'un système de catalyseur selon l'une quelconque des revendications 1 à 11 en vue de fabriquer une polyoléfine.